(19)

Europäisches Patentamt
European Patent Office
Office européen des brevets

(11) **EP 4 230 678 A1**

(12) **EUROPEAN PATENT APPLICATION**

(43) Date of publication:
**23.08.2023 Bulletin 2023/34**

(21) Application number: **23155733.1**

(22) Date of filing: **09.02.2023**

(51) International Patent Classification (IPC):
*C08G 63/20* (2006.01)  *C08G 18/42* (2006.01)
*C08G 18/83* (2006.01)  *C08G 63/668* (2006.01)
*C08G 63/685* (2006.01)  *C08G 63/91* (2006.01)
*C08J 3/07* (2006.01)  *G03G 9/087* (2006.01)
*G03G 9/093* (2006.01)  *C08G 63/16* (2006.01)
*C08K 5/101* (2006.01)  *C08J 3/22* (2006.01)
*C08L 67/00* (2006.01)  *C08J 3/12* (2006.01)
*C08J 3/16* (2006.01)

(52) Cooperative Patent Classification (CPC):
(C-Sets available)
**C08G 63/20; C08G 18/10; C08G 18/3256;
C08G 18/4216; C08G 18/755; C08G 63/16;
C08G 63/668; C08G 63/6854; C08G 63/914;
C08J 3/07; C08J 3/126; C08J 3/16; C08J 3/226;
C08K 5/101; C08L 67/00;** (Cont.)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **18.02.2022 JP 2022023553
12.10.2022 JP 2022164274**

(71) Applicant: **Ricoh Company, Ltd.
Tokyo 143-8555 (JP)**

(72) Inventors:
• WATANABE, Junichi
  Tokyo, 143-8555 (JP)
• FUWA, Kazuoki
  Tokyo, 143-8555 (JP)
• MIZOGUCHI, Yuka
  Tokyo, 143-8555 (JP)
• SUGIYAMA, Toshihiko
  Tokyo, 143-8555 (JP)
• MATSUSHITA, Natsuko
  Tokyo, 143-8555 (JP)

(74) Representative: **Marks & Clerk LLP
15 Fetter Lane
London EC4A 1BW (GB)**

(54) **RESIN PARTICLES, TONER RESIN PARTICLES, TONER, METHOD OF PRODUCING RESIN PARTICLES, METHOD OF PRODUCING TONER, DEVELOPER, TONER STORAGE UNIT, AND IMAGE FORMING APPARATUS**

(57) Resin particles each include a binder resin. The binder resin includes an amorphous polyester resin and a crystalline resin. The amorphous polyester resin includes alcohol monomers as one of constituent components. The alcohol monomers include propylene glycol. Abundance of the crystalline resin in a region from an outermost surface of each of the resin particles to a depth of 150 nm from the outermost surface is 4% or less relative to an amount of the crystalline resin in an entire region of each of the resin particles. A radiocarbon $^{14}C$ content of the resin particles is 5.4 pMC or greater.

FIG.1

1 5 0 nm

**(Cont. next page)**

(52) Cooperative Patent Classification (CPC): (Cont.)
**G03G 9/08755; G03G 9/08795; G03G 9/08797;**
**G03G 9/09328**

C-Sets
**C08G 18/10, C08G 18/3256;**
**C08L 67/00, C08L 67/02, C08K 5/101,**
**C08K 3/04;**
**C08L 67/00, C08L 75/06, C08L 67/02,**
**C08K 5/101, C08K 3/04**

**Description**

BACKGROUND OF THE INVENTION

1. Field of the Invention

The disclosures herein generally relate to resin particles, toner resin particles, a toner, a method of producing resin particles, a method of producing a toner, a developer, a toner storage unit, and an image forming apparatus.

2. Description of the Related Art

Constituent materials of toners, especially binder resins, have been predominantly sourced and derived from fossil fuels. Carbon dioxide generated from disposal of toners and printed images has been emitted to the atmosphere, which may contribute to global warming. A shift from fossil fuels, which are limited resources, to biomass, which is a renewable material, is a shift towards use of a material that is sustainably renewed because living organisms constituting the biomass are generated using solar energy, water, and carbon dioxide. Therefore, use of biomass is strongly desired. To this end, as a binder resin of a toner, use of a resin including a renewable material, such as polylactic acid (PLA) and a rosin compound, has been studied.

In order to function as a toner, it is important that basic characteristics of a toner, such as low-temperature fixability and filming resistance, are assured. For example, proposed is a toner having excellent low-temperature fixability, where the toner includes a polyester including plant-derived propylene glycol as a monomer. The plant-derived propylene glycol is a renewable material (see Japanese Unexamined Patent Application Publication No. 2015-102842).

SUMMARY OF THE INVENTION

In one embodiment, resin particles each include a binder resin. The binder resin includes an amorphous polyester resin and a crystalline resin. The amorphous polyester resin includes alcohol monomers as constituent components. The alcohol monomers including propylene glycol. Abundance of the crystalline resin in a region from an outermost surface of each of the resin particles to a depth of 150 nm from the outermost surface is 4% or less relative to an amount of the crystalline resin in an entire region of each of the resin particles. A radiocarbon $^{14}C$ content of the resin particles is 5.4 pMC or greater.

BRIEF DESCRIPTION OF THE DRAWINGS

Fig. 1 is a schematic cross-sectional view illustrating a crystalline resin present inside each of the resin particles of the present disclosure;
Fig. 2 is a schematic view illustrating an example of the image forming apparatus of the present disclosure;
Fig. 3 is a schematic view illustrating another example of the image forming apparatus of the present disclosure;
Fig. 4 is a schematic view illustrating yet another example of the image forming apparatus of the present disclosure;
Fig. 5 is an enlarged partial view of Fig. 4; and
Fig. 6 is a schematic view illustrating an example of a process cartridge serving as the toner storage unit of the present disclosure.

DESCRIPTION OF THE PREFERRED EMBODIMENTS

In the following, embodiments of the present invention will be described with reference to the accompanying drawings.

Further, the present invention is not limited to these embodiments, but various variations and modifications may be made without departing from the scope of the present invention.

(Resin particles and toner resin particles)

The resin particles of the present disclosure each include a binder resin. The binder resin including an amorphous polyester resin and a crystalline resin. The amorphous polyester resin includes alcohol monomers as constituent components where the alcohol monomers include propylene glycol. Abundance of the crystalline resin in a region from an outermost surface of each of the resin particles to a depth of 150 nm from the outermost surface is 4% or less relative to an amount of the crystalline resin in an entire region of each of the resin particles. A radiocarbon $^{14}C$ content of the resin particles is 5.4 pMC or greater.

The toner resin particles of the present disclosure include the resin particles of the present disclosure, and may further include other components as necessary.

Since the resin particles of the present disclosure notably contribute to carbon neutrality and excel in low-temperature fixability and filming resistance, the resin particles are suitably used as a toner.

In addition to the binder resin, the resin particles or the toner resin particles may further include other components as necessary. The resin particles or the toner resin particles preferably include a biomass-derived resin in each of the resin particles or each of the toner resin particles considering carbon neutrality.

An object of the present disclosure is to provide resin particles notably contributing to carbon neutrality, and having excellent low-temperature fixability and filming resistance.

The present disclosure can provide resin particles notably contributing to carbon neutrality, and having excellent low-temperature fixability and filming resistance.

The resin particles or toner resin particles of the present disclosure will be described hereinafter. The present disclosure is not limited to embodiments described below, various modifications, such as substituting with another embodiment, adding, changing, and omitting, may be made without departing from the scope of the present invention, provided that the embodiments achieve functions and effects of the present disclosure.

<<Radiocarbon $^{14}C$ content>>

The radiocarbon $^{14}C$ content (may be referred to as a "$^{14}C$ content" hereinafter) of the resin particles is 5.4 pMC or greater, preferably 20.0 pMC or greater, and more preferably 35.0 pMC or greater. When the radiocarbon $^{14}C$ content of the resin particles is less than 5.4 pMC, the resin particles are generally recognized as having a low biomass degree, which will be described later, and cannot achieve carbon neutrality.

The carbon neutrality is typically used as a definition in association with a biomass material made up of organic matter. As the biomass material is combusted, carbon dioxide is emitted. The carbon included in the emitted carbon dioxide is derived from the carbon dioxide absorbed from the atmosphere during photosynthesis performed in the growth process of the biomass material. When the biomass material is used, therefore, it is considered that an amount of carbon dioxide in the atmosphere is not increased as a whole. This balance between the emission and the absorption is referred to as "carbon neutrality."

The $^{14}C$ is present in nature (the atmosphere). Living plants incorporate $^{14}C$ through photosynthesis so that a $^{14}C$ content of the carbon dioxide present in the atmosphere and a $^{14}C$ content of the carbon in an organic component of the plant are equivalent (107.5 pMC). When plants die, intake of carbon through photosynthesis ceases. Therefore, the $^{14}C$ content decreases according to a decay rate of a half-life of the $^{14}C$ that is 5,730 years. The $^{14}C$ is barely detected in any fossil fuels formed from living organisms because tens of thousands of years to hundreds of millions of years have been passed since the termination of living activities.

The $^{14}C$ content defines a proportion of plant-derived carbon relative to a total amount of carbon in a carbon element component of a carbon-containing petrochemical product. For example, the $^{14}C$ content of carbon elements of a petrochemical product can be measured according to ASTM-D6866 that is the ASTM standards of American Society for Testing and Materials.

In the present specification, "pMC" is an abbreviation of percent Modern Carbon, and is one of units representing a $^{14}C$ content. The pMC is determined by setting a ratio ($^{14}C/^{12}C$) as 100 pMC, where the ratio ($^{14}C/^{12}C$) is a ratio of $^{14}C$ in biomass of 1950 AD to $^{12}C$ in biomass of 1950 AD. However, the $^{14}C$ content of the atmosphere has been increasing year by year. Therefore, it is specified that a value of pMC is to be corrected by multiplying with a coefficient. As the correction coefficient, a coefficient corresponding to each specific year is used.

The $^{14}C$ content may be also expressed as a biomass degree that is calculated according to Formula (1) below.

[Formula (1)]

$$\text{Biomass degree (\%)} = {}^{14}C \text{ content (pMC)}/107.5 \times 100$$

The $^{14}C$ content being 5.4 pMC or greater means that the biomass degree is 5% or greater. The $^{14}C$ content being 20.0 pMC or greater means that the biomass degree is 18.6% or greater. The $^{14}C$ content being 30.0 pMC or greater means that the biomass degree is 27.9% or greater. The biomass degree being 5% or greater is a desirable concentration of the biomass considering carbon neutrality.

A method of measuring the $^{14}C$ content is not particularly limited, and may be appropriately selected in accordance with the intended purpose. The particularly preferred measuring method is radiocarbon dating.

As a measuring method of the radiocarbon dating, the resin particles are combusted, and carbon dioxide ($CO_2$)

of the resin particles is reduced to obtain C (graphite). A $^{14}$C content of the graphite is measured by means of an accelerator mass spectrometer (AMS). For example, the measurement by AMS is disclosed in Japanese Patent No. 4050051.

<<Abundance of crystalline resin in region from outermost surface of resin particle to depth of 150 nm>>

The abundance of the crystalline resin in a region from an outermost surface of each of the resin particles to a depth of 150 nm from the outermost surface is 4% or less, preferably 2% or less, relative to an amount of the crystalline resin in an entire region of each of the resin particles.

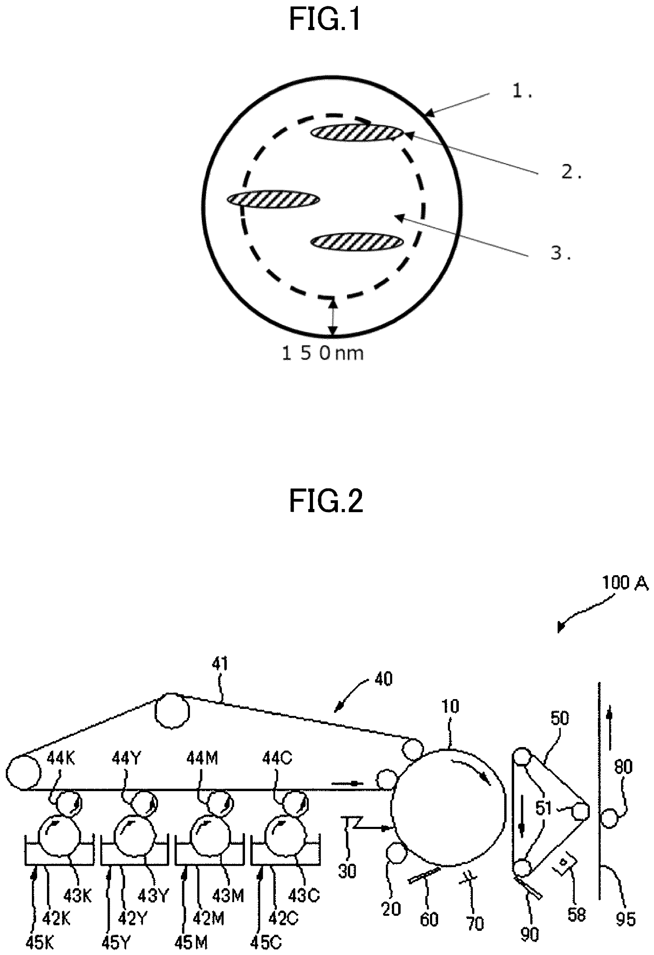

An embodiment of the resin particles of the present disclosure will be described with reference to Fig. 1. Fig. 1 is a schematic view illustrating the crystalline resin present inside each of the resin particles of the present disclosure. In each resin particle 1, the crystalline resin is present as grains 2 and the amorphous resin is present as a base 3. The abundance of the crystalline resin, i.e., the grains 2 of the crystalline resin, is low in the region from the outermost surface of the resin particle 1 to a depth of 150 nm from the outermost surface of the resin particle 1, which means that the crystalline resin 2 is encapsulated in the resin particle 1. When the abundance of the crystalline resin in a region from an outermost surface of each of the resin particles to a depth of 150 nm from the outermost surface is 4% or less, filming resistance of the resin particles improves. When the abundance of the crystalline resin in a region from an outermost surface of each of the resin particles to a depth of 150 nm from the outermost surface is greater than 4%, desirable filming resistance may not be assured.

In the present disclosure, the abundance of the crystalline resin in a region from an outermost surface of each of the resin particles to a depth of 150 nm from the outermost surface is a value measured by the following method.

The resin particles are embedded in an epoxy resin (DEVCON S-31, available from ITW PP&F JAPAN Co., LTD.), and the epoxy resin is sliced into a cut piece having a thickness of 60 nm by an ultrasonic ultramicrotome (Leica EM UC7, available from Leica Microsystems). The cut piece is dyed with ruthenium by means of a vacuum electron staining apparatus (available from Filgen Inc.). Then, cross-sections of the resin particles are observed under a transmission electron microscope (H-7500, available from Hitachi High-Tech Corporation) at acceleration voltage of 120 kV. For the observation, 50 resin particles are randomly selected to be observed from the resin particles having the diameters within the range of the volume average particle diameter of the resin particles $\pm$ 2.0 $\mu$m. Owing to the structure of each of the resin particles of the present disclosure, the crystalline resin in each of the resin particle appears dark as the resin particles are dyed with ruthenium tetroxide ($RuO_4$). When the resin particles include wax in each of the resin particles, the wax appears in the darker color. The abundance of the crystalline resin in the region from the outermost surface of the resin particle to a depth of 150 nm from the outermost surface can be calculated optionally using image processing software.

As the image processing software, Image-J may be used. Image-J is open-source software, and can be developed to add various types of processing and additional functions as plug-in by extending a part of the code. A calculation method of the abundance of the crystalline resin in the region of the resin particle between the outermost surface and 150 nm in depth from the outermost surface using Image-J is as follows.

(1) The peripheries of all of the grains of the crystalline resin present on the cross-section of one resin particle are traced with a "Freehand-sections" function, and an area surrounded by each periphery is measured with an "Analyze" function. The sum of all of the measured areas is determined as "Area A."
(2) The periphery of the resin particle on the cross-section is traced with the "Freehand-sections" function to create "Region 1."
(3) A center of gravity of the "Region 1" is determined by the "Analyze" function.
(4) Using the originally developed plug-in, 100 points are plotted in a manner that each of the points is located 150 nm away from each of coordinates towards the center of gravity of the resin particle determined in (3). The coordinates are assigned by dividing the periphery of the "Region 1," i.e., the line drawn by tracing the periphery of the resin particle with the Freehand-sections" functions in (2), into 100. The plotted 100 points are connected with a straight line to create "Region 2."
(5) The "Region 2" created in (4) is subtracted from the "Region 1" created in (2) to create "Region 3."
(6) Peripheries of the grains of the crystalline resin present in the "Region 3" created in (5) are traced with the "Freehand-sections" function, and an area surrounded by each periphery is measured with the "Analyze" function. The sum of all of the measured areas is determined as "Area B."
(7) The value of "Area A" calculated in (1) and the value of "Area B" calculated in (6) are inserted in Formula (2) below to calculate the abundance of the crystalline polyester resin C in the region of the one resin particle between the outermost surface of the resin particle and 150 nm in depth from the outermost surface.

[Formula (2)]

Abundance of crystalline polyester resin C in region of one resin particle between outermost surface and 150 nm in depth (%) = Area A/Area B × 100

(8) The processes of (1) to (7) above are performed on 50 resin particles, and an average of the values obtained from the 50 resin particles is calculated as the abundance of the crystalline polyester in the region from the outermost surface of the resin particle to a depth of 150 nm from the outermost surface. The calculated average is determined as the abundance of the crystalline polyester resin in the region from the outermost surface to a depth of 150 nm from the outermost surface for the resin particles of the present disclosure.

<<Biomass-derived resin>>

The biomass-derived resin is a resin including a plant-derived compound as a raw material. The biomass-derived resin may be included in the amorphous polyester resin, or in the crystalline resin, or in the below-described colorant. Alternatively, the biomass-derived resin may be included in any other components, such as a release agent. When the resin particles are used as a toner, characteristics of the toner may be adjusted by adjusting a blending ratio between a petroleum-derived component and a plant-derived component in each of the amorphous polyester resin and the crystalline resin used for the resin particles.

As constituent materials of a toner acquired from renewable resources, a release agent (e.g., carnauba wax and candelilla wax) is used. The release agent is added to a toner to impart releasing properties during fixing, and a blending amount of the release agent is typically several percent by mass. Therefore, it is difficult to achieve carbon neutrality only with the release agent.

In recent years, therefore, there is a strong demand for a toner that includes a biomass-derived resin, and can improve a function as a toner as well as achieving a high level of carbon neutrality. If an attempt is made to increase a biomass degree of a toner with a constituent component other than a release agent, such as a binder resin, however, an absolute value $\Delta$SP of a difference between a solubility parameter of the amorphous polyester resin and a solubility parameter of the crystalline resin increases. Therefore, compatibility between the amorphous polyester resin and the crystalline resin decreases, which impairs low-temperature fixability. When an attempt is made to improve low-temperature fixability, however, durability of a toner is reduced, which may cause filming on a photoconductor. Accordingly, a problem still remains when renewable resources are used for a toner to contribute carbon neutrality, as it is difficult to achieve both low-temperature fixability and filming resistance, which are desired as characteristics of the toner, at the same time.

To solve the above-described problem, resin particles of the present disclosure include at least a binder resin in each of the resin particles. The binder resin includes an amorphous polyester resin and a crystalline resin. The amorphous polyester resin includes alcohol monomers as constituent components. The alcohol monomers including propylene glycol. Abundance of the crystalline resin in a region from an outermost surface of each of the resin particles to a depth of 150 nm from the outermost surface is 4% or less relative to an amount of the crystalline resin in an entire region of each of the resin particles. A radiocarbon $^{14}$C content of the resin particles is 5.4 pMC or greater. Therefore, the resin particles of the present disclosure notably contribute to carbon neutrality, and achieve both excellent low-temperature fixability and excellent filming resistance.

<Binder resin>

The binder resin includes an amorphous polyester resin and a crystalline resin.

<<Amorphous polyester resin>>

The amorphous polyester resin includes one or more alcohol monomers as one of constituent components of the amorphous polyester resin, and the alcohol monomers include propylene glycol. The propylene glycol is preferably plant-derived propylene glycol. Since the amorphous polyester resin includes a plant-based component, carbon neutrality of resulting resin particles improves.

The amorphous polyester resin is not particularly limited, provided that one or more alcohol monomers, which are included as one of constituent components of the amorphous polyester resin, include propylene glycol. The amorphous polyester resin may be appropriately selected in accordance with the intended purpose. The amorphous polyester resin preferably includes an amorphous polyester resin B, which will be described hereinafter, and more preferably includes an amorphous polyester resin A and an amorphous polyester resin B, which will be described below.

<<<Amorphous polyester resin A>>>

The amorphous polyester resin A is not particularly limited, and may be appropriately selected in accordance with the intended purpose. The amorphous polyester resin A preferably has a glass transition temperature (Tg) of -60°C or higher and 20°C or lower, and more preferably -40°C or higher and 20°C or lower. Moreover, the amorphous polyester resin A is preferably obtained through a reaction between a non-linear reactive precursor and a curing agent.

Moreover, the amorphous polyester resin A preferably includes a urethane bond, or a urea bond, or both, considering excellent adhesion to a recording medium, such as paper. Since the amorphous polyester resin A includes a urethane bond, or a urea bond, or both, the urethane bond or urea bond behaves like a pseudo cross-linking point to enhance rubber-like characteristics of the amorphous polyester resin A, consequently improving heat resistant storage stability and hot offset resistance of resulting resin particles.

-Non-linear reactive precursor-

The non-linear reactive precursor is not particularly limited, provided that the non-linear reactive precursor is a polyester resin including a group reactive with the curing agent. The polyester resin including a group reactive with the curing agent may be referred to as a "prepolymer" hereinafter. The non-linear reactive precursor may be appropriately selected in accordance with the intended purpose.

The group of the prepolymer reactive with the curing agent is not particularly limited, and may be appropriately selected in accordance with the intended purpose. Examples of the group include groups reactive with an active hydrogen group.

Examples of the groups reactive with an active hydrogen group include an isocyanate group, an epoxy group, carboxylic acid, and an acid chloride group. Among the above-listed examples, the group reactive with the active hydrogen group is preferably an isocyanate group because the isocyanate group can form a urethane bond or urea bond in a resulting amorphous polyester resin A.

The prepolymer preferably has a non-linear structure. The non-linear structure is a branched-chain structure derived from a trivalent or higher alcohol, or a trivalent or higher carboxylic acid, or both the trivalent or higher alcohol and the trivalent or higher carboxylic acid.

The prepolymer is preferably a polyester resin including an isocyanate group.

The polyester resin including an isocyanate group is not particularly limited, and may be appropriately selected in accordance with the intended purpose. Examples of the polyester resin including an isocyanate group include a reaction product between an active hydrogen group-containing polyester resin and a polyisocyanate.

--Active hydrogen group-containing polyester resin--

The active hydrogen group-containing polyester resin is not particularly limited, and may be appropriately selected in accordance with the intended purpose. Examples of the active hydrogen group-containing polyester resin include a polyester resin obtained through polycondensation between a multivalent alcohol and a multivalent carboxylic acid.

---Multivalent alcohol---

The multivalent alcohol is not particularly limited, and may be appropriately selected in accordance with the intended purpose. Examples of the multivalent alcohol include a diol, a trivalent or higher alcohol, and a mixture of a diol and a trivalent or higher alcohol. The above-listed examples may be used alone or in combination. The trivalent or higher alcohol contributes to formation of a branched-chain structure of the polyester resin including an isocyanate group.

The diol is not particularly limited, and may be appropriately selected in accordance with the intended purpose. Examples of the diol include aliphatic diols, oxyalkylene group-containing diols, alicyclic diols, alkylene oxide adducts of alicyclic diols, bisphenols, and alkylene oxide adducts of bisphenols.

Examples of the aliphatic diols include ethylene glycol, 1,2-propylene glycol, 1,3-propylene glycol, 1,4-butanediol, 3-methyl-1,5-pentanediol, 1,6-hexanediol, 1,8-octanediol, 1,10-decanediol, and 1,12-dodecanediol.

Examples of the oxyalkylene group-containing diols include diethylene glycol, triethylene glycol, dipropylene glycol, polyethylene glycol, polypropylene glycol, and polytetramethylene glycol.

Examples of the alicyclic diols include 1,4-cyclohexanedimethanol and hydrogenated bisphenol A.

Examples of the alkylene oxide adducts of alicyclic diols include alkylene oxide (e.g., ethylene oxide, propylene oxide, and butylene oxide) adducts of the above-listed alicyclic diols.

Examples of the bisphenols include bisphenol A, bisphenol F, and bisphenol S.

Examples of the alkylene oxide adducts of bisphenols include alkylene oxide (e.g., ethylene oxide, propylene oxide, and butylene oxide) adducts of the above-listed bisphenols.

The above-listed examples may be used alone or in combination.

Among the above-listed examples, the diol is preferably a C4-C12 aliphatic diol.

The trivalent or higher alcohol is not particularly limited, and may be appropriately selected in accordance with the intended purpose. Examples of the trivalent or higher alcohol include trivalent or higher aliphatic alcohols, trivalent or higher polyphenols, and alkylene oxide adducts of trivalent or higher polyphenols.

Examples of the trivalent or higher aliphatic alcohols include glycerin, trimethylolethane, trimethylolpropane, pentaerythritol, and sorbitol.

Examples of the trivalent or higher polyphenols include trisphenol PA, phenol novolac, and cresol novolac.

Examples of the alkylene oxide adducts of trivalent or higher polyphenols include alkylene oxide (e.g., ethylene oxide, propylene oxide, and butylene oxide) adducts of the above-listed trivalent or higher polyphenols.

The above-listed examples may be used alone or in combination.

The amorphous polyester resin A preferably includes the trivalent or higher aliphatic alcohol as one of the constituent components of the amorphous polyester resin. Since the amorphous polyester resin A includes the trivalent or higher aliphatic alcohol as one of the constituent components of the amorphous polyester resin A, a molecular structure of the amorphous polyester resin A has a branched-chain structure and the molecular chain of the amorphous polyester resin A forms a three-dimensional network structure. Therefore, the amorphous polyester resin A has rubber-like characteristics such that the amorphous polyester resin A deforms but does not flow at a low temperature. As the amorphous polyester resin A having the above-described characteristics is used for the resin particles, heat resistant storage stability and hot offset resistance of the resin particles can be assured.

In order to reduce a glass transition temperature (Tg) of the amorphous polyester resin A to allow the amorphous polyester resin A to be deformable at a low temperature, the amorphous polyester resin A preferably includes a diol component as one of the constituent components of the amorphous polyester resin A, and as the diol component, a C4-C12 aliphatic diol is preferably included in an amount of 50 mol% or greater relative to a total amount of alcohol components in the amorphous polyester resin A.

---Multivalent carboxylic acid---

The multivalent carboxylic acid is not particularly limited, and may be appropriately selected in accordance with the intended purpose. Examples of the multivalent carboxylic acid include a dicarboxylic acid, a trivalent or higher carboxylic acid, and a mixture of a dicarboxylic acid and a trivalent or higher carboxylic acid. The above-listed examples may be used alone or in combination. The trivalent or higher carboxylic acid contributes to formation of a branched-chain structure of the polyester resin including an isocyanate group.

The dicarboxylic acid is not particularly limited, and may be appropriately selected in accordance with the intended purpose. Examples of the dicarboxylic acid include aliphatic dicarboxylic acids, aromatic dicarboxylic acids, anhydrides of the foregoing dicarboxylic acids, lower (C1-C3) alkyl esters of the foregoing dicarboxylic acids, and halides of the foregoing dicarboxylic acids. The above-listed examples may be used alone or in combination.

The aliphatic dicarboxylic acids are not particularly limited, and may be appropriately selected in accordance with the intended purpose. Examples of the aliphatic dicarboxylic acids include succinic acid, adipic acid, sebacic acid, dodecanedioic acid, maleic acid, and fumaric acid.

The aromatic dicarboxylic acids are not particularly limited, and may be appropriately selected in accordance with the intended purpose. The aromatic dicarboxylic acids are preferably C8-C20 aromatic dicarboxylic acids. The C8-C20 aromatic dicarboxylic acids are not particularly limited, and may be appropriately selected in accordance with the intended purpose. Examples of the C8-C20 aromatic dicarboxylic acids include phthalic acid, isophthalic acid, terephthalic acid, and naphthalene dicarboxylic acid.

The trivalent or higher carboxylic acids are not particularly limited, and may be appropriately selected in accordance with the intended purpose. Examples of the trivalent or higher carboxylic acids include trivalent or higher aromatic carboxylic acids, anhydrides of the foregoing carboxylic acids, lower (C1-C3) alkyl esters of the foregoing carboxylic acids, and halides of the foregoing carboxylic acids. The above-listed examples may be used alone or in combination.

The trivalent or higher aromatic carboxylic acids are not particularly limited, and may be appropriately selected in accordance with the intended purpose. The trivalent or higher aromatic carboxylic acids are preferably C9-C20 trivalent or higher aromatic carboxylic acids.

Examples of the C9-C20 trivalent or higher aromatic carboxylic acids include trimellitic acid and pyromellitic acid.

Among the above-listed examples, the multivalent carboxylic acid preferably includes plant-derived saturated aliphatic succinic acid, sebacic acid, or dodecanedioic acid. Since the multivalent carboxylic acid is derived from a plant, carbon neutrality of resulting resin particles improves. The saturated aliphatic carboxylic acid facilitates recrystallization of the crystalline resin, contributes to increase an aspect ratio of grains of the crystalline resin in each of resulting resin particles, and improves low temperature fixability of the resin particles.

In order to reduce a glass transition temperature (Tg) of the amorphous polyester resin A to allow the amorphous polyester resin A to be deformable at a low temperature, the amorphous polyester resin A preferably includes a dicarboxylic acid component as one of the constituent components of the amorphous polyester resin, and as the dicarboxylic acid component, a C4-C12 aliphatic dicarboxylic acid is preferably included in an amount of 50 mol% or greater relative to a total amount of acid components in the amorphous polyester resin A.

--Polyisocyanate--

The polyisocyanate is not particularly limited, and may be appropriately selected in accordance with the intended purpose. Examples of the polyisocyanates include a diisocyanate and a trivalent or higher polyisocyanate. The above-listed examples may be used alone or in combination.

The diisocyanate is not particularly limited, and may be appropriately selected in accordance with the intended purpose. Examples of the diisocyanate include aliphatic diisocyanates, alicyclic diisocyanates, aromatic diisocyanates, aromatic aliphatic diisocyanates, isocyanurates, phenol derivatives of the foregoing diisocyanates, and compounds in which any of the foregoing diisocyanates is blocked with oxime or caprolactam.

Examples of the aliphatic diisocyanates include tetramethylene diisocyanate, hexamethylene diisocyanate, methyl 2,6-diisocyanatocaproate, octamethylene diisocyanate, decamethylene diisocyanate, dodecamethylene diisocyanate, tetradecamethylene diisocyanate, trimethylhexane diisocyanate, and tetramethylhexane diisocyanate.

Examples of the alicyclic diisocyanates include isophorone diisocyanate and cyclohexylmethane diisocyanate.

Examples of the aromatic diisocyanates include tolylene diisocyanate, diphenylmethane diisocyanate, 1,5-naphthylene diisocyanate, 4,4'-diisocyanatodiphenyl, 4,4'-diisocyanato-3,3'-dimethyldiphenyl, 4,4'-diisocyanato-3-methyldiphenylmethane, and 4,4'-diisocyanato-diphenyl ether.

Examples of the aromatic aliphatic diisocyanates include $\alpha,\alpha,\alpha',\alpha'$-tetramethylxylene diisocyanate.

Examples of the isocyanurates include tris(isocyanatoalkyl)isocyanurate and tris(isocyanatocycloalkyl) isocyanurate.

Examples of the trivalent or higher polyisocyanates include lysine triisocyanate and diisocyanate modified products of trivalent or higher alcohols.

-Curing agent-

The curing agent is not particularly limited, provided that the curing agent reacts with the non-linear reactive precursor to generate the amorphous polyester resin A. The curing agent may be appropriately selected in accordance with the intended purpose. Examples of the curing agent include an active hydrogen group-containing compound.

--Active hydrogen group-containing compound--

An active hydrogen group of the active hydrogen group-containing compound is not particularly limited, and may be appropriately selected in accordance with the intended purpose. Examples of the active hydrogen group include a hydroxyl group (e.g., an alcoholic hydroxyl group and a phenolic hydroxyl group), an amino group, a carboxyl group, and a mercapto group. The above-listed examples may be used alone or in combination.

The active hydrogen group-containing compound is not particularly limited, and may be appropriately selected in accordance with the intended purpose. The active hydrogen group-containing compound is preferably any of amines because the amines can form a urea bond.

The amines are not particularly limited, and may be appropriately selected in accordance with the intended purpose. Examples of the amines include diamines, trivalent or higher amines, amino alcohols, aminomercaptans, amino acids, and compounds in each of which an amino group of any of the foregoing amines is blocked. The above-listed examples may be used alone or in combination. Among the above-listed examples, the above-mentioned any of amines is preferably a diamine or a mixture of a diamine with a small amount of a trivalent or higher amine.

The diamines are not particularly limited, and may be appropriately selected in accordance with the intended purpose. Examples of the diamines include aromatic diamines, alicyclic diamines, and aliphatic diamines.

The aromatic diamines are not particularly limited, and may be appropriately selected in accordance with the intended purpose. Examples of the aromatic diamines include phenylenediamine, diethyltoluenediamine, and 4,4'-diaminodiphenylmethane.

The alicyclic diamines are not particularly limited, and may be appropriately selected in accordance with the intended purpose. Examples of the alicyclic diamines include 4,4'-diamino-3,3'-dimethyldicyclohexylmethane, diaminocyclohexane, and isophoronediamine.

The aliphatic diamines are not particularly limited, and may be appropriately selected in accordance with the intended purpose. Examples of the aliphatic diamines include ethylenediamine, tetramethylenediamine, and hexamethylenediamine.

The trivalent or higher amines are not particularly limited, and may be appropriately selected in accordance with the intended purpose. Examples of the trivalent or higher amines include diethylenetriamine and triethylenetetramine.

The amino alcohols are not particularly limited, and may be appropriately selected in accordance with the intended purpose. Examples of the amino alcohols include ethanolamine and hydroxyethylaniline.

The aminomercaptans are not particularly limited, and may be appropriately selected in accordance with the intended purpose. Examples of the aminomercaptans include aminoethylmercaptan and aminopropylmercaptan.

The amino acids are not particularly limited, and may be appropriately selected in accordance with the intended purpose. Examples of the amino acids include aminopropionic acid and aminocaproic acid.

The compounds in each of which an amino group of any of the foregoing amines is blocked are not particularly limited, and may be appropriately selected in accordance with the intended purpose. Examples of the compounds include ketimine compounds obtained by blocking an amino group with any of ketones (e.g., acetone, methyl ethyl ketone, and methyl isobutyl ketone) and oxazoline compounds.

A weight average molecular weight (Mw) of the amorphous polyester resin A is not particularly limited, and may be appropriately selected in accordance with the intended purpose. The weight average molecular weight (Mw) of the amorphous polyester resin A as measured by gel permeation chromatography (GPC) is preferably 10,000 or greater and 1,000,000 or less, more preferably 10,000 or greater and 300,000 or less, and particularly preferably 10,000 or greater and 200,000 or less. When the weight average molecular weight (Mw) of the amorphous polyester resin A is 10,000 or greater, heat resistant storage stability of resulting resin particles is improved with minimizing flowing of the resin particles at a low temperature. In addition, viscosity of the resin particles is maintained at an appropriate level when the resin particles are melted, thus desirable hot offset resistance can be assured.

A molecular structure of the amorphous polyester resin A can be confirmed by solution or solid nuclear magnetic resonance spectroscopy (NMR), X-ray diffraction spectroscopy, gas chromatography-mass spectrometry (GC-MS), liquid chromatography-mass spectrometry (LC-MS), or infrared (IR) spectroscopy. Among the above-listed measuring methods, the measuring method used may be a method where a compound having no absorption, which is based on $\delta$CH (out of plane bending) of an olefin, at $965 \pm 10$ cm$^{-1}$ or $990 \pm 10$ cm$^{-1}$ on an infrared absorption spectrum of the compound as measured by IR spectroscopy is detected as the amorphous polyester resin A.

An amount of the amorphous polyester resin A is not particularly limited, and may be appropriately selected in accordance with the intended purpose. The amount of the amorphous polyester resin A is preferably from 5 parts by mass through 25 parts by mass, and more preferably from 10 parts by mass through 20 parts by mass, relative to 100 parts by mass of the resin particles. When the amount of the amorphous polyester resin A is 5 parts by mass or greater relative to 100 parts by mass of the resin particles, desirable low-temperature fixability and hot offset resistance are assured. When the amount of the amorphous polyester resin A is 25 parts by mass or less relative to 100 parts by mass of the resin particles, desirable heat resistant storage stability is assured, and an image obtained after fixing has desirable glossiness. The amount of the amorphous polyester resin A within the above-mentioned more preferable range is advantageous because resulting resin particles achieve excellent low-temperature fixability, excellent hot offset resistance, and excellent heat resistant storage stability.

<<<Amorphous polyester resin B>>>

The amorphous polyester resin B is preferably a linear polyester resin. Moreover, the amorphous polyester resin B is preferably an unmodified polyester resin.

The unmodified polyester resin is a polyester resin obtained with a multivalent alcohol and a multivalent carboxylic acid or a derivative of the multivalent carboxylic acid. The unmodified polyester resin is a polyester resin that is not modified with an isocyanate compound etc.

The amorphous polyester resin B is preferably free from a urethane bond and a urea bond.

-Multivalent alcohol-

The multivalent alcohol is not particularly limited, and may be appropriately selected in accordance with the intended purpose. Examples of the multivalent alcohol include diols.

Examples of the diols include C2-C3 alkylene oxide adducts (average number of moles added: from 1 through 10) of bisphenol A, ethylene glycol, propylene glycol, neopentyl glycol, hydrogenated bisphenol A, and C2-C3 alkylene oxide adducts (average number of moles added: from 1 through 10) of hydrogenated bisphenol A.

Examples of the C2-C3 alkylene oxide adducts (average number of moles added: from 1 through 10) of bisphenol A include polyoxypropylene(2.2)-2,2-bis(4-hydroxyphenyl)propane and polyoxyethylene(2.2)-2,2-bis(4-hydroxyphenyl)propane.

The above-listed examples may be used alone or in combination. Among the above-listed examples, the multivalent alcohol preferably includes plant-derived ethylene glycol or plant-derived propylene glycol. Since the multivalent alcohol is derived from a plant, carbon neutrality of resulting resin particles improves.

The amorphous polyester resin B may include a trivalent or higher alcohol at a terminal of a molecular chain of the amorphous polyester resin B for adjusting an acid value or a hydroxyl value.

Examples of the trivalent or higher alcohol include glycerin, pentaerythritol, and trimethylolpropane.

-Multivalent carboxylic acid or derivative of multivalent carboxylic acid-

The multivalent carboxylic acid is not particularly limited, and may be appropriately selected in accordance with the intended purpose. Examples of the multivalent carboxylic acid include dicarboxylic acids.

Examples of the dicarboxylic acids include adipic acid, phthalic acid, isophthalic acid, terephthalic acid, fumaric acid, maleic acid, succinic acid, C1-C20 alkyl group-substituted or C2-C20 alkenyl group-substituted succinic acid, and modified refined rosin.

Examples of the C1-C20 alkyl group-substituted or C2-C20 alkenyl group-substituted succinic acid include dodecenylsuccinic acid and octylsuccinic acid.

The derivative of the multivalent carboxylic acid is not particularly limited, and may be appropriately selected in accordance with the intended purpose. Examples of the derivative of the multivalent carboxylic acid include multivalent carboxylic acid anhydrides and multivalent carboxylic acid esters.

For example, the modified refined rosin is preferably refined rosin modified with acrylic acid, fumaric acid, or maleic acid.

The above-listed examples may be used alone or in combination.

Among the above-listed examples, the multivalent carboxylic acid preferably includes plant-derived saturated succinic acid. Since the multivalent carboxylic acid is derived from a plant, carbon neutrality of resulting resin particles improves.

The amorphous polyester resin B preferably includes a dicarboxylic acid component as one of constituent components of the amorphous polyester resin B, and the dicarboxylic acid preferably includes terephthalic acid in an amount of 50 mol% or greater. The amorphous polyester resin B as described is preferable in view of heat resistant storage stability.

The amorphous polyester resin B may include a trivalent or higher carboxylic acid at a terminal of a molecular chain of the amorphous polyester resin B for adjusting an acid value or hydroxyl value.

Examples of the trivalent or higher carboxylic acid include trimellitic acid, pyromellitic acid, and acid anhydrides of the foregoing carboxylic acids.

A molecular weight of the amorphous polyester resin B is not particularly limited, and may be appropriately selected in accordance with the intended purpose. The molecular weight of the amorphous polyester resin B as measured by gel permeation chromatography (GPC) is preferably within the following ranges.

A weight average molecular weight (Mw) of the amorphous polyester resin B is preferably from 3,000 through 10,000, and more preferably from 4,000 through 10,000.

A number average molecular weight (Mn) of the amorphous polyester resin B is preferably from 1,000 through 4,000, and more preferably from 1,500 through 3,000.

A ratio (Mw/Mn) of the weight average molecular weight (Mw) of the amorphous polyester resin B to the number average molecular weight (Mn) of the amorphous polyester resin B is preferably from 1.0 through 4.0, and more preferably from 1.0 through 3.5.

When the weight average molecular weight (Mw) and number average molecular weight (Mn) of the amorphous polyester resin B are equal to or greater than the lower limits of the preferable ranges, respectively, heat-resistant storage stability of resulting resin particles and durability of the resin particles against stress, such as stirring performed inside a developing device, are assured. When the weight average molecular weight (Mw) and number average molecular weight (Mn) of the amorphous polyester resin B are equal to or less than the upper limits of the preferable ranges, respectively, viscoelasticity of the resin particles as melted may be maintained at an appropriate level, and desirable low-temperature fixability is assured.

An acid value of the amorphous polyester resin B is not particularly limited, and may be appropriately selected in accordance with the intended purpose. The acid value of the amorphous polyester resin B is preferably from 1 mgKOH/g through 50 mgKOH/g, and more preferably from 5 mgKOH/g through 30 mgKOH/g. When the acid value of the amorphous polyester resin B is 1 mgKOH/g or greater, a toner including resulting resin particles tends to be negatively charged, and affinity between the toner and a recording medium, such as paper, improves during fixing to the recording medium, consequently improving low-temperature fixability. When the acid value of the amorphous polyester resin B is 50 mg-

KOH/g or less, charging stability, especially charging stability against fluctuations of environmental conditions, is assured.

The acid value of the amorphous polyester resin B may be measured according to the measuring method disclosed in JIS K0070-1992.

A hydroxyl value of the amorphous polyester resin B is not particularly limited, and may be appropriately selected in accordance with the intended purpose. The hydroxyl value of the amorphous polyester resin B is preferably 5 mgKOH/g or greater. Moreover, the upper limit of the hydroxyl value of the amorphous polyester resin B is not particularly limited, and may be appropriately selected in accordance with the intended purpose. The upper limit of the hydroxyl value of the amorphous polyester resin B is preferably 30 mgKOH/g or less. The lower limit and upper limit of the hydroxyl value of the amorphous polyester resin B may be appropriately selected and combined, and the lower limit and upper limit of the hydroxyl value of the amorphous polyester resin B is preferably from 5 mgKOH/g through 30 mgKOH/g.

The hydroxyl value of the amorphous polyester resin B may be measured according to the measuring method disclosed in JIS K0070-1966.

A glass transition temperature (Tg) of the amorphous polyester resin B is not particularly limited, and may be appropriately selected in accordance with the intended purpose. The glass transition temperature (Tg) of the amorphous polyester resin B is preferably 40°C or higher and 80°C or lower, and more preferably 50°C or higher and 70°C or lower. When the glass transition temperature (Tg) of the amorphous polyester resin B is 40°C or higher, a toner including resulting resin particles has adequate heat-resistant storage stability and adequate durability against stress, such as stirring performed inside a developing device, and desirable filming resistance is assured. When the glass transition temperature (Tg) of the amorphous polyester resin B is 80°C or lower, a toner including resulting resin particles adequately deform by heat and pressure applied during fixing, consequently improving low-temperature fixability.

A molecular structure of the amorphous polyester resin B can be confirmed by solution or solid nuclear magnetic resonance spectroscopy (NMR), X-ray diffraction spectroscopy, gas chromatography-mass spectrometry (GC-MS), liquid chromatography-mass spectrometry (LC-MS), or infrared (IR) spectroscopy. Among the above-listed measuring methods, the measuring method used may be a method where a compound having no absorption, which is based on $\delta$CH (out of plane bending) of an olefin, at $965 \pm 10$ cm$^{-1}$ or $990 \pm 10$ cm$^{-1}$ on an infrared absorption spectrum of the compound as measured by IR spectroscopy is detected as the amorphous polyester resin B.

An amount of the amorphous polyester resin B is not particularly limited, and may be appropriately selected in accordance with the intended purpose. The amount of the amorphous polyester resin B is preferably from 45 parts by mass through 90 parts by mass, and more preferably from 60 parts by mass through 80 parts by mass, relative to 100 parts by mass of the resin particles. When the amount of the amorphous polyester resin B is 45 parts by mass or greater relative to 100 parts by mass of the resin particles, desirable dispersibility of a pigment or a release agent inside each of the resin particles is maintained, and occurrences of image fogging and defects are minimized. When the amount of the amorphous polyester resin B is 90 parts by mass or less relative to 100 parts by mass of the resin particles, appropriate proportions of the crystalline resin and the amorphous polyester resin A are maintained, consequently assuring low-temperature fixability. The amount of the amorphous polyester resin B within the more preferable range is advantageous because both high image quality and excellent low-temperature fixability are achieved.

<<Crystalline resin>>

The crystalline resin is not particularly limited, provided that the crystalline resin has crystallinity. The crystalline resin may be appropriately selected in accordance with the intended purpose. Examples of the crystalline resin include a polyester resin, a polyurethane resin, a polyurea resin, a polyamide resin, a polyether resin, a vinyl resin, and a modified crystalline resin. The above-listed examples may be used alone or in combination. Among the above-listed examples, the crystalline resin is preferably a crystalline polyester resin.

-Crystalline polyester resin-

Since the crystalline polyester resin (may be referred to as a "crystalline polyester resin C" hereinafter) has high crystallinity, the crystalline polyester resin has thermal melting properties such that a viscosity of the crystalline polyester resin drastically changes at a temperature close to a fixing onset temperature.

Since the crystalline polyester resin C having such properties is used in combination with the amorphous polyester resin, resin particles having both excellent heat-resistant storage stability and excellent low-temperature fixability are obtained. As the crystalline polyester resin C and the amorphous polyester resin are used in combination, for example, resulting resin particles have excellent heat-resistant storage stability owing to the crystalline polyester resin C until a temperature of the resin particles reaches just below the melt onset temperature. At the melt onset temperature, the resin particles cause a drastic reduction in viscosity (sharp melting) due to melt of the crystalline polyester resin C. Since the melted crystalline polyester resin C becomes compatible with the amorphous polyester resin B to drastically decrease the viscosity of the resin particles, consequently improving fixability. Moreover, a desired release range (i.e.,

a difference between the minimum fixing temperature and the hot-offset onset temperature) is achieved.

The crystalline polyester resin C is synthesized from a multivalent alcohol and a multivalent carboxylic acid or a derivative of the multivalent carboxylic acid. Since a plant-derived compound is used as at least any of the multivalent alcohol and the multivalent carboxylic acid or derivative of the multivalent carboxylic acid, the crystalline resin is formed as a biomass-derived resin. The above-listed examples may be used alone or in combination.

The derivative of the multivalent carboxylic acid is not particularly limited, and may be appropriately selected in accordance with the intended purpose. Examples of the derivative of the multivalent carboxylic acid include a multivalent carboxylic acid anhydride and a multivalent carboxylic acid ester.

In the present specification, the crystalline polyester C is synthesized from the multivalent alcohol and the multivalent carboxylic acid or a derivative of the multivalent carboxylic acid as described above. A modified polyester resin, such as the prepolymer and a resin obtained through a reaction of the prepolymer, i.e., a cross-linking reaction and/or an elongation reaction of the prepolymer, is not classified as the crystalline polyester resin C.

--Multivalent alcohol--

The multivalent alcohol is not particularly limited, and may be appropriately selected in accordance with the intended purpose. Examples of the multivalent alcohol include diols and trivalent or higher alcohols.

Examples of the diols include saturated aliphatic diols.

Examples of the saturated aliphatic diols include straight-chain saturated aliphatic diols and branched-chain saturated aliphatic diol. Among the above-listed examples, the saturated aliphatic diol is preferably a straight-chain saturated aliphatic diol, and more preferably a C2-C12 straight-chain saturated aliphatic diol. Use of a straight-chain saturated aliphatic diol as the saturated aliphatic diol is preferable because a resulting crystalline polyester resin C has high crystallinity and a high melting point. When the number of carbon atoms of the saturated aliphatic diol is greater than 12, it is practically difficult to acquire such a saturated aliphatic diol. The number of carbon atoms of the saturated aliphatic diol is preferably 12 or less.

Specific examples of the saturated aliphatic diols include ethylene glycol, 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,14-eicosanedecanediol. The above-listed examples may be used alone or in combination. Among the above-listed examples, ethylene glycol, 1,4-butanediol, 1,6-hexanediol, 1,8-octanediol, 1,10-decanediol, and 1,12-dodecanediol are preferable because a resulting crystalline polyester resin C has high crystallinity and excellent sharp melt properties.

Examples of the trivalent or higher alcohols include glycerin, trimethylolethane, trimethylolpropane, and pentaerythritol. The above-listed examples may be used alone or in combination.

--Multivalent carboxylic acid-

The multivalent carboxylic acid is not particularly limited, and may be appropriately selected in accordance with the intended purpose. Examples of the multivalent carboxylic acid include dicarboxylic acids.

Examples of the dicarboxylic acid include saturated aliphatic dicarboxylic acids, unsaturated aliphatic dicarboxylic acids, and aromatic dicarboxylic acids.

Examples of the saturated aliphatic dicarboxylic acids include oxalic acid, malonic acid, succinic acid, glutaric acid, sebacic acid, adipic acid, and dodecanedioic acid.

Examples of the unsaturated aliphatic dicarboxylic acids include fumaric acid and maleic acid.

Examples of the saturated aliphatic dicarboxylic acids include terephthalic acid.

The above-listed examples may be used alone or in combination.

The dicarboxylic acid is preferably a plant-derived C4-C12 saturated aliphatic dicarboxylic acid, and more preferably plant-derived sebacic acid. Since the dicarboxylic acid is derived from a plant, carbon neutrality of resulting resin particles improves. When the number of carbon atoms of the dicarboxylic acid is 12 or less, compatibility between the crystalline polyester resin and the amorphous polyester resin improves, an aspect ratio of each grain of the crystalline polyester resin increases, and low-temperature fixability improves. Moreover, the saturated aliphatic dicarboxylic acid has an effect of enhancing crystallinity of the crystalline polyester resin C, consequently increasing an aspect ratio of each grain of the crystalline polyester resin C and improving low-temperature fixability.

A melting point of the crystalline polyester resin C is not particularly limited, and may be appropriately selected in accordance with the intended purpose. The melting point of the crystalline polyester resin C is preferably 60°C or higher and 80°C or lower. When the melting point of the crystalline polyester resin C is 60°C or higher, the crystalline polyester resin C does not melt at a low temperature, thus assuring desirable heat-resistant storage stability of the resin particles. When the melting point of the crystalline polyester resin C is 80°C or lower, the crystalline polyester resin C is desirably melted by heat applied during fixing, thus assuring low-temperature fixability.

A molecular weight of the crystalline polyester resin C is not particularly limited, and may be appropriately selected in accordance with the intended purpose. The crystalline polyester resin C having a sharp molecular weight distribution imparts excellent low-temperature fixability, and a large amount of a component having a large molecular weight of the crystalline polyester resin C improves heat-resistant storage stability. From the point of view as described, molecular weights of an orthodichlorobenzene-soluble component of the crystalline polyester resin C as measured by gel permeation chromatography (GPC) are preferably within the following ranges.

A weight average molecular weight (Mw) of the crystalline polyester resin C is preferably from 3,000 through 30,000, and more preferably from 5,000 through 20,000.

A number average molecular weight (Mn) of the crystalline polyester resin C is preferably from 1,000 through 10,000, and more preferably from 2,000 through 10,000.

A ratio (Mw/Mn) of the weight average molecular weight (Mw) of the crystalline polyester resin C to the number average molecular weight (Mn) of the crystalline polyester resin C is preferably from 1.0 through 10, and more preferably from 1.0 through 5.0.

An acid value of the crystalline polyester resin C is not particularly limited, and may be appropriately selected in accordance with the intended purpose. For achieving desirable low-temperature fixability considering affinity between a recording medium and the resin particles, the lower limit of the acid value of the crystalline polyester resin C is preferably 5 mgKOH/g or greater, and more preferably 10 mgKOH/g or greater. For improving hot offset resistance, the upper limit of the acid value of the crystalline polyester resin C is preferably 45 mgKOH/g or less.

The acid value of the crystalline polyester resin C may be measured according to the measuring method disclosed in JIS K0070-1992.

A hydroxyl value of the crystalline polyester resin C is not particularly limited, and may be appropriately selected in accordance with the intended purpose. To achieve desirable low-temperature fixability and excellent charging properties, the hydroxyl value of the crystalline polyester resin C is preferably 0 mgKOH/g or greater and 50 mgKOH/g or less, and more preferably 5 mgKOH/g or greater and 10 mgKOH/g or less.

The hydroxyl value of the crystalline polyester resin C may be measured according to the measuring method disclosed in JIS K0070-1966.

A molecular structure of the crystalline polyester resin C can be confirmed by solution or solid nuclear magnetic resonance spectroscopy (NMR), X-ray diffraction spectroscopy, gas chromatography-mass spectrometry (GC-MS), liquid chromatography-mass spectrometry (LC-MS), or infrared (IR) spectroscopy. Among the above-listed measuring methods, the measuring method used may be a method where a compound having absorption, which is based on $\delta$CH (out of plane bending) of an olefin, at $965 \pm 10$ cm$^{-1}$ and $990 \pm 10$ cm$^{-1}$ on an infrared absorption spectrum of the compound as measured by IR spectroscopy is detected as the crystalline polyester resin C.

An amount of the crystalline polyester resin C in the resin particles is not particularly limited, and may be appropriately selected in accordance with the intended purpose. The amount of the crystalline polyester resin C is preferably from 3 parts by mass through 20 parts by mass, and more preferably from 5 parts by mass through 15 parts by mass, relative to 100 parts by mass of the resin particles. When the amount of the crystalline polyester resin C in the resin particles is 3 parts by mass or greater, sharp melt properties of the crystalline polyester resin C improve, consequently improving low-temperature fixability. When the amount of the crystalline polyester resin C in the resin particles is 20 parts by mass or less, desirable heat-resistant storage stability is assured, and occurrences of image fogging are minimized. The inclusion of the crystalline polyester resin C in the resin particles in an amount within the above-mentioned more preferable range is advantageous because both high image quality and excellent low-temperature fixability are achieved.

An average major axis of grains of the crystalline resin is not particularly limited, and may be appropriately selected in accordance with the intended purpose. The average major axis of the grains of the crystalline resin is preferably 500 nm or less, and more preferably 300 nm or less. When the average major axis of the grains of the crystalline resin is 500 nm or less, the crystalline resin is desirably located inside each of resulting resin particles without exposing to a surface of each of the resin particles, consequently improving filming resistance.

An average aspect ratio of grains of the crystalline resin is not particularly limited, and may be appropriately selected in accordance with the intended purpose. The average aspect ratio of the grains of the crystalline resin is preferably 4.0 or greater, and more preferably 10.0 or greater. When the average aspect ratio of the grains of the crystalline resin is 4.0 or greater, a contact area between the crystalline resin and the amorphous polyester resin increases to improve compatibility between the crystalline resin and the amorphous polyester resin during fixing, consequently improving low-temperature fixability.

The average major axis and average aspect ratio of the grains of the crystalline resin in each of the resin particles may be measured in the following manner.

The resin particles are embedded in an epoxy resin (DEVCON S-31, available from ITW PP&F JAPAN Co., LTD.), and the epoxy resin is sliced into a cut piece having a thickness of 60 nm by an ultrasonic ultramicrotome (Leica EM UC7, available from Leica Microsystems). The cut piece is dyed with ruthenium (RuO$_4$ dyeing) by means of a vacuum electron staining apparatus (available from Filgen Inc.). Then, cross-sections of the resin particles are observed under a transmission electron microscope (H-7500, available from Hitachi High-Tech Corporation) at acceleration voltage of 120 kV. For the observation, 50 resin particles are randomly selected to be observed from the resin particles having the diameters within the range of the volume average particle diameter of the toner ± 2.0 μm. Owing to the structure of each of the resin particles of the present disclosure, as described earlier, the crystalline resin in each of the resin particles appears dark as the resin particles are dyed with $RuO_4$. The average major axis and average aspect ratio of the grains of the crystalline resin can be measured from the observed image, but may be calculated optionally using image processing software.

As the image processing software, Image-Pro Plus 5.1 may be used. A method of calculating the average major axis and average aspect ratio of grains of the crystalline resin using Image-Pro Plus 5.1 is as follows.

(1) A cross-sectional image of the resin particles captured in the above-described method is used. In order to extract resin particles to be analyzed, first, the resin particle sections are selected to separate the resin particles from the background.

(2) A "Count/size" icon is selected from a "Measurement" menu on Image-Pro Plus 5.1. On the window of "Count/size," a "Measuring items" icon is selected from a "Measurement" tab. From the "Measurement items," "Diameter (min)" and "Diameter (max)" are selected. With "Selection of brightness range," a brightness range is adjusted so that only the grains of the crystalline polyester resin C of the resin particle selected as an analysis target in (1) are to be selected. Depending on the conditions of $RuO_4$ dyeing, the brightness range may be changed in accordance with the conditions, but the grains of the crystalline resin are easily distinguished with the above-described difference in the darkness. Then, a "Count" ion is clicked to display the measurement results.

(3) "Diameter (max)" obtained in (2) is determined as a major axis of a grain of the crystalline resin. Moreover, an aspect ratio (major axis/minor axis) of the grain of the crystalline resin is determined with determining "Diameter (min)" obtained in (2) as a minor axis, and "Diameter (max)" obtained in (2) as a major axis.

(4) Among the data of the major axes and aspect ratios of the grains of the crystalline resin in one resin particle obtained in (1) to (3), an average of the 10 values is calculated. The 10 values are selected in order from the value having the largest "Diameter (max)."

(5) The processes of (1) to (4) are performed on 50 resin particles to calculate an average major axis and average aspect ratio of the grains of the crystalline resin of the 50 resin particles. The obtained values are determined as the average major axis and average aspect ratio of the grains of the crystalline resin of the resin particles.

When the amorphous polyester resin A, the amorphous polyester resin B, and the crystalline polyester resin C are used in combination, resulting resin particles have excellent low-temperature fixability.

For achieving both low-temperature fixability and storage stability under high temperature and high humidity conditions, the amorphous polyester resin A preferably has a very low glass transition temperature. When a glass transition temperature of the amorphous polyester resin A is very low, the amorphous polyester resin A deforms at a low temperature, and deforms by heat and pressure applied during fixing. Therefore, the resin particles including the amorphous polyester resin A easily adhere to a recording medium, such as paper, at a temperature lower than a typical fixing temperature. In one embodiment of the amorphous polyester resin A, the reactive precursor has a non-linear structure. Therefore, the amorphous polyester resin A has a branched-chain structure in a molecular skeleton, and a molecular chain of the amorphous polyester resin A forms a three-dimensional network structure. The three-dimensional network structure imparts rubber-like characteristics to resulting resin particles. The rubber-like characteristics are characteristics whereby the resin particles deform at a low temperature but do not flow. Even if a glass transition temperature of the resin particles is set lower than a glass transition temperature of a typical toner known in the art, therefore, a toner including the resin particles can assure heat-resistant storage stability and hot offset resistance, and has excellent low-temperature fixability owing to the low glass transition temperature of the resin particles.

When the amorphous polyester resin A includes a urethane bond or urea bond having high cohesive energy, resulting resin particles achieve excellent adhesion to a recording medium, such as paper. Moreover, the urethane bond or urea bond behaves like a pseudo cross-linking point to enhance the rubber-like characteristics, consequently, improving heat-resistant storage stability and hot offset resistance of a toner including the resin particles.

<Other components>

Other components of the resin particles are not particularly limited, and may be appropriately selected in accordance with the intended purpose. Examples of the above-mentioned other components include a colorant, a release agent, a charge-control agent, a flowability improving agent, a cleaning improving agent, a magnetic material, and a shape-modifying agent. The above-listed examples may be used alone or in combination.

«Colorant»

The colorant is not particularly limited, and may be appropriately selected in accordance with the intended purpose. Examples of the colorant include carbon black, a nigrosine dye, iron black, naphthol yellow S, Hansa yellow (10G, 5G, G), cadmium yellow, yellow iron oxide, yellow ocher, yellow lead, titanium yellow, polyazo yellow, oil yellow, Hansa yellow (GR, A, RN, R), pigment yellow L, benzidine yellow (G, GR), permanent yellow (NCG), Vulcan fast yellow (5G, R), tartrazine lake, quinoline yellow lake, anthrasan yellow BGL, isoindolinon yellow, red iron oxide, red lead, lead vermilion, cadmium red, cadmium mercury red, antimony vermilion, permanent red 4R, parared, fiser red, parachloroorthonitro aniline red, lithol fast scarlet G, brilliant fast scarlet, brilliant carmine BS, permanent red (F2R, F4R, FRL, FRLL and F4RH), fast scarlet VD, vulcan fast rubin B, brilliant scarlet G, lithol rubin GX, permanent red F5R, brilliant carmine 6B, pigment scarlet 3B, Bordeaux 5B, toluidine Maroon, permanent Bordeaux F2K, Helio Bordeaux BL, Bordeaux 10B, BON maroon light, BON maroon medium, eosin lake, rhodamine lake B, rhodamine lake Y, alizarin lake, thioindigo red B, thioindigo maroon, oil red, quinacridone red, pyrazolone red, polyazo red, chrome vermilion, benzidine orange, perinone orange, oil orange, cobalt blue, cerulean blue, alkali blue lake, peacock blue lake, Victoria blue lake, metal-free phthalocyanine blue, phthalocyanine blue, fast sky blue, indanthrene blue (RS and BC), indigo, ultramarine, iron blue, anthraquinone blue, fast violet B, methyl violet lake, cobalt purple, manganese violet, dioxane violet, anthraquinone violet, chrome green, zinc green, chromium oxide, viridian, emerald green, pigment green B, naphthol green B, green gold, acid green lake, malachite green lake, phthalocyanine green, anthraquinone green, titanium oxide, zinc flower, and lithopone. The above-listed examples may be used alone or in combination.

An amount of the colorant in the resin particles is not particularly limited, and may be appropriately selected in accordance with the intended purpose. The amount of the colorant is preferably from 1 part by mass through 15 parts by mass, and more preferably from 3 parts by mass through 10 parts by mass, relative to 100 parts by mass of the resin particles.

The colorant may be also used as a master batch in which the colorant forms a composite with a resin.

The resin used for producing the master batch or the resin kneaded with the master batch is not particularly limited, and may be appropriately selected in accordance with the intended purpose. Examples of the resin include, as well as the amorphous polyester resins, polymers of styrene or substituted styrene, styrene-based copolymers, polymethyl methacrylate, polybutyl methacrylate, polyvinyl chloride, polyvinyl acetate, polyethylene, polypropylene, polyester, an epoxy resin, an epoxypolyol resin, polyurethane, polyamide, polyvinyl butyral, a polyacrylic acid resin, rosin, modified rosin, a terpene resin, an aliphatic or alicyclic hydrocarbon resin, an aromatic petroleum resin, chlorinated paraffin, and paraffin wax. The above-listed examples may be used alone or in combination.

Examples of the polymer of styrene or substituted styrene include polystyrene, poly(p-chlorostyrene), and polyvinyl toluene.

Examples of the styrene-based copolymer include a styrene-p-chlorostyrene copolymer, a styrene-propylene copolymer, a styrene-vinyl toluene copolymer, a styrene-vinyl naphthalene copolymer, a styrene-methyl acrylate copolymer, a styrene-ethyl acrylate copolymer, a styrene-butyl acrylate copolymer, a styrene-octyl acrylate copolymer, a styrene-methyl methacrylate copolymer, a styrene-ethyl methacrylate copolymer, a styrene-butyl methacrylate copoly-mer, a styrene-methyl $\alpha$-chloromethacrylate copolymer, a styrene-acrylonitrile copolymer, a styrene-methyl vinyl ketone copolymer, a styrene-butadiene copolymer, a styrene-isoprene copolymer, a styrene-acrylonitrile-indene copolymer, a styrene-maleic acid copolymer, and a styrene-maleic acid ester copolymer.

A production method of the master batch is not particularly limited, and may be appropriately selected in accordance with the intended purpose. Examples of the production method include a method where a high shearing force is applied to mix and knead the resin for the master batch and the colorant. During the mixing and kneading, an organic solvent may be used to enhance interaction between the colorant and the resin. Moreover, a flashing method is preferably used. The flashing method is a method where an aqueous paste including a colorant and water is mixed and kneaded with a resin and an organic solvent to transfer the colorant to the side of the resin, followed by removing the water and the organic solvent. According to the flashing method, a wet cake of the colorant can be used as it is, thus it is not necessary to dry the colorant. A high-shearing disperser, such as a three-roll mill, is preferably used for the mixing and kneading.

«Release agent»

The release agent is not particularly limited, and may be appropriately selected from release agents known in the art. Examples of the release agent include wax, fatty acid amides, homopolymers or copolymers of polyacrylate, and crystalline polymers each having a long alkyl group at a side chain. The above-listed examples may be used alone or in combination.

Examples of the wax include natural wax, synthetic hydrocarbon wax, and synthetic wax.

Examples of the natural wax include vegetable wax, animal wax, mineral wax, and petroleum wax.

Examples of the vegetable wax include carnauba wax, cotton wax, and Japanese wax.

Examples of the animal wax include bees wax and lanoline wax.

Examples of the mineral wax include ozokerite and ceresin.

Examples of the petroleum wax include paraffin wax, microcrystalline wax, and petrolatum wax.

Examples of the synthetic hydrocarbon wax include Fischer-Tropsch wax and polyethylene wax.

Examples of the synthetic wax include esters, ketones, and ethers.

Examples of the fatty acid amides include 12-hydroxystearic acid amide, stearic acid amide, phthalimide, and chlorinated hydrocarbons.

Examples of the polyacrylate include low-molecular-weight crystalline polymer resins, such as poly-n-stearyl methacrylate and poly-n-lauryl methacrylate.

Examples of the homopolymers or copolymers of the polyacrylate include copolymers, such as a n-stearyl acrylate-ethyl methacrylate copolymer.

Among the above-listed examples, the release agent is preferably vegetable wax or ester wax using a plant-derived material. Since the release agent is derived from a plant, carbon neutrality of resulting resin particles improves.

A melting point of the release agent is not particularly limited, and may be appropriately selected in accordance with the intended purpose. The melting point of the release agent is preferably 60°C or higher and 80°C or lower. When the melting point of the release agent is 60°C or higher, the release agent does not melt at a low temperature, consequently assuring heat-resistant storage stability of resulting resin particles. When the melting point of the release agent is 80°C or lower, in the case where the resin is melted at a fixing temperature region, the release agent is sufficiently melted so that fixing offset does not occur, consequently minimizing image defects.

An amount of the release agent in the resin particles is not particularly limited, and may be appropriately selected in accordance with the intended purpose. The amount of the release agent is preferably 2 parts by mass or greater and 10 parts by mass or less, and more preferably 3 parts by mass or greater and 8 parts by mass or less, relative to 100 parts by mass of the resin particles. When the amount of the release agent is 2 parts by mass or greater, desirable hot offset resistance during fixing and desirable low-temperature fixability are assured. When the amount of the release agent is 10 parts by mass or less, desirable heat-resistant storage stability is assured, and occurrences of image fogging are minimized. The inclusion of the release agent in an amount within the above-mentioned more preferable range is advantageous because high image quality and excellent fixing stability are achieved.

In the similar manner with the crystalline resin, the release agent is preferably encapsulated in each of the resin particles. Moreover, the abundance of the release agent in a region from an outermost surface of each of the resin particles to a depth of 150 nm from the outermost surface is preferably small, considering improvement in filming resistance.

<<Charge-control agent>>

The charge-control agent is not particularly limited, and may be appropriately selected in accordance with the intended purpose. Examples of the charge-control agent include a nigrosine-based dye, a triphenylmethane-based dye, a chrome-containing metal complex dye, a molybdic acid chelate pigment, a rhodamine-based dye, an alkoxy-based amine, a quaternary ammonium salt (including a fluorine-modified quaternary ammonium salt), an alkylamide, phosphorus or a phosphorus compound, a fluorine-based active agent, a metal salt of salicylic acid, a metal salt of a salicylic acid derivative, an oxynaphthoic acid metal salt, a phenol-based condensate, an azo-pigment, a boron complex, and a functional group (e.g., a sulfonic acid group, a carboxyl group, and a quaternary ammonium salt)-containing polymer-based compound. The above-listed examples may be used alone or in combination.

Specific examples of the charge-control agent include: a nigrosine dye BONTRON 03, a quaternary ammonium salt BONTRON P-51, a metal-containing azo dye BONTRON S-34, an oxynaphthoic acid-based metal complex E-82, a salicylic acid-based metal complex E-84, and a phenol condensate E-89 (all manufactured by ORIENT CHEMICAL INDUSTRIES CO., LTD); a quaternary ammonium salt molybdenum complex TP-302 and TP-415 (all manufactured by Hodogaya Chemical Co., Ltd.); LRA-901 and a boron complex LR-147 (manufactured by Japan Carlit Co., Ltd.); copper phthalocyanine; perylene; quinacridone; and an azo-pigment.

An amount of the charge-control agent is not particularly limited, and may be appropriately selected in accordance with the intended purpose. The amount of the charge-control agent is preferably 0.1 parts by mass or greater and 10 parts by mass or less, and more preferably 0.2 parts by mass or greater and 5 parts by mass or less, relative to 100 parts by mass of the resin particles. When the amount of the charge-control agent is 10 parts by mass or less relative to 100 parts by mass of the resin particles, desirable chargeability is imparted to a toner including resulting resin particles, and the desired chargeability assures a main effect as the charge-control agent. As a result, appropriate electrostatic suction force between the toner and a developing roller is maintained, and desirable flowability of a developer including the toner and desirable image density are assured. The charge-control agent may be melt-kneaded with a master batch or resin, followed by dissolving or dispersing the resulting mixture in an organic solvent, or may be directly added to an organic solvent when the master batch or resin is dissolved or dispersed in the organic solvent. Alternatively, the charge-control agent may be fixed on surfaces of resin particles after producing the resin particles.

<<Flowability improving agent>>

The flowability improving agent is not particularly limited, provided that the flowability improving agent is an agent used to perform a surface treatment to increase hydrophobicity to prevent degradation of flowability and charging properties even under high humidity conditions. The flowability improving agent may be appropriately selected in accordance with the intended purpose. Examples of the flowability improving agent include a silane coupling agent, a silylating agent, a fluoroalkyl group-containing silane coupling agent, an organic titanate-based coupling agent, an aluminum-based coupling agent, silicone oil, and modified silicone oil. The above-listed examples may be used alone or in combination.

An amount of the flowability improving agent is not particularly limited, and may be appropriately selected in accordance with the intended purpose. The amount of the flowability improving agent is preferably 0.01 parts by mass or greater and 5.00 parts by mass or less, and more preferably 0.10 parts by mass or greater and 2.00 parts by mass or less, relative to 100 parts by mass of the resin particles.

«Cleaning improving agent»

The cleaning improving agent is an agent added to the resin particles for aiding removal of a residual developer from a photoconductor or a primary transfer member after transferring. The cleaning improving agent is not particularly limited, and may be appropriately selected in accordance with the intended purpose. Examples of the cleaning improving agent include a fatty acid metal salt and polymer particles. The above-listed examples may be used alone or in combination.

Examples of the fatty acid metal salt include zinc stearate, calcium stearate, and stearic acid.

The polymer particles are preferably polymer particles produced through soap-free emulsion polymerization. Examples of the polymer particles include polymethyl methacrylate particles and polystyrene particles.

A volume average particle diameter of the polymer particles is not particularly limited, and may be appropriately selected in accordance with the intended purpose. The polymer particles have a relatively narrow particle size distribution. The volume average particle diameter of the polymer particles is preferably from 0.01 $\mu$m through 1 $\mu$m.

An amount of the cleaning improving agent is not particularly limited, and may be appropriately selected in accordance with the intended purpose. The amount of the cleaning improving agent is preferably 0.01 parts by mass or greater and 5.00 parts by mass or less, and more preferably 0.10 parts by mass or greater and 2.00 parts by mass or less, relative to 100 parts by mass of the resin particles.

<<Magnetic material>>

The magnetic material is not particularly limited, and may be appropriately selected in accordance with the intended purpose. Examples of the magnetic material include iron powder, magnetite, and ferrite. The above-listed examples may be used alone or in combination. Among the above-listed examples, the magnetic material is preferably a white magnetic material in view of a color tone.

An amount of the magnetic material is not particularly limited, and may be appropriately selected in accordance with the intended purpose. The amount of the magnetic material is preferably 20 parts by mass or greater and 200 parts by mass or less, and more preferably 40 parts by mass or greater and 150 parts by mass or less, relative to 100 parts by mass of the resin particles.

<<<Shape-modifying agent>>>

The shape-modifying agent is added for modifying shapes of the resin particles.

The shape-modifying agent is not particularly limited, and may be appropriately selected in accordance with the intended purpose. The shape-modifying agent preferably include a layered inorganic mineral, in which at least some of ions present between layers of the inorganic mineral are modified with organic ions.

The layered inorganic mineral, in which at least some of ions present between layers of the inorganic mineral are modified with organic ions, is not particularly limited, and may be appropriately selected in accordance with the intended purpose. Examples of the layered inorganic mineral include a layered inorganic mineral that has a smectite-based basic crystal structure and is modified with organic cations. Within a structure of smectite clay minerals, layered are negatively charged, and cations are present between the layers to compensate the negative charge of the layers. An interlayer compound may be formed through ion exchange of the cations or adsorption of polar molecules. Moreover, metal ions can be introduced by substituting some of divalent metals of the layered inorganic mineral with trivalent metals. Since hydrophilicity increases through introduction of metal anions, a layered inorganic compound, in which at least some of the metal anions are modified with organic anions, is preferable.

The layered inorganic mineral, in which at least some of the ions present between layers of the layered inorganic mineral are modified with organic ions, is obtained using an organic-cation modifier or an organic-anion modifier.

The organic-cation modifier is not particularly limited, provided that the organic-cation modifier is capable of modifying the layered inorganic mineral with organic ions in the manner as described above. Examples of the organic-cation modifier include a quaternary alkyl ammonium salt, a phosphonium salt, and an imidazolium salt. The above-listed examples may be used alone or in combination. Among the above-listed examples, the organic-cation modifier is preferably a quaternary alkyl ammonium salt.

A quaternary alkyl ammonium of the quaternary alkyl ammonium salt is not particularly limited. Examples of the quaternary alkyl ammonium include trimethylstearylammonium, dimethylstearylbenzylammonium, and oleylbis(2-hydroxyethyl)methylammonium.

The organic-anion modifier is not particularly limited, provided that the organic anion modifier can modify a layered inorganic mineral with organic ions in the above-described manner. Examples of the organic anion modifier include a sulfuric acid salt, sulfonic acid salt, carboxylic acid salt, and phosphoric acid salt, each having a C1-C44 branched, non-unbranched, or cyclic alkyl group, a C1-C22 branched, non-branched, or cyclic alkenyl group, a C8-C32 branched, non-branched, or cyclic alkoxy group, a C2-C22 branched, non-branched, or cyclic hydroxyalkyl group, an ethylene oxide skeleton, or a propylene oxide skeleton. The above-listed examples may be used alone or in combination. Among the above-listed examples, the organic-anion modifier is preferably a carboxylic acid salt having an ethylene oxide skeleton.

In the case where the resin particles are produced as described in the section of (Method of producing resin particles), the shape-modifying agent is preferably added during <a> Formation of oil phase> described below.

Since at least some of the ions present between layers of the layered inorganic mineral are modified with organic ions, the layered inorganic mineral has appropriate hydrophobicity. As the layered inorganic mineral is added, therefore, the oil phase including constituent materials of the resin particles has non-Newtonian viscosity, consequently deforming the oil droplets that will be formed into resin particles. An amount of the shape-modifying agent in the constituent materials of the resin particles is preferably from 0.05% by mass through 10% by mass, and more preferably from 0.05% by mass through 5% by mass, relative to a total amount of the constituent materials of the resin particles.

The layered inorganic mineral is not particularly limited, and may be appropriately selected in accordance with the intended purpose. Examples of the layered inorganic mineral include montmorillonite, bentonite, hectorite, attapulgite, sepiolite, and a mixture of any combination of the foregoing minerals.

Among the above-listed examples, the layered inorganic mineral, in which at least some of ions present between layers of the layered inorganic mineral are modified with organic ions, is preferably organic-modified montmorillonite or organic-modified bentonite because, when the resin particles are used as a toner, viscosity is easily controlled without adversely affecting properties of a resulting toner, and a small amount of the layered inorganic mineral added is adequate to exhibit an effect of the layered inorganic mineral.

Examples of the modified layered inorganic mineral, in which at least some of ions present between layers of the layered inorganic mineral with organic ions , include: quaternium-18 bentonite, such as Bentone 3 (available from ELEMENTIS PLC.), Bentone 38 (available from ELEMENTIS PLC.), Bentone 38V (available from ELEMENTIS PLC.), Tixogel VP (available from United catalyst), Claytone 34 (available from Southern Clay (ECKART)), Claytone 40 (available from Southern Clay (ECKART)), and Claytone XL (available from Southern Clay (ECKART)); stearalkonium bentonite, such as Bentone 27 (available from ELEMENTIS PLC.), Tixogel LG (available from United catalyst), Claytone AF (available from Southern Clay (ECKART)), and Claytone APA (available from Southern Clay (ECKART)); and quaternium-18/benzalkonium bentonite, such as Claytone HT (available from Southern Clay (ECKART)) and Claytone PS (available from Southern Clay (ECKART)). Among the above-listed examples, Claytone AF and Claytone APA are preferable.

Moreover, the layered inorganic mineral, in which at least some of ions present between layers of the layered inorganic mineral are modified with organic ions, is preferably DHT-4A (available from Kyowa Chemical Industry Co., Ltd.) that is modified with an organic-anion modifier represented by General Formula (I) below. Examples of the organic-anion modifier represented by General Formula (I) include HITENOL 330T (available from DKS Co., Ltd.).

[General Formula (I)] $\qquad$ $R_1(OR_2)_nOSO_3M$

In General Formula (I), $R_1$ is a C13 alkyl group, $R_2$ is a C2-C6 alkylene group, n is an integer of from 2 through 10, and M is a monovalent metal element.

<<Core-shell structure>>

Each of the resin particles may have a core-shell structure.

In the present specification "a core-shell structure" means a structure including a core layer and a shell layer. The "shell layer" means a layer that is formed of a resin and is disposed as an outermost layer of each resin particle. The "core layer" means a region inside each resin particle excluding the shell layer.

The core layer and the shell layer are not completely compatible inside each resin particle, and are not homogeneously distributed.

As a preferable embodiment of the core-shell structure, the core-shell structure is a structure where a surface of the core layer is covered with the shell layer.

In the core-shell structure, the surface of the core layer may be completely covered with the shell layer, or may not be completely covered with the shell layer. Examples of the embodiment of the resin particles where the surface of the core layer is not completely covered with the shell layer include: an embodiment where a core layer is covered with a net-like shell layer; and an embodiment where a core layer is partially exposed from a shell layer. Among the above-listed examples, the surface of the core layer is preferably completely covered with the shell layer considering filming resistance.

-Shell resin-

A shell resin constituting the shell layer is not particularly limited, and may be appropriately selected in accordance with the intended purpose. The shell resin is preferably a resin free from the crystalline resin, more preferably the amorphous resin, and particularly preferably the amorphous polyester resin B.

As described earlier, the shell resin may be a resin obtained through polycondensation between a multivalent alcohol and a multivalent carboxylic acid. The shell resin may be a resin including the biomass-derived resin or a resin free from the biomass-derived resin. The shell resin is preferably a resin free from an aliphatic hydrocarbon considering filming resistance.

A method of confirming that the shell layer is free from the aliphatic hydrocarbon is not particularly limited, and may be appropriately selected in accordance with the intended purpose. Examples of the method include a method where a composition of the shell layer is confirmed through a composition analysis of a surface layer (i.e., the shell layer) using nanoIR (also referred to as "AMF-IR").

An IR spectrum of the surface layer (i.e., the shell layer) of each of the resin particles is acquired according to an analysis method using a combination of an atomic force microscope (AFM) of nanoIR and IR to achieve nanoscale resolution. A composition structure of the surface layer can be determined from the acquired IR spectrum.

Specifically, the composition analysis may be performed in the following manner. The resin particles are embedded in an epoxy resin (DEVCON S-31, available from ITW PP&F JAPAN Co., LTD.), and the epoxy resin is cured. The cured epoxy resin is cut with a knife to expose cross-sections of the resin particles, and the resulting epoxy resin is sliced into a thickness of 60 nm by means of an ultrasonic ultramicrotome (Leica EM UC7, available from Leica Microsystems) to prepare an ultra-thin cut piece of the resin particles. The prepared ultra-thin cut piece of the resin particles is collected on a substrate (ZnS), and a measuring point (i.e., the shell layer) is measured by means of a nanoscale infrared spectrometer (e.g., nanoIR2, available from Anasys Instruments Corp.) according to AFM-IR. A measuring range is set to from 1,900 $cm^{-1}$ through 910 $cm^{-1}$, and resolution is set to 2 $cm^{-1}$. From the obtained an AFM-IR absorption spectrum, a chemical structure of the measuring point (i.e., the shell layer) is determined. As a result of the above-described analysis, the presence or absence of an aliphatic hydrocarbon is present in the surface layer (i.e., the shell layer) is identified.

Moreover, a chemical structure of the core layer may be also determined by setting the core layer as the measuring point.

An average thickness of the shell layer is not particularly limited, and may be appropriately selected in accordance with the intended purpose. The average thickness of the shell layer is preferably from 50 nm through 500 nm, and more preferably from 100 nm through 200 nm. When the average thickness of the shell layer is 50 nm or greater, the core layer present inside each of the resin particles is protected, consequently improving resistance of the resin particles against mechanical force externally applied to the resin particles. When the average thickness of the shell layer is 500 nm or less, adequate resistance against the externally applied mechanical force is maintained without impairing low-temperature fixability.

In the present specification, "the average thickness of the shell layer" is an average layer determined in the following manner. Among the resin particles having diameters within a range of a weight average particle diameter of the resin particles ± 2.0 μm, 50 resin particles are randomly selected. A thickness of a shell layer of each of the selected 50 resin particles is measured. An average of the values obtained by measuring the 50 resin particles is calculated and determined as the average thickness of the shell layer.

A coverage rate of the surface of the core layer with the shell layer is not particularly limited, and may be appropriately selected in accordance with the intended purpose. The coverage rate is preferably from 50% through 100%, and more preferably from 80% through 100%. The coverage rate being 100% means that the entire surface of the core layer of each of the resin particles is covered with the shell layer.

The coverage rate (%) of the surface of the core layer with the shell layer may be calculated according to Formula (3) below.

```
[Formula (3)]
Coverage rate (%) = (area of covered region)/(entire surface area
of resin particle) × 100
```

In Formula (3) above, the "entire surface area of resin particle" means a sum of the area of the covered region and an area of a region where the core layer is exposed; the "area of covered region" means an area of a region or regions of the core layer covered with the shell layer; the "area of a region where the core layer is exposed" is an area of a region or regions where the core layer is not covered with the shell layer.

A method of confirming the core-shell structure of the resin particles is not particularly limited, and may be appropriately selected in accordance with the intended purpose. For example, the core-shell structure of the resin particles may be confirmed in the following manner. The resin particles are embedded in an epoxy resin (DEVCON S-31, available from ITW PP&F JAPAN Co., LTD.), and the epoxy resin is cured. The cured epoxy resin is cut with a knife to expose cross-sections of the resin particles, and the resulting epoxy resin is sliced into a thickness of 60 nm by means of an ultrasonic ultramicrotome (Leica EM UC7, available from Leica Microsystems) to prepare an ultra-thin cut piece of the resin particle. The prepared ultra-thin cut piece of the resin particles is exposed to a ruthenium tetroxide ($RuO_4$) gas to dye the resin particles to identify shells and cores. The gas exposure time may be appropriately adjusted according to a desired contrast for observation. Then, the cross-sectional image of the resin particles is observed under a transmission electron microscope (H-7500, available from Hitachi High-Tech Corporation) at acceleration voltage of 120 kV to confirm the presence of the core-shell structure.

On the TEM image observed in the above-described method, the covered region of the core layer at a surface of each of the resin particles (a region of the core layer covered with the shell layer within the resin particle), and the exposed region of the core layer (a region of the core layer without being covered with the shell layer within the resin particle) may be distinguished according to a difference in brightness. Therefore, the TEM image observed in the above-described method is binarized using image processing software, and a shell layer is identified with a contrast in the binarized image to measure a thickness of the shell layer.

As the image processing software, Image-J may be used. A calculation method of an average thickness of the shell layer using Image-J is as described below.

(1) A scale is traced using a "Straight Line" function to draw a straight line. An actual length and unit of the straight line are set using a "Set Scale" function on an "Analyze" window.

(2) A periphery of one resin particle is traced with the "Freehand-sections" function on a cross-sectional image of the one resin particle to set "Region 1."

(3) A periphery of a region of the cross-sectional image of the one resin particle excluding the shell layer (i.e., a boundary between the shell layer and the core layer) is traced with the "Freehand-sections" function to set "Region 2."

(4) A center of gravity of the "Region 1" is determined with an "Analyze" function.

(5) Using the originally developed plug-in, straight lines are drawn from coordinates towards the center of gravity of the resin particle determined in (4). The coordinates are created by evenly dividing the line tracing the periphery of the "Region 1", i.e., the periphery of the resin particle in (2), into 100.

(6) On each of the 100 straight lines drawn in (5), a length obtained by subtracting the length of the straight line passing through "Region 2" from the length of the straight line passing through "Region 1" is calculated using the straight line created by tracing the scale in (1). An average length of the calculated lengths from the 100 straight lines is determined as a thickness of the shell layer of the resin particle.

(7) The operations of (2) to (6) are performed on 50 resin particles, and an average of the thicknesses of the shell layers of the 50 resin particles is calculated. The calculated average is determined as an average thickness of the shell layer in the resin particles of the present disclosure.

Moreover, a calculation method of a coverage rate with the shell layer using Image-J is as follows.

(1) A section of a periphery of one resin particle covered with a shell layer on a cross-sectional image of the one resin particle is traced with a "Freehand Line" function, and a length of the traced line is measured by an "Analyze" function. The measured length is determined as "Length 1."

(2) The periphery of the resin particle on the cross-sectional image of the resin particle is traced with the "Freehand Line" function, and a length of the traced line is measured by the "Analyze" function. The measured length is determined as "Length 2."

(3) A value of Length 1/Length 2 × 100 is calculated. The calculated value is determined as a coverage rate of the resin particle with the shell layer.

(4) The operations of (1) to (3) are performed on 50 resin particles, and an average of the coverage rates of the 50 resin particles with the shell layers. The average is determined as a coverage rate with the shell layer in the resin particles of the present disclosure.

<Volume average particle diameter>

A volume average particle diameter (D4) of the resin particles is not particularly limited, and may be appropriately selected in accordance with the intended purpose. The volume average particle diameter (D4) of the resin particles is preferably 3 $\mu$m or greater and 7 $\mu$m or less.

Moreover, a ratio (D4/Dn) of the volume average particle diameter (D4) of the resin particles to a number average particle diameter (Dn) of the resin particles is not particularly limited, and may be appropriately selected in accordance with the intended purpose. The ratio (D4/Dn) is preferably 1.2 or less.

Furthermore, the resin particles preferably include a resin particle component having a volume average particle diameter of 2 $\mu$m or less in an amount of 1% by number or greater and 10% by number or less.

The volume average particle diameter (D4), number average particle diameter (Dn), and ratio (D4/Dn) of the resin particles may be measured, for example, by means of COULTER COUNTER TA-II or COULTER MULTISIZER II (both available from Beckman Coulter, Inc.). In the present specification, the volume average particle diameter (D4), number average particle diameter (Dn), and ratio (D4/Dn) are values measured by means of COULTER MULTISIZER II. A measuring method of the volume average particle diameter (D4), number average particle diameter (Dn), and ratio (D4/Dn) will be described hereinafter.

First, from 0.1 mL through 5 mL of a surfactant (preferably a nonionic surfactant, polyoxyethylene alkyl ether) serving as a dispersing agent is added to from 100 mL through 150 mL of an aqueous electrolyte solution to prepare a mixed solution. To the mixed solution, from 2 mg through 20 mg of a sample is added. The aqueous electrolyte solution, in which the sample has been suspended, is dispersed for from approximately 1 minute through approximately 3 minutes by means of an ultrasonic disperser, and the volume and number of the resin particles are measured by means of the measuring device (COULTER MULTISIZER II) using a 100 $\mu$m-aperture as an aperture to calculate a volume distribution and number distribution of the resin particles. A volume average particle diameter (D4) and number average particle diameter (Dn) of the resin particles are determined from the obtained distributions.

The aqueous electrolyte solution is prepared as a 1% by mass sodium chlorate aqueous solution using sodium chloride (first grade). For example, ISOTON-II (available from Beckman Coulter, Inc.) may be used as the aqueous electrolyte solution.

Used as channels are 13 channels: 2.00 $\mu$m or greater and less than 2.52 $\mu$m; 2.52 $\mu$m or greater and less than 3.17 $\mu$m; 3.17 $\mu$m or greater and less than 4.00 $\mu$m; 4.00 $\mu$m or greater and less than 5.04 $\mu$m; 5.04 $\mu$m or greater and less than 6.35 $\mu$m; 6.35 $\mu$m or greater and less than 8.00 $\mu$m; 8.00 $\mu$m or greater and less than 10.08 $\mu$m; 10.08 $\mu$m or greater and less than 12.70 $\mu$m; 12.70 $\mu$m or greater and less than 16.00 $\mu$m; 16.00 $\mu$m or greater and less than 20.20 $\mu$m; 20.20 $\mu$m or greater and less than 25.40 $\mu$m; 25.40 $\mu$m or greater and less than 32.00 $\mu$m; and 32.00 $\mu$m or greater and less than 40.30 $\mu$m. The particles having particle diameters of 2.00 $\mu$m or greater and less than 40.30 $\mu$m are the target for the measurement.

<Glass transition temperature (Tg) and melting point (Tm)>

<<Measuring method of glass transition temperature (Tg) and melting point (Tm)>>

In the present specification, a glass transition temperature (Tg) and a melting point (Tm) may be measured, for example, by means of a DSC system (Q-200, a differential scanning calorimeter, available from TA Instruments Japan Inc.).

Specifically, a glass transition temperature (Tg) and melting point (Tm) of a sample can be measured in the following manner.

First, approximately 5.0 mg of a sample is placed in a sample container formed of aluminum, the sample container is placed on a holder unit, and the holder unit is set in an electric furnace. Subsequently, the measurement sample is heated from -80°C to 150°C in a nitrogen atmosphere at a heating rate of 10 °C/min (first heating). Then, the measurement sample is cooled from 150°C down to -80°C at a cooling rate of 10 °C/min, followed by again heating up to 150°C at a heating rate of 10 °C/min (second heating). DSC curves of the first heating and the second heating are each measured by means of a differential scanning calorimeter (Q-200, available from TA Instruments Japan Inc.).

The DSC curve of the first heating is selected from the obtained DSC curves, and a glass transition temperature of the sample from the first heating may be determined using an analysis program installed in the Q-200 system. Similarly, the DSC curve of the second heating is selected from the obtained DSC curves, and a glass transition temperature of the sample from the second heating may be determined using the analysis program installed in the Q-200 system.

The DSC curve of the first heating is selected from the obtained DSC curves, and an endothermic peak top temperature of the sample from the first heating may be determined as a melting point using the analysis program installed in the Q-200 system. Similarly, the DSC curve of the second heating is selected from the obtained DSC curves, and an endothermic peak top temperature of the sample from the second heating may be determined as a melting point using the analysis program installed in the Q-200 system.

When the resin particles are used as a sample, in the present specification, a glass transition temperature of the sample from the first heating is determined as Tg1st, and a glass transition temperature of the sample from the second heating is determined as Tg2nd.

For a glass transition temperature and melting point of each of other constituent components, such as the amorphous polyester resin A, the amorphous polyester resin B, and the crystalline polyester resin C, an endothermic peak top temperature of each sample from the second heating is determined as a melting point, and Tg of each sample from the second heating is determined as Tg in the present specification, unless otherwise stated.

<<Tg1st (resin particles)>>

A glass transition temperature [Tg1st (resin particles)] of the resin particles from the first heating of differential scanning calorimetry (DSC) is not particularly limited, and may be appropriately selected in accordance with the intended purpose. Considering low-temperature fixability, the glass transition temperature [Tg1st (resin particles)] of the resin particles is preferably 20°C or higher and 50°C or lower, and more preferably 35°C or higher and 45°C or lower. When the glass transition temperature [Tg1st (resin particles)] is 20°C or higher, heat-resistant storage stability is assured, and occurrences of blocking inside a developing device and filming on a photoconductor are minimized. When the glass transition temperature [Tg1st (resin particles)] is 50°C or lower, desirable low-temperature fixability of resulting resin particles is assured.

Particles of a typical toner known in the art tend to aggregate due to temperature fluctuations occurred during transportation of a toner or in a storage environment especially during summer or in tropical regions, if a glass transition temperature (Tg) is approximately 50°C or lower. As a result, the toner particles are fixed inside a toner bottle, or adhered to an interior wall of a developing device. Moreover, a toner-supply failure may occur due to clogging of the toner bottle with the toner, and image defects may occur due to adhesion of the toner inside the developing device.

A toner including the resin particles can maintain heat-resistant storage stability even if a glass transition temperature (Tg) of the toner including the resin particles is lower than a glass transition temperature (Tg) of a typical toner known in the art, when the amorphous polyester resin A, which is a low Tg component in the resin particles, has a non-linear structure. Especially when the amorphous polyester resin A includes a urethane bond or urea bond having high cohesive force, an effect of retaining heat-resistant storage stability becomes more significant.

<<Tg2nd (resin particles)>>

A glass transition temperature [Tg2nd (resin particles)] of the resin particles from the second heating of differential scanning calorimetry (DSC) is not particularly limited, and may be appropriately selected in accordance with the intended purpose. The glass transition temperature [Tg2nd (resin particles)] of the resin particles is preferably 0°C or higher and 30°C or lower, and more preferably 0°C or higher and 15°C or lower. When the Tg2nd (resin particles) is 0°C or higher, adequate blocking resistance of a fixed image (print) is assured. When the Tg2nd (resin particles) is 30°C or lower, adequate low-temperature fixability and glossiness are assured.

For example, a value of the Tg2nd (resin particles) may be adjusted by adjusting a Tg and composition of the crystalline polyester resin.

<<Difference [Tg1st (resin particles)]-[Tg2nd (resin particles)]>>

The difference [Tg1st (resin particles)]-[Tg2nd (resin particles)] between the glass transition temperature [Tg1st (resin particles)] of the resin particles from the first heating of differential scanning calorimetry (DSC) and the glass transition temperature [Tg2nd (resin particles)] of the resin particles from the second heating of differential scanning calorimetry (DSC) is not particularly limited, and may be appropriately selected in accordance with the intended purpose.

The difference [Tglst (resin particles)]-[Tg2nd (resin particles)] is preferably 10°C or greater. The upper limit of the difference [Tglst (resin particles)]-[Tg2nd (resin particles)] is not particularly limited, and may be appropriately selected in accordance with the intended purpose. The upper limit is preferably 50°C or less.

The difference [Tglst (resin particles)]-[Tg2nd (resin particles)] being 10°C or greater is advantageous because excellent low-temperature fixability of the resin particles is assured. Moreover, the difference [Tglst (resin particles)]-[Tg2nd (resin particles)] being 10°C or greater means that the crystalline polyester resin C and a combination of the amorphous polyester resin A and the amorphous polyester resin B present in a non-compatible state before heating (before the first heating) turns into a compatible state after heating (after the first heating). The compatible state after heating does not need to be a completely compatible state.

<<Tg2nd (THF-insoluble component)>>

A glass transition temperature [Tg2nd (THF-insoluble component)] of a tetrahydrofuran (THF)-insoluble component of the resin particles from the second heating of differential scanning calorimetry (DSC) is not particularly limited, and may be appropriately selected in accordance with the intended purpose. The glass transition temperature [Tg2nd (THF-insoluble component)] is preferably -40°C or higher and 30°C or lower, and more preferably 0°C or higher and 20°C or lower. When the glass transition temperature [Tg2nd (THF-insoluble component)] is -40°C or higher, blocking resistance of a fixed image (print) is assured. When the glass transition temperature [Tg2nd (THF-insoluble component)] is 30°C or lower, desirable low-temperature fixability and glossiness are assured.

For example, the glass transition temperature [Tg2nd (THF-insoluble component)] may be adjusted by varying the number of carbon atoms in a multivalent alcohol and multivalent carboxylic acid of the amorphous polyester resin A.

<<Melting point (Tm)>>

A melting point (Tm) of the resin particles is not particularly limited, and may be appropriately selected in accordance with the intended purpose. The melting point (Tm) of the resin particles is preferably 60°C or higher and 80°C or lower.

<Storage elastic modulus>

<<Measuring method of storage elastic modulus G'>>

Storage elastic moduli (G') of various conditions may be measured, for example, by means of a dynamic viscoelastic measuring device (ARES, available from TA Instruments Japan Inc.). A frequency used for measurement is 1 Hz.

Specifically, a sample is molded into a pellet having a diameter of 8 mm and a thickness of from 1 mm through 2 mm. After fixing the prepared pellet of the sample onto a parallel plate having a diameter of 8 mm, the sample is stabilized at 40°C and heated to 200°C at a heating rate of 2.0°C/min at a frequency of 1 Hz (6.28 rad/s) and deformation of 0.1% (with a deformation control mode) to measure a storage elastic modulus.

In the present disclosure, a storage elastic modulus at 40°C may be represented as G'(40), and a storage elastic modulus at 100°C may be represented as G'(100).

<<G'(100) (THF-insoluble component) and ratio [G' (40) (THF-insoluble component)]/[G'(100) (THF-insoluble component]>>

A storage elastic modulus of a tetrahydrofuran (THF)-insoluble component of the resin particles at 100°C [G'(100) (THF-insoluble component)] is not particularly limited, and may be appropriately selected in accordance with the intended purpose. The storage elastic modulus [G'(100) (THF-insoluble component)] is preferably from $1.0 \times 10^5$ Pa through $1.0 \times 10^7$ Pa, and more preferably from $5.0 \times 10^5$ Pa through $5.0 \times 10^6$ Pa. The storage elastic modulus [G'(100) (THF-insoluble component)] within the above-mentioned more preferable range is advantageous because low-temperature fixability of the resin particles improves.

A ratio [G'(40) (THF-insoluble component)]/[G'(100) (THF-insoluble component] of a storage modulus of a THF-insoluble component of the resin particles at 40°C [G' (40) (THF-insoluble component)] to the storage modulus of the THF-insoluble component of the resin particles at 100°C [G'(100) (THF-insoluble component] is not particularly limited, and may be appropriately selected in accordance with the intended purpose. The ratio [G' (40) (THF-insoluble component)]/[G'(100) (THF-insoluble component] is preferably $3.5 \times 10$ or less. When the ratio [G' (40) (THF-insoluble component)]/[G'(100) (THF-insoluble component] is $3.5 \times 10$ or less, desirable low-temperature fixability of the resin particles is assured.

Moreover, the resin particles preferably having the [G'(100) (THF-insoluble component)] of from $1.0 \times 10^5$ Pa through $1.0 \times 10^7$ Pa and the ratio [G' (40) (THF-insoluble component)]/[ G'(100) (THF-insoluble component)] of $3.5 \times 10$ or less are advantageous because compatibility between the crystalline resin and the amorphous polyester resin, which is a high Tg component, increases, a 1/2 method temperature as measured by a capillary rheometers (Flowtester) decreases, and gloss of an image formed with the resin particles improves. The 1/2 method temperature is a midpoint between a flow beginning temperature and a flow ending temperature.

For example, values of the [G'(100) (THF-insoluble component)] and the [G' (40) (THF-insoluble component)] are adjusted with a resin composition (e.g., a bifunctional or greater multivalent alcohol component and a bifunctional or greater acid component).

Specifically, the values of the [G'(100) (THF-insoluble component)] and the [G'(40) (THF-insoluble component)] are adjusted, for example, in the following manner. In order to increase a value of the storage elastic modulus [G'], an adjustment is made by shortening a distance between ester bonds in the resin, or changing to a resin composition including aromatic rings. In order to decrease a value of the storage elastic modulus [G'], an adjustment is made by using a linear polyester resin, or using a multivalent alcohol including an alkyl group at a side chain as one of constituent components of a polyester resin.

<<THF insoluble component>>

A THF insoluble component of the resin particles may be acquired in the following manner.

To 100 parts of tetrahydrofuran (THF), 1 part of the toner is added. After refluxing the resulting mixture for 6 hours, the mixture is subjected to centrifuge separation by means of a centrifuge to precipitate an insoluble-component to separate the mixture into the insoluble component and a supernatant. The insoluble component is dried for 20 hours at 40°C. A mass of the dried insoluble component is divided by a mass of the toner initially used, followed by multiplying by 100 to calculate an amount of the THF-insoluble component.

An amount of the THF insoluble component of the resin particles is not particularly limited, and may be appropriately selected in accordance with the intended purpose. The amount of the THF insoluble component is preferably 20% by mass or greater, more preferably 30% by mass or greater, and yet more preferably 40% by mass or greater. The larger the amount of the THF-insoluble component is, the lager the amount of the cross-linking component in the resin particles is. When the amount of the THF-insoluble component is 20% by mass or greater, high filming resistance is assured.

<<Measurement of molecular weight>>

For example, a molecular weight of each of constituent components of the resin particles may be measured under the following analysis conditions.

[Analysis conditions]

Gel permeation chromatography (GPC) system: GPC-8220GPC (available from Tosoh Corporation)
Columns: 3 columns connected, TSKgel® SuperHZM-H 15 cm (available from Tosoh Corporation)
Temperature: 40°C
Detector: refractive index (RI) detector
Solvent: tetrahydrofuran (THF) or chloroform
Feeding rate: 0.35 mL/min
Sample: injecting 100 μL of a 0.15% by mass sample
Pretreatment of sample: The resin particles are dissolved in tetrahydrofuran (THF) (including a stabilizer, available from FUJIFILM Wako Pure Chemical Corporation) or chloroform to prepare a solution having a concentration of 0.15% by mass, and the resulting solution is filtered through a 0.2 μm-filter. The resulting filtrate is used as a sample. The sample solution is injected by 100 μL to perform measurement.

To measure a molecular weight of a sample, a molecular weight distribution of the sample is calculated from a relation between logarithmic values and count numbers of calibration curves prepared using several monodisperse polystyrene standard samples. As standard polystyrene samples for preparing calibration curves, for example, Showdex® STANDARD (available from SHOWA DENKO K.K.) Std. Nos. S-6550, S-1700, S-740, S-321, S-129, S-10, S-2.9, and S-0.6 are used.

<Calculation methods and analysis methods of various properties of constituent components of resin particles>

A glass transition temperature (Tg), melting point, acid value, hydroxyl value, and molecular weight of the amorphous polyester resin A, the amorphous polyester B, the crystalline polyester resin C, and the release agent in the resin particles, and mass ratios of the constituent components of the resin particles may be determined by measuring each of the constituent components. Alternatively, the actual resin particles may be separated into individual components by gel permeation chromatography (GPC) etc., and the various properties of each of the separated components may be calculated by the following analysis methods.

For example, separation of constitutional components of the resin particles by GPC may be performed by the following method.

GPC is performed using chloroform as a mobile phase, and the eluate is fractionated using a fraction collector to collect fractions of the eluate corresponding to desired molecular weight sections among an entire area of the elution curve.

The collected eluate is condensed and dried by an evaporator etc., followed by dissolving the obtained solids in a deuterated solvent, such as deuterated chloroform and deuterated THF, and the resulting solution is provided for $^1$H-NMR. Based on an integral ratio of each element, a proportion of each constituent component of the resin particles in the eluate is calculated.

Alternatively, the collected eluate is condensed, followed by performing hydrolysis using sodium hydroxide. The resulting decomposed components are subjected to identification and quantification analysis, such as high-performance liquid chromatography (HPLC), to calculate a proportion of each constituent component of the resin particles.

When the method of producing resin particles includes forming base particles of resin particles while generating the amorphous polyester resin A through an elongation reaction and/or a cross-linking reaction between the non-linear reactive precursor and the curing agent, separation by GPC etc. may performed on the actual resin particles to measure a glass transition temperature (Tg) of the amorphous polyester resin A. Alternatively, the amorphous polyester resin A may be separately synthesized through an elongation reaction and/or a cross-linking reaction between the non-linear reactive precursor and the curing agent, and then a glass transition temperature (Tg) etc. may be measured from the synthesized amorphous polyester resin A.

<<Separation method of constituent components of resin particles>>

One example of a separation method of each of the constituent components of the resin particles will be specifically described hereinafter.

First, 1 g of the resin particles are added to 100 mL of chloroform. The resulting mixture is stirred for 30 minutes at 25°C to prepare a solution in which a soluble component of the resin particles is dissolved. The prepared solution is filtered through a membrane filter having a pore size of 0.2 μm to collect a chloroform-soluble component of the resin particles. Subsequently, the chloroform-soluble component is dissolved in chloroform, and a resulting solution is provided as a sample for GPC. The sample is injected into the GPC used for the above-described molecular weight measurement of each resin.

Meanwhile, a fraction collector is disposed at an eluate outlet of the GPC, and the eluate is fractionated per the predetermined count to collect the eluate per 5% from the elution onset of the elution curve (i.e., a rise of the elution curve) based on an area ratio. Subsequently, 30 mg of a sample, i.e., each of the fractions of the eluate, is dissolved in 1 mL of deuterated chloroform. To the resulting solution, 0.05% by volume tetramethylsilane (TMS) is added. The obtained solution is poured into a glass tube for nuclear magnetic resonance (NMR) spectroscopy having a diameter of 5 mm, and a spectrum of the sample is obtained by means of a nuclear magnetic resonance spectrometer (e.g., JNM-AL400, available from JEOL Ltd.) with integrating 128 times at a temperature of from 23°C through 25°C. A monomer composition and composition ratio of each of the amorphous polyester resin A, the amorphous polyester resin B, and the crystalline polyester C in the resin particles are determined from the peak integration ratios of the obtained spectra.

For example, the assignment of peaks is performed in the following manner, and a proportion of a constituent monomer is determined from each integral ratio. For example, peaks are assigned as follows.

Near 8.25 ppm: derived from a benzene ring of trimellitic acid (1 hydrogen)
Near 8.07 ppm to near 8.10 ppm: derived from a benzene ring of terephthalic acid (4 hydrogens)
Near 7.1 ppm to near 7.25 ppm: derived from a benzene ring of bisphenol A (4 hydrogens)
Near 6.8 ppm: derived from a benzene ring of bisphenol A (4 hydrogens) and derived from a double bond of fumaric acid (2 hydrogens)
Near 5.2 ppm to near 5.4 ppm: derived from methine of a bisphenol A propylene oxide adduct (1 hydrogen)
Near 3.7 ppm to near 4.7 ppm: derived from methylene of a bisphenol A propylene oxide adduct (2 hydrogens) and derived from methylene of a bisphenol A ethylene oxide adduct (4 hydrogens)

Near 1.6 ppm: derived from a methyl group of bisphenol A (6 hydrogens)

In the results obtained above, for example, the eluate collected in the fraction, in which the amorphous polyester resin A constitutes 90% by mass or greater, is be treated as the amorphous polyester resin A. Similarly, the eluate collected in the fraction, in which the amorphous polyester resin B constitutes 90% by mass or greater, is treated as the amorphous polyester resin B. Moreover, the eluate collected in the fraction, in which the crystalline polyester resin C constitutes 90% by mass or greater, is treated as the crystalline polyester resin C.

A method of producing the resin particles is not particularly limited, provided that the abundance of the crystalline resin in a region from an outermost surface of each of the resin particles to a depth of 150 nm from the outermost surface is 4% or less relative to an amount of the crystalline resin in an entire region of each of the resin particles, and a radiocarbon $^{14}$C content of the resin particles is 5.4 pMC or greater. The method of producing resin particles may be appropriately selected in accordance with the intended purpose. Examples of the method include any emulsion aggregation methods known in the art. However, the resin particles are preferably produced by the below-described method of producing resin particles of the present disclosure.

(Method of producing resin particles)

The method of producing resin particles of the present disclosure includes: a) dissolving or dispersing at least a crystalline resin and an amorphous polyester resin in an organic solvent to produce an oil phase (may be referred to as "formation of oil phase" hereinafter); b) adding an aqueous medium to the oil phase to cause phase inversion from a water-in-oil dispersion liquid to an oil-in-water dispersion liquid, in which particles of the oil phase are dispersed in the aqueous medium (may be referred to as "phase inversion emulsification" hereinafter); and c) coagulating the particles in the oil-in-water dispersion liquid to form cohesive particles, followed by adding an amorphous polyester resin to the cohesive particles to form resin particles (may be referred to as "coagulating" hereinafter). The method may further include other steps, such as formation of an aqueous phase, removal of a solvent, fusing, washing, drying, classifying, and annealing, as necessary.

The amorphous polyester resin includes alcohol monomers as one of constituent components of the amorphous polyester resin, where the alcohol monomers include one or more monomers of propylene glycol. Abundance of the crystalline resin in a region from an outermost surface of each of the resin particles to a depth of 150 nm from the outermost surface is 4% or less relative to an amount of the crystalline resin in an entire region of each of the resin particles. A radiocarbon $^{14}$C content of the resin particles is 5.4 pMC or greater.

<a) Formation of oil phase>

The formation of an oil phase includes dissolving or dispersing at least a crystalline resin and an amorphous polyester resin in an organic solvent to produce an oil phase.

The crystalline resin is as described in the section of <<Crystalline resin>> of (Resin particles and toner resin particles).

The amorphous polyester resin is as described in the section of <<Amorphous polyester resin>> of (Resin particles and toner resin particles). The oil phase may include the amorphous polyester resin A and the amorphous polyester resin B, or may include the non-linear reactive precursor, the amorphous polyester resin B, and the curing agent. The curing agent may be added to an aqueous medium described later.

The oil phase may further include a colorant and a release agent.

The colorant and release agent are as described in the sections of <<Colorant>> and <<Release agent>> of <Other components> of (Resin particles and toner resin particles), respectively.

The organic solvent is not particularly limited, and may be appropriately selected in accordance with the intended purpose. The organic solvent is preferably an organic solvent having a boiling point of lower than 150°C because such an organic solvent is easily removed.

The organic solvent having a boiling point of lower than 150°C is not particularly limited, and may be appropriately selected in accordance with the intended purpose. Examples of the organic solvent having a boiling point of lower than 150°C include toluene, xylene, benzene, carbon tetrachloride, methylene chloride, 1,2-dichloroethane, 1,1,2-trichloroethane, trichloroethylene, chloroform, monochlorobenzene, dichloroethylidene, methyl acetate, ethyl acetate, methyl ethyl ketone, and methyl isobutyl ketone. The above-listed examples may be used alone or in combination. Among the above-listed examples, the organic solvent is preferably ethyl acetate, toluene, xylene, benzene, methylene chloride, 1,2-dichloroethane, chloroform, or carbon tetrachloride, and more preferably ethyl acetate.

An amount of the organic solvent is not particularly limited, and may be appropriately selected in accordance with the intended purpose. The amount of the organic solvent is preferably from 40 parts by mass through 300 parts by mass, more preferably from 60 parts by mass through 140 parts by mass, and yet more preferably from 80 parts by mass through 120 parts by mass, relative to 100 parts by mass of a total amount of the raw materials of the resin particles.

A production method for the oil phase is not particularly limited, and may be appropriately selected in accordance with the intended purpose. Examples of the production method include a method where constituent materials of the oil phase are gradually added to an organic solvent with stirring to dissolve or disperse the constituent materials in the organic solvent.

For the dispersing, any of dispersers known in the art may be used. Examples of the dispersers include a bead mill and a disk mill.

Diameters of dispersed particles of the crystalline resin in the oil phase are not particularly limited, and may be appropriately selected in accordance with the intended purpose. The diameters of dispersed particles of the crystalline resin are preferably 20 nm or greater and 500 nm or less, and more preferably 50 nm or greater and 360 nm or less.

In the present specification, the diameters of the dispersed particles of the crystalline resin are represented as a volume average particle diameter.

For example, diameters of the dispersed particles of the crystalline resin (i.e., the volume average particle diameter of the dispersed particles of the crystalline resin) may be measured by means of a particle size distribution analyzer, Nanotrac (UPA-EX150, available from NIKKISO CO., LTD., dynamic light scattering/laser doppler velocimetry).

As a specific measuring method, a dispersion liquid in which the crystalline resin is dispersed is measured with adjusting a concentration of the dispersion liquid to a certain measuring concentration range. For the measurement, only a solvent of the dispersion liquid is measured in advance as a background measurement. According to the above-described measuring method, a nanoscale to microscale particle size can be measured.

<Formation of aqueous phase (aqueous medium)>

The formation of an aqueous phase includes forming an aqueous phase (aqueous medium).

The aqueous medium is not particularly limited, and may be appropriately selected in accordance with the intended purpose. Examples of the aqueous medium include water, a solvent miscible with water, and a mixture of water and a solvent miscible with water. The above-listed examples may be used alone or in combination. Among the above-listed examples, water is preferable.

Examples of the water include ion-exchanged water.

Examples of the solvent miscible with water include an organic solvent.

The organic solvent is not particularly limited, provided that the organic solvent is an organic solvent miscible with water. The organic solvent may be appropriately selected in accordance with the intended purpose. Examples of the organic solvent include: ester-based solvents, such as methyl acetate, ethyl acetate, and butyl acetate; ketone-based solvents, such as acetone, methyl ethyl ketone, and methyl isobutyl ketone; alcohol-based solvent, such as methanol, isopropanol, and ethylene glycol; amide-based solvents, such as dimethylformamide; ether-based solvents, such as tetrahydrofuran; and cellosolve-based solvents.

A concentration of the organic solvent as the aqueous medium is not particularly limited. The concentration of the organic solvent is preferably a saturation concentration or lower relative to ion-exchanged water considering granularity of particles.

<b) Phase inversion emulsification>

The phase inversion emulsification includes adding an aqueous medium to the oil phase to cause phase inversion from a water-in-oil dispersion liquid to an oil-in-water dispersion liquid, in which particles of the oil phase (i.e., oil droplets) are dispersed in the aqueous medium. As a result of the phase inversion emulsification, a particle dispersion liquid (oil-droplet dispersion liquid) is obtained.

When the oil phase includes the non-linear reactive precursor, moreover, the curing agent and the non-linear reactive precursor may be allowed to react through an elongation reaction and/or a cross-linking reaction to generate an amorphous polyester resin A during the phase inversion emulsification.

The amorphous polyester resin A is as described in the section of <<<Amorphous polyester resin A>>> of (Resin particles and toner resin particles).

When the amorphous polyester resin A is generated during the phase inversion emulsification, specifically, the amorphous polyester resin A may be generated, for example, by any of the following methods (1) to (3):

(1) a method where an oil phase including a non-linear reactive precursor and a curing agent is emulsified or dispersed in an aqueous medium, and the curing agent and the non-linear reactive precursor are allowed to react through an elongation reaction and/or a cross-linking reaction in the aqueous medium to generate an amorphous polyester resin A;

(2) a method where an oil phase including a non-linear reactive precursor is emulsified or dispersed in an aqueous medium, to which a curing agent has been added in advance, and the curing agent and the non-linear reactive precursor are allowed to react through an elongation reaction and/or a cross-linking reaction in the aqueous medium to generate an amorphous polyester resin A; and

(3) a method where an oil phase including a non-linear reactive precursor is emulsified or dispersed in an aqueous medium, followed by adding a curing agent to the aqueous medium, and the curing agent and the non-linear reactive precursor are allowed to react through an elongation reaction and/or a cross-linking reaction from at an interface of each of dispersed particles of the oil phase in the aqueous medium to generate an amorphous polyester resin A.

When the curing agent and the non-linear reactive precursor are allowed to react through an elongation reaction and/or a cross-linking reaction at an interface of each of dispersed particles of the oil phase in the aqueous medium, an amorphous polyester resin A is generated predominantly at a surface of each of generated resin particles to impart a density gradient of the amorphous polyester resin A within each of the resin particles.

Reaction conditions (e.g., duration of the reaction and a temperature of the reaction) for generating an amorphous polyester resin A are not particularly limited, and may be appropriately selected in accordance with a combination of the curing agent and the non-linear reactive precursor.

The duration of the reaction is not particularly limited, and may be appropriately selected in accordance with the intended purpose. The duration is preferably 10 minutes or longer and 40 hours or shorter, and more preferably 2 hours or longer and 24 hours or shorter.

The reaction temperature is not particularly limited, and may be appropriately selected in accordance with the intended purpose. The reaction temperature is preferably 0°C or higher and 150°C or lower, and more preferably 40°C or higher and 98°C or lower.

A method for performing phase inversion emulsification of the dispersion liquid including the non-linear reactive precursor in the aqueous medium is not particularly limited, and may be appropriately selected in accordance with the intended purpose. Examples of the method include a method where the oil phase is neutralized with a base etc., and the neutralized oil phase is added to an aqueous phase to cause phase inversion from a water-in-oil dispersion liquid to an oil-in-water dispersion liquid to yield a particle dispersion liquid through the phase inversion emulsification.

As the base used to neutralize the oil phase, a basic inorganic compound or a basic organic compound may be used.

The basic inorganic compound is not particularly limited, and may be appropriately selected in accordance with the intended purpose. Examples of the basic inorganic compound include sodium hydroxide, potassium hydroxide, lithium hydroxide, ammonia, sodium carbonate, sodium bicarbonate, potassium carbonate, and potassium bicarbonate.

The basic organic compound is not particularly limited, and may be appropriately selected in accordance with the intended purpose. Examples of the basic organic compound include N,N-dimethylethanolamine, N,N-diethylethanolamine, triethanolamine, tripropanolamine, tributanolamine, triethylamine, n-propylamine, n-butylamine, isopropylamine, monomethanolamine, morpholine, methoxypropylamine, pyridine, vinyl pyridine, and isophoronediamine.

The neutralization of the oil phase may be performed, while the oil phase is homogeneously mixed or dispersed by means of a typical stirrer or disperser. The disperser is not particularly limited. Examples of the disperser include an ultrasonic disperser, a bead mill, a ball mill, a roll mill, a homomixer, an ultramixer, a disperse mixer, a penetration-type high-pressure disperser, a collision-type high-pressure disperser, a porous-type high-pressure disperser, an ultrahigh-pressure homogenizer, and an ultrasonic homogenizer. A typical stirrer and a typical disperser may be used in combination.

When the phase inversion emulsification of the oil phase including constituent materials of the resin particles is performed, an amount of the aqueous medium is not particularly limited, and may be appropriately selected in accordance with the intended purpose. The amount of the aqueous medium relative to 100 parts by mass of the constituent materials of the resin particles is preferably 50 parts by mass or greater and 2,000 parts by mass or less, and more preferably 100 parts by mass or greater and 1,000 parts by mass or less. When the amount of the aqueous medium is 50 parts by mass or greater relative to 100 parts by mass of the constituent materials of the resin particles, a desirable dispersion state of the constituent materials of the resin particles is assured, and resin particles having predetermined particle diameters are obtained. When the amount of the aqueous medium is 2,000 parts by mass or less relative to 100 parts by mass of the constituent materials of the resin particles, a production cost remains the minimum.

When the phase inversion emulsification of the oil phase including the constituent materials of the resin particles is performed, moreover, a dispersing agent is preferably used for stabilizing dispersed elements (or dispersed particles), such as oil droplets, adjusting shapes of the dispersed particles to desired shapes, and adjusting a particle size distribution of the dispersed particles to be sharp.

The dispersing agent is not particularly limited, and may be appropriately selected in accordance with the intended purpose. Examples of the dispersing agent include a surfactant, a poorly water-soluble inorganic compound dispersing agent, and a polymer-based protective colloid. The above-listed examples may be used alone or in combination. Among the above-listed examples, the dispersing agent is preferably a surfactant.

The surfactant is not particularly limited, and may be appropriately selected in accordance with the intended purpose. Examples of the surfactant include an anionic surfactant, a cationic surfactant, a nonionic surfactant, and an amphoteric surfactant.

The anionic surfactant is not particularly limited, and may be appropriately selected in accordance with the intended purpose. Examples of the anionic surfactant include an alkyl benzene sulfonic acid salt, an $\alpha$-olefin sulfonic acid salt, and a phosphoric acid ester. Among the above-listed examples, the anionic surfactant is preferably a fluoroalkyl group-containing surfactant.

A catalyst may be used for an elongation reaction and/or a cross-linking reaction when the amorphous polyester resin A is generated.

The catalyst is not particularly limited, and may be appropriately selected in accordance with the intended purpose. Examples of the catalyst include dibutyl tin laurate and dioctyl tin laurate.

The phase inversion emulsification may be performed using a stirring blade.

The stirring blade is not particularly limited, and may be appropriately selected according to a viscosity of the solution. Examples of the stirring blade include an anchor blade, a turbine blade, a Pfaudler blade, a FULLZONE blade, a MAXBLEND blade, and a semicircular blade.

When the stirring blade is used, a circumferential speed of the stirring blade is not particularly limited, and may be appropriately selected in accordance with the intended purpose. The circumferential speed is preferably from 0.4 m/sec through 2.0 m/sec, and more preferably from 0.7 m/sec through 1.5 m/sec.

A volume average particle diameter of the dispersed particles (oil droplets) in the particle dispersion liquid is not particularly limited, and may be appropriately selected in accordance with the intended purpose. The volume average particle diameter of the dispersed particles is preferably from 50 nm through 2,000 nm, and more preferably from 50 nm through 500 nm.

<Removal of solvent>

The removal of the solvent includes removing the organic solvent from the particle dispersion liquid obtained in the phase inversion emulsification, to thereby yield base particles.

A method of removing the organic solvent from the particle dispersion liquid is not particularly limited, and may be appropriately selected in accordance with the intended purpose. Examples of the method include: a method where an entire system is gradually heated to evaporate the organic solvent included in the particles (i.e., the oil droplets) of the particle dispersion liquid; a method where the particle dispersion liquid is sprayed into a dry atmosphere to remove the organic solvent in the particles (i.e. the oil droplets) of the particle dispersion liquid; and a method where pressure of the particle dispersion liquid is reduced to evaporate and remove the organic solvent. The above-listed examples may be used alone or in combination.

The dry atmosphere into which the particle dispersion liquid is sprayed is not particularly limited, and may be appropriately selected in accordance with the intended purpose. Examples of the dry atmosphere include a heated gas, such as air, nitrogen, carbon dioxide, and a combustion gas. Any of various general gas flows, which is heated to a temperature equal to or higher than the highest boiling point among boiling points of solvents, may be used.

The removal of the solvent may be performed by mean of a device. Examples of the device include a spray drier, a belt drier, and a rotary kiln. As the device is used, the intended quality is sufficiently acquired with a short process time.

<c) Coagulating>

The coagulating includes coagulating the particles in the oil-in-water dispersion liquid to form cohesive particles, followed by adding an amorphous polyester resin to the cohesive particles to form resin particles.

When the method of producing resin particles includes the removal of the solvent, the coagulating may include, after obtaining base particles in the removal of the solvent, adding an amorphous polyester resin to the base particles to form resin particles.

A method of coagulating the oil droplets or the base particles is not particularly limited and may be appropriately selected from methods known in the art in accordance with the intended purpose. Examples of the method include a method where a coagulant is added and a method where pH is adjusted.

The coagulant is not particularly limited, and may be appropriately selected in accordance with the intended purpose. Examples of the coagulant include aluminum chloride, zinc sulfate, magnesium sulfate, aluminum sulfate, aluminum potassium sulfate, sodium chloride, sodium bromide, sodium iodide, sodium fluoride, sodium acetate, sodium acetoacetate, lithium chloride, lithium bromide, lithium iodide, lithium fluoride, lithium acetate, lithium acetoacetate, potassium chloride, potassium bromide, potassium iodide, potassium fluoride, potassium acetoacetate, magnesium bromide, magnesium chloride, magnesium iodide, magnesium fluoride, magnesium acetate, magnesium acetoacetate, calcium chloride, calcium bromide, barium bromide, barium chloride, barium iodide, barium fluoride, barium acetate, barium acetoacetate, strontium bromide, strontium chloride, strontium iodide, strontium fluoride, strontium acetate, strontium acetoacetate, zinc bromide, zinc chloride, zinc iodide, zinc fluoride, zinc acetate, zinc acetoacetate, copper bromide, copper chloride, copper iodide, copper fluoride, copper acetate, copper acetoacetate, iron bromide, iron chloride, iron iodide, iron fluoride, iron acetate, and iron acetoacetate. The above-listed examples may be used alone or in combination. Among the above-listed examples, the coagulant is preferably a divalent or higher metal salt, and more preferably a trivalent metal salt. Since the divalent or higher metal salt is used, carboxyl groups included in the amorphous polyester resin A or the amorphous polyester resin B and the metal salt form a three-dimensional structure through metal ionic cross-linking. Therefore, the strength of the resulting resin particles improves, consequently improving filming resistance of the resin particles.

When the coagulant is added, the coagulant may be added as it is, but the coagulant is preferably added in the form of an aqueous solution of the coagulant so that the coagulant is distributed evenly without leaving highly concentrated areas. Moreover, the coagulant salt is preferably gradually added, and the particle diameters of the formed resin particles are carefully monitored.

A temperature of a reaction system for performing the coagulating (e.g., a temperature of the dispersion liquid during the coagulating) is not particularly limited, and may be appropriately selected in accordance with the intended purpose. The temperature is preferably a temperature close to a glass transition temperature (Tg) of the amorphous polyester resin B. When the temperature is too low, coagulation progresses very slowly, which may lead to inadequate production efficiency. When the temperature is too high, the coagulation speed is too fast, which may lead to an undesirable particle size distribution of resulting resin particles, such as formation of coarse particles.

The coagulating includes terminating the coagulation of the particles when the cohesive particles reach predetermined particle diameters.

A method of terminating the coagulation is not particularly limited, and may be appropriately selected in accordance with the intended purpose. For example, the method used may be any of the following methods: a method where a salt having an ionic valence lower than the ionic valence of the coagulant salt, or a chelating agent is added; a method where pH is adjusted; a method where a temperature of a reaction system (i.e., the dispersion liquid) is reduced during the coagulating; and a method where a large amount of an aqueous medium is added to reduce a concentration of the reaction system (i.e., the dispersion liquid) during the coagulating. The above-listed examples may be used alone or in combination.

A volume average particle diameter of the cohesive particles is not particularly limited, and may be appropriately selected in accordance with the intended purpose. The volume average particle diameter of the cohesive particles is preferably from 3.0 $\mu$m through 6.0 $\mu$m, and more preferably from 4.0 $\mu$m through 5.0 $\mu$m.

During the coagulating, a release agent may be added, or the crystalline resin may be added for imparting low-temperature fixability.

As the release agent, the release agent as described in the section of <<Release agent>> of (Resin particles and toner resin particles) may be used.

When the release agent or the crystalline resin is added during the coagulating, a dispersion liquid in which the release agent is dispersed in an aqueous medium, or a dispersion liquid in which the crystalline polyester resin C is dispersed similarly in an aqueous medium, is prepared, the prepared dispersion liquid is mixed with the particle dispersion liquid (oil droplet dispersion liquid), and the particles are coagulated to obtain cohesive particles where the release agent or the crystalline resin is homogeneously dispersed in each of the cohesive particles.

Diameters of dispersed particles of the release agent in the dispersion liquid are not particularly limited, and may be appropriately selected in accordance with the intended purpose. The diameters of the dispersed particles of the release agent are preferably 50 nm or greater and 600 nm or less, and more preferably 50 nm or greater and 300 nm or less.

In the present specification, the diameters of the dispersed particles of the release agent in the dispersion liquid are represented by a volume average particle diameter.

For example, the diameters of the dispersed particles of the release agent (i.e., the volume average particle diameter of the dispersed particles of the release agent) may be measured by means of a particle size distribution analyzer, Nanotrac (UPA-EX150, available from NIKKISO CO., LTD., dynamic light scattering/laser doppler velocimetry) in the same manner as the measurement of the diameters of the dispersed particles of the crystalline resin.

During the coagulating, a dispersion liquid of the amorphous polyester resin B is added to form a shell layer in each of the resin particles. As a shell layer is formed in each of the resin particles, the crystalline resin or the release agent, which may cause filming, can be encapsulated to improve filming resistance of resulting resin particles.

Diameters of the dispersed particles of the amorphous polyester resin B in the dispersion liquid is not particularly limited, and may be appropriately selected in accordance with the intended purpose. The diameters of the dispersed particles of the amorphous polyester resin B are preferably 10 nm or greater and 150 nm or less, and more preferably 10 nm or greater and 70 nm or less.

In the present disclosure, the diameters of the amorphous polyester resin B in the dispersion liquid are represented by a volume average particle diameter.

For example, the diameters of the dispersed particles of the amorphous polyester resin B (i.e., the volume average particle dimeter of the dispersed particles of the amorphous polyester resin B) may be measured by means of a particle size distribution analyzer, Nanotrac (UPA-EX150, available from NIKKISO CO., LTD., dynamic light scattering/laser doppler velocimetry) in the same manner as the measurement of the diameters of the dispersed particles of the crystalline resin.

A method of forming the shell layer is not particularly limited, and may be appropriately selected in accordance with the intended purpose. Examples of the method include a method where the amorphous resin is added after producing cohesive particles according to the above-described method.

<Fusing>

The fusing includes fusing the cohesive particles to reduce surface irregularities to obtain spherical resin particles.

A method of fusing the cohesive particles is not particularly limited, and may be appropriately selected in accordance with the intended purpose. Examples of the method include a method where the dispersion liquid of the cohesive particles is heated with stirring.

A temperature of the heating is not particularly limited, and may be appropriately selected in accordance with the intended purpose. The temperature of the heating is preferably a temperature equal to Tg of the amorphous polyester resin B or higher and Tg of the amorphous polyester resin B +20°C or lower, and more preferably a temperature equal to the Tg or higher and the Tg +10°C or lower. When the temperature of the heating is the Tg of the amorphous polyester resin B +20°C or lower, appropriate compatibility between the amorphous polyester resin and the crystalline resin is achieved so that grains of the recrystallized crystalline resin have suitable major axes without being too large, and are not exposed to a surface of each of resulting resin particles.

An average circularity of the resin particles is not particularly limited, and may be appropriately selected in accordance with the intended purpose. When the resin particles are used as a toner, as the average circularity of the resin particles increases, the resin particles roll more smoothly at a developing nip. Therefore, the average circularity of the resin particles is preferably 0.95 or greater, and more preferably 0.96 or greater, because a large amount of the resin particles can be transferred to an electrostatic latent image bearer.

-Measurement of average circularity-

In the present embodiment, an average particle diameter and average circularity may be measured, for example, by means of a flow particle image analyzer (Sysmex FPIA-3000, available from Malvern Panalytical Ltd.).

As a specific measuring method, from 0.1 mL through 0.5 mL of a surfactant (preferably an alkyl benzene sulfonic acid salt) serving as a dispersing agent is added to from 100 mL to 150 mL of water in a container to prepare a mixture. Impurities solids have been removed from the water prior to the addition of the surfactant. Then, from approximately 0.1 g through approximately 0.5 g of a sample is added to the mixture to prepare a suspension. Next, the suspension, in which the sample is dispersed, is dispersed for approximately 1 minute to approximately 3 minutes by means of an ultrasonic disperser, and the concentration of the dispersion liquid is adjusted to the range of 3,000 particles/μL to 10,000 particles/μL. The resulting dispersion liquid is measured by means of the above-mentioned device to determine an average particle diameter, average circularity, and standard deviation (SD) of circularity.

Note that, a circle equivalent diameter is determined as a particle diameter, an average particle diameter is determined using circle equivalent diameters (number basis), and analysis conditions of the flow particle image analyzer are as follows.

[Analysis conditions]

Particle diameter range: 0.5 μm ≤ circle equivalent diameter (number basis) ≤ 200.0 um
Particle shape range: 0.93< circularity ≤ 1.00

In the present embodiment, the definition of the average circularity is as follows.

$$\text{(Average circularity)} = \text{(peripheral length of circle having area identical to area of projected image of particle)}/\text{(peripheral length of projected image of particle)}$$

<Washing>

The washing includes washing the resin particles obtained by the coagulating or the fusing.

The dispersion liquid of the resin particles obtained by the above-described method may include subsidiary materials, such as a coagulant, as well as the resin particles. Therefore, washing is preferably performed to collect only the resin particles from the dispersion liquid of the resin particles.

A washing method of the resin particles is not particularly limited, and may be appropriately selected in accordance with the intended purpose. Examples of the washing method include centrifugation, vacuum filtration, and filter pressing.

A cake of the resin particles may be obtained by any of the above-mentioned washing methods. If washing cannot be adequately performed with one process, the obtained cake may be again dispersed in an aqueous solvent to prepare a slurry, and the slurry may be washed by any of the washing method to collect the resin particle. This series of the processes may be repeated.

When the washing is performed by the vacuum filtration or the filter pressing, an aqueous solvent is penetrated into the cake to wash out subsidiary materials attached to the resin particles.

The aqueous solvent used for the washing is not particularly limited, and may be appropriately selected in accordance with the intended purpose. Examples of the aqueous solvent include water and a mixed solvent of water and alcohol.

Examples of the alcohol include methanol and ethanol.

Among the above-listed examples, the aqueous solvent is preferably water, considering a cost of production and reduction in adverse environmental impacts due to waste water processing.

<Drying>

The drying includes drying the resin particles washed by the washing.

The resin particles washed by the washing include a large amount of the aqueous medium. As the drying is performed to dry the washed resin particles, the aqueous medium is removed, and only the resin particles are collected.

A method of the drying is not particularly limited, and may be appropriately selected in accordance with the intended purpose. Examples of the method include a method using a dryer, such as a spray dryer, a vacuum freeze dryer, a vacuum dryer, a static tray dryer, a movable tray dryer, a fluidized bed dryer, a rotary dryer, and a stirring dryer.

A final moisture content of the dried resin particles is not particularly limited, and may be appropriately selected in accordance with the intended purpose. The moisture content is preferably less than 1% by mass.

The resin particles dried by the drying are loosely aggregated. If the aggregation of the resin particles may cause a problem during use, the loosely aggregated resin particles may be crushed to release loose aggregation.

A method of crushing is not particularly limited, and may be appropriately selected in accordance with the intended purpose. Examples of the method include a method using a device, such as a jet mill, HENSCHEL MIXER, a super mixer, a coffee mill, OSTER BLENDER, and a food processer.

<Classifying>

The classifying includes classifying the resin particles obtained by the washing or the drying.

A method of the classifying is not particularly limited, and may be appropriately selected in accordance with the intended purpose. Examples of the method include: a method where a fine particle component is removed by cyclone in a liquid, a decanter, or centrifugation; and a method where the classifying is performed according to any of classification methods known in the art after the drying.

<Annealing>

In the case where the crystalline resin is added, the annealing includes performing annealing after the drying. The annealing is a process of performing phase separation between the crystalline resin and the amorphous polyester resin.

A method of the annealing is not particularly limited, and may be appropriately selected in accordance with the intended purpose. Examples of the method include a method where the resin particles are stored for 10 hours or longer at a temperature close to a glass transition temperature (Tg) of the crystalline resin.

When heating is performed at a temperature higher than a glass transition temperature (Tg) of the used resins during the fusing, the crystalline resin and the amorphous polyester resin may be melted together, thus both heat resistant storage stability and low-temperature fixability may not be achieved. As the annealing is performed, however, phase separation between the crystalline resin and the amorphous resin occurs to eliminate the co-melted state. Therefore, the annealing is preferably performed.

(Toner)

The toner of the present disclosure includes the toner resin particles of the present disclosure, preferably further includes one or more external additives, and may further include other components as necessary.

<Toner resin particles>

The toner resin particles are as described in the section of (Resin particles and toner resin particles), thus detailed description of the toner resin particles is omitted here.

In the toner, the toner resin particles are toner base particles.

An amount of the toner resin particles in the toner is not particularly limited, and may be appropriately selected in accordance with the intended purpose. The toner may be comprised of the toner resin particles.

<External additive(s)>

The external additive(s) is not particularly limited, and may be appropriately selected in accordance with the intended purpose. Examples of the external additive(s) include inorganic particles, oxide particles, fatty acid metal salt particles, and hydrophobic particles obtained by processing any of the foregoing particles through a hydrophobicity treatment. The above-listed examples may be used alone or in combination.

An average particle diameter of primary particles of the inorganic particles is not particularly limited, and may be appropriately selected in accordance with the intended purpose. The average particle diameter of the primary particles of the inorganic particles is preferably 100 nm or less, more preferably 1 nm or greater and 100 nm or less, yet more preferably 3 nm or greater and 70 nm or less, and particularly preferably 5 nm or greater and 70 nm or less. When the average particle diameter of the primary particles of the inorganic particles is 1 nm or greater, the inorganic particles are less likely to become embedded in each of the toner base particles so that an effect of the inorganic particles may be adequately exhibited. When the average primary particle diameter of the primary particles of the inorganic particles is 100 nm or less, uneven scratches or damage formed on a surface of the photoconductor may be minimized.

Moreover, the inorganic particles preferably include one or more groups of inorganic particles being comprised of primary particles having an average particle diameter of 20 nm or less and one or more groups of inorganic particles being comprised of primary particles having an average particle diameter of 30 nm or greater.

A BET specific surface area of the inorganic particles is not particularly limited, and may be appropriately selected in accordance with the intended purpose. The BET specific surface area of the inorganic particles is preferably 20 m$^2$/g or greater and 500 m$^2$/g or less.

The inorganic particles are not particularly limited, and may be appropriately selected in accordance with the intended purpose. Examples of the inorganic particles include silica, alumina, titanium oxide, barium titanate, magnesium titanate, calcium titanate, strontium titanate, iron oxide, copper oxide, zinc oxide, tin oxide, silica sand, clay, mica, wollastonite, diatomaceous earth, chromium oxide, cerium oxide, red iron oxide, antimony trioxide, magnesium oxide, zirconium oxide, barium sulfate, barium carbonate, calcium carbonate, silicon carbide, and silicon nitride. The above-listed examples may be used alone or in combination. Among the above-listed examples, silica or titanium dioxide is preferable.

The oxide particles are not particularly limited, and may be appropriately selected in accordance with the intended purpose. Examples of the oxide particles include titania, alumina, tin oxide, and antimony oxide.

Examples of the fatty acid metal salt include zinc stearate and aluminum stearate.

Among the above-listed examples, the external additive is preferably hydrophobicized silica particles, hydrophobicized titania particles, hydrophobicized titanium oxide particles, or hydrophobicized alumina particles.

Examples of the silica particles include R972, R974, RX200, RY200, R202, R805, and R812 (all available from NIPPON AEROSIL CO., LTD.).

Examples of the titania particles include: P-25 (available from NIPPON AEROSIL CO., LTD.); STT-30 and STT-65C-S (both available from Titan Kogyo, Ltd.); TAF-140 (available from Fuji Titanium Industry Co., Ltd.); and MT-150W, MT-500B, MT-600B, and MT-150A (all available from TAYCA CORPORATION).

Examples of the hydrophobicized titanium oxide particles include: T-805 (available from NIPPON AEROSIL CO., LTD.); STT-30A and STT-65S-S (both available from Titan Kogyo, Ltd.); TAF-500T and TAF-1500T (both available from Fuji Titanium Industry Co., Ltd.); MT-100S and MT-100T (both available from TAYCA CORPORATION); and IT-S (available from ISHIHARA SANGYO KAISHA, LTD.).

For example, the hydrophobicized oxide particles, hydrophobicized silica particles, hydrophobicized titania particles, or hydrophobicized alumina particles may be acquired by processing hydrophilic particles with a silane coupling agent (e.g., methyltrimethoxysilane, methyltriethoxysilane, and octyltrimethoxysilane). Moreover, silicone oil-processed oxide particles or silicone oil-processed inorganic particles are suitably used. The silicone oil-processed oxide particles or silicone oil-processed inorganic particles may be acquired by processing oxide particles or inorganic particles with silicone oil optionally upon application of heat. The external additive may be also surface-treated with any of the flowability improving agents disclosed in the section of <<Flowability improving agent>> of (Resin particles and toner resin particles).

The silicone oil is not particularly limited, and may be appropriately selected in accordance with the intended purpose. Examples of the silicone oil include dimethyl silicone oil, methylphenyl silicone oil, chlorophenyl silicone oil, methyl hydrogen silicone oil, alkyl-modified silicone oil, fluorine-modified silicone oil, polyether-modified silicone oil, alcohol-modified silicone oil, amino-modified silicone oil, epoxy-modified silicone oil, epoxy-polyether-modified silicone oil, phenol-modified silicone oil, carboxy-modified silicone oil, mercapto-modified silicone oil, methacryl-modified silicone oil, and $\alpha$-methylstyrene-modified silicone oil.

An amount of the external additive(s) is not particularly limited, and may be appropriately selected in accordance with the intended purpose. The amount of the external additive(s) is preferably from 0.1 parts by mass through 5 parts by mass, and more preferably from 0.3 parts by mass through 3 parts by mass, relative to 100 parts by mass of the toner.

A production method of the toner is not particularly limited and may be appropriately selected from methods known in the art. The toner is preferably produced by the below-described method of producing a toner of the present disclosure.

(Method of producing toner)

The method of producing a toner of the present disclosure includes mixing the toner resin particles of the present disclosure and one or more external additive, and may further include other steps as necessary.

The resin particles are as described in the section of (Resin particles and toner resin particles) and the one or more external additives are as described in the section of <External additive(s)> of (Toner), thus detailed description for the resin particles and one or more external additive is omitted here.

<Mixing>

The mixing includes adding one or more external additives to the toner resin particles serving as the toner base particles to mix the toner resin particles with the one or more external additives. During the mixing, mechanical impacts are preferably applied because detachment of the particles of the external additive from surfaces of the toner base particles may be minimized.

A method of applying the mechanical impacts is not particularly limited, and may be appropriately selected in accordance with the intended purpose. Examples of the method include: a method of applying impact force to the mixture of the toner resin particles and the external additive(s) using a blade rotated at high speed; and a method where the mixture of the toner resin particles and the external additive(s) is added to a high-speed air flow to accelerate the motion of the particles to make the particles crush into one another or to make the particles crush into a suitable impact board.

A device used in the method for applying the mechanical impacts is not particularly limited, and may be appropriately selected in accordance with the intended purpose. Examples of the device include an angmill (available from HOSOKAWA MICRON CORPORATION), a device obtained by modifying an I-type mill (available from Nippon Pneumatic Mfg. Co., Ltd.) to reduce pulverization air pressure, a hybridization system (available from NARA MACHINERY CO., LTD.), Kryptron System (available from Kawasaki Heavy Industries, Ltd.), and an automatic mortar.

(Developer)

The developer of the present disclosure includes at least the toner of the present disclosure, and may further include appropriately selected other components, such as a carrier, as necessary.

Since the toner included in the developer of the present disclosure includes the toner resin particles of the present disclosure, the developer significantly contributes to carbon neutrality, and excels in low-temperature fixability and filming resistance. Therefore, the developer has excellent transfer properties, charging properties, etc., and can stably form high quality images.

The developer may be a one-component developer or a two-component developer. In the case where the developer is used for high-speed printers corresponding to information processing speed that has been improved in recent years, the developer is preferably a two-component developer considering improvement in a service life of the developer.

When the developer is a one-component developer, particle diameters of the toner particles do not noticeably vary even after replenishing the toner. Therefore, filming of the toner to a developing roller is minimized, or fusion of the toner to a member used for leveling the toner into a thin layer, such as a blade, is minimized. As a result, excellent and stable developing performance and formation of excellent images are assured even after stirring the developer in a developing device over a long period.

When the developer is a two-component developer, particle diameters of the toner particles do not noticeably vary even after replenishing the developer with the toner over a long period. As result, excellent and stable developing performance and formation of excellent images are assured even after stirring the developer in a developing device over a long period.

<Carrier>

The carrier is not particularly limited, and may be appropriately selected in accordance with the intended purpose. The carrier includes carrier particles. Each of the carrier particles preferably includes a core particle and a resin layer covering the core particle.

<<Core particles>>

A material of the core particles is not particularly limited, and may be appropriately selected in accordance with the intended purpose. Examples of the material of the core particles include a manganese-strontium-based material of from 50 emu/g through 90 emu/g and a manganese-magnesium-based material of from 50 emu/g through 90 emu/g. For assuring image density, moreover, a hard-magnetic material, such as an iron powder of 100 emu/g or greater and magnetite of from 75 emu/g through 120 emu/g, is preferably used. Moreover, a soft-magnetic material, such as a copper-zinc-based magnetic material of from 30 emu/g through 80 emu/g, is preferably used because an impact of the developer held in the form of a brush (i.e., a magnetic brush) against the photoconductor can be reduced, and a high image quality can be assured.

The above-listed examples may be used alone or in combination.

A volume average particle diameter of the core particles is not particularly limited, and may be appropriately selected in accordance with the intended purpose. The volume average particle diameter of the core particles is preferably 10 um or greater and 150 $\mu$m or less, and more preferably 40 $\mu$m or greater and 100 $\mu$m or less. When the volume average particle diameter of the core particles is 10 $\mu$m or greater, a proportion of fine particles to the entire amount of the core particles decreases, and the decreased proportion of the fine particles leads to improvement in magnification per particle, consequently minimizing carrier scattering. When the volume average particle diameter of the core particles is 150 $\mu$m or less, a resulting carrier has a large specific surface area, and the carrier having a large specific surface area reduces toner scattering, consequently assuring excellent reproducibility of a solid image, especially a full-color image having a large solid image area.

When the toner is used for a two-component developer, the toner is mixed with the carrier. An amount of the carrier in the two-component developer is not particularly limited, and may be appropriately selected in accordance with the intended purpose. The amount of the carrier is preferably 90 parts by mass or greater and 98 parts by mass or less, and more preferably 93 parts by mass or greater and 97 parts by mass or less, relative to 100 parts by mass of the two-component developer.

The developer is suitably used for image formation according to various electrophotographic methods known in the art, such as a magnetic one-component developing method, a nonmagnetic one-component developing method, and a two-component developing method.

(Image forming apparatus and image forming method)

The image forming apparatus of the present disclosure includes an electrostatic latent image bearer, an electrostatic latent image forming unit configured to form an electrostatic latent image on the electrostatic latent image bearer, and a developing unit storing a toner and configured to develop the electrostatic latent image formed on the electrostatic latent image bearer with the toner to form a visible image. The image forming apparatus may further include other units. The toner stored in the developing unit is the toner of the present disclosure.

The image forming method discussed in connection with the present disclosure includes forming an electrostatic latent image on an electrostatic latent image bearer (which may be referred to as a formation of an electrostatic latent image hereinafter), and developing the electrostatic latent image formed on the electrostatic latent image bearer with a toner to form a visible image (which may be referred to as developing). The image forming method may further include other steps. The toner used in the developing is the toner of the present disclosure.

The image forming method is suitably performed by the image forming apparatus. The formation of an electrostatic latent image is suitably performed by the electrostatic latent image forming unit. The developing is suitably performed by the developing unit. The above-mentioned other steps are suitably performed by the above-mentioned other units.

<Electrostatic latent image bearer>

A material, structure, and size of the electrostatic latent image bearer (may be referred to as a "photoconductor" hereinafter) are not particularly limited and may be appropriately selected from materials, structures, and sizes known in the art.

Examples of the material of the electrostatic latent image bearer include an inorganic photoconductor and an organic photoconductor.

Examples of the inorganic photoconductor include amorphous silicon and selenium.

Examples of the organic photoconductor include polysilane and phthalopolymethine.

Among the above-listed examples, the material of the electrostatic latent image bearer is preferably amorphous silicon considering a long service life.

As the amorphous silicon photoconductor, for example, the following photoconductor can be used. That is, an amorphous photoconductor produced by heating a support to a temperature of from 50°C through 400°C, and forming a photoconductive layer formed of amorphous silicon (a-Si) on the support according to a film formation method, such as vacuum vapor deposition, sputtering, ion plating, thermal chemical vapor deposition (CVD), photo CVD, and plasma CVD. Among the above-listed examples, the film formation method is preferably plasma CVD where a raw material gas is decomposed by direct-current, high frequency, or microwave glow discharge to deposit an a-Si film on a support.

A shape of the electrostatic latent image bearer is not particularly limited, and may be appropriately selected in accordance with the intended purpose. The shape of the electrostatic latent image bearing member is preferably a cylinder.

An outer diameter of the cylinder of the electrostatic latent image bearer is not particularly limited, and may be appropriately selected in accordance with the intended purpose. The outer diameter is preferably 3 mm or greater and 100 mm or less, more preferably 5 mm or greater and 50 mm or less, and particularly preferably 10 mm or greater and 30 mm or less.

<Electrostatic latent image forming unit and formation of electrostatic latent image>

The electrostatic latent image forming unit is a unit configured to form an electrostatic latent image on the electrostatic latent image bearer.

The formation of an electrostatic latent image includes forming an electrostatic image on the electrostatic latent image bearer.

The formation of an electrostatic latent image is suitably performed by the electrostatic latent image forming unit.

The electrostatic latent image forming unit is not particularly limited, and may be appropriately selected in accordance with the intended purpose. Examples of the electrostatic latent image forming unit include a unit including a charging unit configured to charge a surface of the electrostatic latent image bearer and an exposing unit configured to expose to the surface of the electrostatic latent image bearer to light to correspond to an image to be formed.

The formation of an electrostatic latent image is not particularly limited, and may be appropriately selected in accordance with the intended purpose. For example, the formation of an electrostatic latent image may be performed by charging a surface of the electrostatic latent image bearer, followed by exposing the surface of the electrostatic latent image bearer to light to correspond to an image to be formed.

<<Charging unit and charging>>

The charging unit is not particularly limited, and may be appropriately selected from charging units known in the art in accordance with the intended purpose. Examples of the charging unit include: contact chargers; and non-contact chargers utilizing corona discharge, such as corotron, and scorotron.

The contact charger is preferably equipped with a conductor or semiconductor roller, brush, film, or rubber blade.

For example, the charging is performed by applying voltage to a surface of the electrostatic latent image bearer using the charging unit.

A form of the charging unit may be any shape, such as a magnetic brush and a fur brush, as well as a roller. The form of the charging unit may be selected depending on specifications or an embodiment of the image forming apparatus.

The charging unit is not limited to the contact charger, but the contact charger is preferably used because the charging unit generally generates ozone but an image forming apparatus using the contact charger discharges less ozone.

<<Exposing unit and exposing>>

The exposing unit is not particularly limited, provided that the exposing unit is capable of exposing the surface of the electrostatic latent image bearer charged by the charging unit to light to correspond to an image to be formed. The exposing unit may be appropriately selected in accordance with the intended purpose. Examples of the exposing unit include various exposing units, such as copy optical exposing units, rod lens array exposing units, laser optical exposing units, and liquid crystal shutter optical exposing units.

A light source used for the exposing unit is not particularly limited, and may be appropriately selected in accordance with the intended purpose. Examples of the light source include general light emitters, such as a fluorescent lamp, a tungsten lamp, a halogen lamp, a mercury lamp, a sodium vapor lamp, a light emitting diode (LED), a semiconductor laser (LD), and an electroluminescent light (EL).

For applying only light having a desired wavelength range, various filters, such as a sharp-cut filter, a band-pass filter, a near infrared ray-cut filter, a dichroic filter, an interference filter, and a color temperature conversion filter, may be used.

For example, the exposing may be performed by exposing the surface of the electrostatic latent image bearer to light to correspond to an image to be formed using the exposing unit.

In the present disclosure, a back-exposure system may be employed. The back-exposure system is a system where the back side of the electrostatic latent image bearer is exposed to light to correspond to an image to be formed.

<Developing unit and developing>

The developing unit is a unit storing a toner and configured to develop the electrostatic latent image formed on the electrostatic latent image bearer with the toner to form a visible image.

The developing includes developing the electrostatic latent image formed on the electrostatic latent image bearer with a toner to form a visible image.

The developing is suitably performed by the developing unit.

The developing unit is not particularly limited, and may be appropriately selected in accordance with the intended purpose. The developing unit may employ a dry developing system or a wet developing system. Moreover, the developing unit may be a developing unit for a single color or a developing unit for multiple colors. Among the above-listed examples, the developing unit is preferably a developing device including a stirrer and a rotatable developer bearer, where the stirrer is configured to stir the toner to charge the toner with friction, and the developer bearer includes a magnetic field generating unit inside of the developer bearer and is configured to bear the toner on a surface of the developer bearer.

In the developing unit, the toner and a carrier are stirred to charge the toner with friction, the charged toner is held on a rotating magnetic roller in the form of a brush to form a magnetic brush. The magnetic roller is disposed close to the electrostatic latent image bearer, thus part of the toner constituting the magnetic brush formed on the surface of the magnetic roller is moved onto a surface of the electrostatic latent image bearer by electric suction force. As a result, the electrostatic latent image is developed with the toner to form a visible image formed of the toner on the surface of the electrostatic latent image bearer.

The carrier is not particularly limited, and may be appropriately selected in accordance with the intended purpose. For example, the carrier described in the section of (Developer) may be used.

<Other units and other steps>

The above-mentioned other units are not particularly limited, and may be appropriately selected in accordance with the intended purpose. Examples of the above-mentioned other units include a transferring unit, a fixing unit, a cleaning unit, a charge-eliminating unit, a recycling unit, and a controlling unit.

The above-mentioned other steps are not particularly limited, and may be appropriately selected in accordance with the intended purpose. Examples of the above-mentioned other steps include transferring, fixing, cleaning, charge eliminating, recycling, and controlling.

<<Transferring unit and transferring>>

The transferring unit is a unit configured to transfer the visible image, which has been formed by the developing unit, to a recording medium.

The transferring including transferring the visible image, which has been formed in the developing, to a recording medium.

The transferring is suitably performed by the transferring unit.

The transferring unit is not particularly limited, and may be appropriately selected in accordance with the intended purpose. A preferable embodiment of the transferring unit includes a primary transferring unit and a secondary transferring unit. The primary transferring unit is configured to transfer the visible images onto an intermediate transfer member to form a composite transfer image. The secondary transferring unit is configured to transfer the composite transfer image to a recording medium.

The transferring is not particularly limited, and may be appropriately selected in accordance with the intended purpose. A preferable embodiment of the transferring includes primary transferring a visible image on an intermediate transfer member, followed by secondary transferring the visible image onto a recording medium. Specifically, the transferring may be performed, for example, by charging the photoconductor using a transfer charger to transfer the visible image from the photoconductor, where the transferring may be performed by the transferring unit.

When an image secondary-transferred onto the recording medium is a color image made up of two or more color-toners, single-color toners of different colors are sequentially superimposed on the intermediate transfer member by the transferring unit to form images on the intermediate transfer member, and secondary transferring the images on the intermediate transfer member collectively to the recording medium.

The intermediate transfer member is not particularly limited, and may be appropriately selected from transfer members know in the art in accordance with the intended purpose. Examples of the intermediate transfer member include a transfer belt.

The transferring unit (e.g., the primary transferring unit and the secondary transferring unit) preferably includes at least a transfer member configured to charge and release the visible image formed on the photoconductor to the side of the recording medium.

The transfer member is not particularly limited, and may be appropriately selected in accordance with the intended purpose. Examples of the transfer member include a corona transfer charger using corona discharge, a transfer belt, a transfer roller, a pressure transfer roller, and an adhesion transfer member.

The recording medium is typically plain paper. The recording medium is not particularly limited, provided that an unfixed image before developing can be transferred on the recording medium. The recording medium may be appropriately selected in accordance with the intended purpose. As the recording medium, a PET base for an overhead projector (OHP) may be used.

<<Fixing unit and fixing>>

The fixing unit is a unit configured to fix the transferred visible image on the recording medium.

The fixing includes fixing the transferred visible image on the recording medium.

The fixing is suitably performed by the fixing unit.

The fixing unit is not particularly limited, and may be appropriately selected in accordance with the intended purpose. The fixing unit is preferably a heat-press member known in the art.

The heat-press member is not particularly limited, and may be appropriately selected in accordance with the intended purpose. Examples of the heat-press member include: a combination of a heat roller and a press roller; and a combination of a heat roller, a press roller, and an endless belt.

In the present disclosure, for example, a known optical fixing device may be used in combination with or instead of the fixing unit in accordance with the intended purpose.

The fixing is not particularly limited, and may be appropriately selected in accordance with the intended purpose. For example, the fixing may be performed every time an image of each color toner is transferred to the recording medium, or may be performed once images of all of color toners are superimposed on the recording medium.

A heating temperature of the heat-press member is not particularly limited, and may be appropriately selected in accordance with the intended purpose. The heating temperature is preferably 80°C or higher and 200°C or lower.

The surface pressure applied during the fixing is not particularly limited, and may be appropriately selected in accordance with the intended purpose. The surface pressure is preferably 10 N/cm$^2$ or greater and 80 N/cm$^2$ or less.

<<Cleaning unit and cleaning>>

The cleaning unit is a unit configured to remove the toner remaining on the photoconductor.

The cleaning includes removing the toner remaining on the photoconductor.

The cleaning is suitably performed by the cleaning unit.

The cleaning unit is not particularly limited, and may be appropriately selected in accordance with the intended purpose. Examples of the cleaning unit include a magnetic brush cleaner, an electrostatic brush cleaner, a magnetic roller cleaner, a blade cleaner, a brush cleaner, and a web cleaner.

<<Charge-eliminating unit and charge eliminating>>

The charge-eliminating unit is a unit configured to apply charge-eliminating bias to the photoconductor to eliminate the charge of the photoconductor.
The charge eliminating includes applying charge-eliminating bias to the photoconductor to eliminate the charge of the photoconductor.
The charge eliminating is suitably performed by the charge-eliminating unit.
The charge-eliminating unit is not particularly limited, and may be appropriately selected in accordance with the intended purpose. Examples of the charge-eliminating unit include a charge-eliminating lamp.

<<Recycling unit and recycling>>

The recycling unit is a unit configured to transport the toner, which has been removed by the cleaning unit, to the developing unit to recycle.
The recycling includes transporting the toner, which has been removed by the cleaning, to the developing unit to recycle in the developing.
The recycling is suitably performed by the recycling unit.
The recycling unit is not particularly limited, and may be appropriately selected in accordance with the intended purpose. Examples of the recycling unit include a transporting unit known in the art.

<<Controlling unit and controlling>>

The controlling unit is a unit configured to control operation of each unit.
The controlling includes controlling operation of each unit in each step.
The controlling is suitably performed by the controlling unit.
The controlling unit is not particularly limited, and may be appropriately selected in accordance with the intended purpose. Examples of the controlling unit include devices, such as a sequencer and a computer.
Next, embodiments of the image forming apparatus of the present disclosure and the image forming method of the present disclosure will be described with reference to Figs. 2 to 5.
A color image forming apparatus 100A illustrated in Fig. 2 includes a photoconductor drum 10 (may be referred to as a "photoconductor 10" hereinafter) serving as the electrostatic latent image bearer, a charging roller 20 serving as the charging unit, an exposure device 30 serving as the exposing unit, a developing device 40 serving as the developing unit, an intermediate transfer member 50, a cleaning device 60 serving as the cleaning unit having a cleaning blade, and a charge-eliminating lamp 70 serving as the charge-eliminating unit.
The intermediate transfer member 50 is an endless belt, and is rotatably driven by three rollers 51 in the direction indicated with an arrow in Fig. 2. The three rollers 51 are disposed inside the loop of the endless belt to support the endless belt. Part of the three rollers 51 may also function as a transfer bias roller capable of applying predetermined transfer bias (or primary transfer bias) to the intermediate transfer member 50. The cleaning device 90 including the cleaning blade is disposed closely to the intermediate transfer member 50. Moreover, the transfer roller 80 is disposed closely to the intermediate transfer member 50 in a manner that the transfer roller 80 faces the intermediate transfer member 50. The transfer roller 80 serves as the transferring unit capable of applying transfer bias for transferring (or secondary transferring) the developed image (also referred to as the visible image or the toner image) to transfer paper 95 serving as the recording medium. The corona charger 58 configured to apply charge to the toner image on the intermediate transfer member 50 is disposed in a position at the periphery of the intermediate transfer member 50, where the position is located between a contact area between the photoconductor 10 and the intermediate transfer member 50, and the contact area between the intermediate transfer member 50 and the transfer paper 95 relative to the rotational direction of the intermediate transfer member 50.
The developing device 40 includes a developing belt 41 serving as the developer bearing member, and a black developing unit 45K, a yellow developing unit 45Y, a magenta developing unit 45M, and a cyan developing unit 45C, which are disposed in series at the periphery of the developing belt 41. The black developing unit 45K includes a developer storage unit 42K, a developer supply roller 43K, and a developing roller 44K. The yellow developing unit 45Y includes a developer storage unit 42Y, a developer supply roller 43Y, and a developing roller 44Y. The magenta developing unit 45M includes a developer storage unit 42M, a developer supply roller 43M, and a developing roller 44M. The cyan developing unit 45C includes a developer storage unit 42C, a developer supply roller 43C, and a developing roller 44C. Moreover, the developing belt 41 is an endless belt rotatably supported by two or more belt rollers. Part of the developing belt 41 comes into contact with the electrostatic latent image bearer 10.

In the color image forming apparatus 100A of Fig. 2, for example, the charging roller 20 uniformly charges a surface of the photoconductor drum 10. The exposure device 30 exposes the charged surface of the photoconductor drum 10 to light to correspond to an image to be formed, thus, forming an electrostatic latent image. The toner is supplied from the developing device 40 to develop the electrostatic latent image formed on the photoconductor drum 10, thus, forming a toner image. Voltage is applied from the roller 51 to the toner image to transfer (primary transfer) the toner image onto the intermediate transfer member 50, followed by transferring (secondary transferring) onto transfer paper 95. As a result, the transferred image is formed on the transfer paper 95. The residual toner on the photoconductor 10 is removed by the cleaning device 60. The residual charge of the photoconductor 10 is temporarily removed by the charge-eliminating lamp 70.

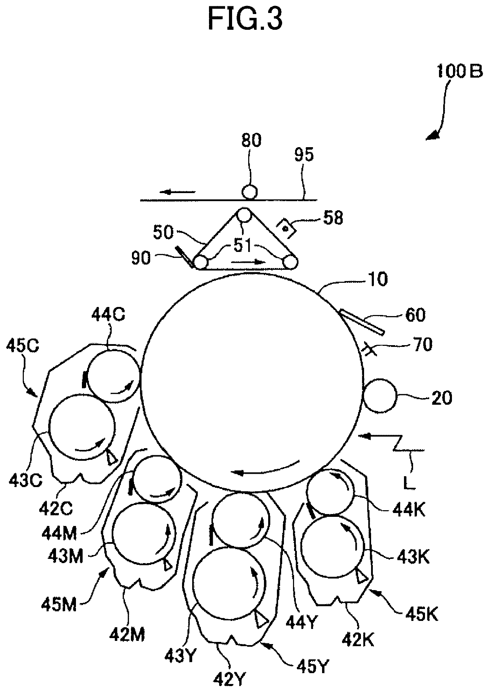

Fig. 3 illustrates another example of the image forming apparatus of the present disclosure. The image forming apparatus 100B has the structure identical to the structure of the image forming apparatus 100A of Fig. 2, except that the developing belt 41 is not disposed, and the black developing unit 45K, the yellow developing unit 45Y, the magenta developing unit 45M, and the cyan developing unit 45C are disposed at the periphery of the photoconductor drum 10 to directly face the photoconductor drum 10.

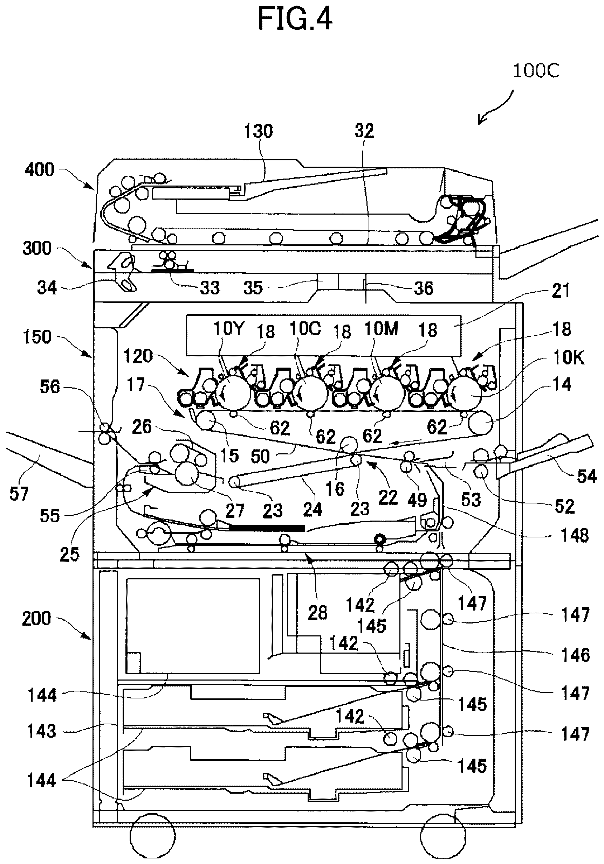

Fig. 4 illustrates yet another example of the image forming apparatus of the present disclosure. The image forming apparatus 100C illustrated in Fig. 4 includes a photocopier main body 150, a paper feeding table 200, a scanner 300, and an automatic document feeder (ADF) 400.

An intermediate transfer member 50, which is an endless belt, is disposed at the central part of the photocopier main body 150.

The intermediate transfer member 50 is supported by support rollers 14, 15, and 16, and is rotatable in the clockwise direction in Fig. 4. An intermediate transfer member cleaning device 17 is disposed closely to the support roller 15. The intermediate transfer member cleaning device 17 is configured to remove the residual toner on the intermediate transfer member 50. A tandem developing device 120 is disposed to face the section of the intermediate transfer member 50 supported by the support rollers 14 and 15. In the tandem developing device 120, four image forming units 18, i.e., a yellow image forming unit, a cyan image forming unit, a magenta image forming unit, and a black image forming unit, are arranged in series along the traveling direction of the intermediate transfer member 50. An exposure device 21 serving as the exposing unit is disposed closely to the tandem developing device 120. A secondary transfer device 22 is disposed at the side of the intermediate transfer member 50 opposite to the side where the tandem developing device 120 is disposed. The secondary transfer device 22 includes a secondary transfer belt 24. The secondary transfer belt 24 is an endless belt and is supported by a pair of rollers 23. Transfer paper borne on and transported by the secondary transfer belt 24 comes into contact with the intermediate transfer member 50. A fixing device 25 serving as the fixing unit is disposed closely to the secondary transfer device 22. The fixing device 25 includes a fixing belt 26, which is an endless belt, and a press roller 27 disposed to press against the fixing belt 26.

The tandem image forming apparatus includes a sheet reverser 28 disposed closely to the secondary transfer device 22 and to the fixing device 25. The sheet reverser 28 is configured to reverse transfer paper to perform image formation on both sides of the transfer paper.

Next, formation of a full-color image (i.e., a color copy) using the tandem developing device 120 will be described. First, a document is set on a document table 130 of the automatic document feeder (ADF) 400. Alternatively, a document is set on contact glass 32 of a scanner 300 by opening the automatic document feeder 400. Once the document is set, the automatic document feeder 400 is closed.

Once a start switch is pressed, if the document is set on the automatic document feeder 400, the document is transported onto the contact glass 32, and then the scanner 300 is driven. If the document is initially set on the contact glass 32, the scanner 300 is immediately driven once the start switch is pressed. Then, a first carriage 33 and a second carriage 34 are driven to scan the document. During the scanning, the first carriage 33 irradiates a surface of the document with light emitted from a light source, and the light reflected from the surface of the document is again reflected by a mirror of the second carriage 34 to pass the light through an imaging forming lens 35. The light is then received by a reading sensor 36 to read the color document (e.g., the color image) to acquire image information of black, yellow, magenta, and cyan.

The image information of each of black, yellow, magenta, and cyan is transmitted to the corresponding image forming unit 18 (the black image forming unit, the yellow image forming unit, the magenta image forming unit, or the cyan image forming unit) of the tandem developing device 120. By means of each image forming unit, a toner image of each color (black, yellow, magenta, or cyan) is formed.

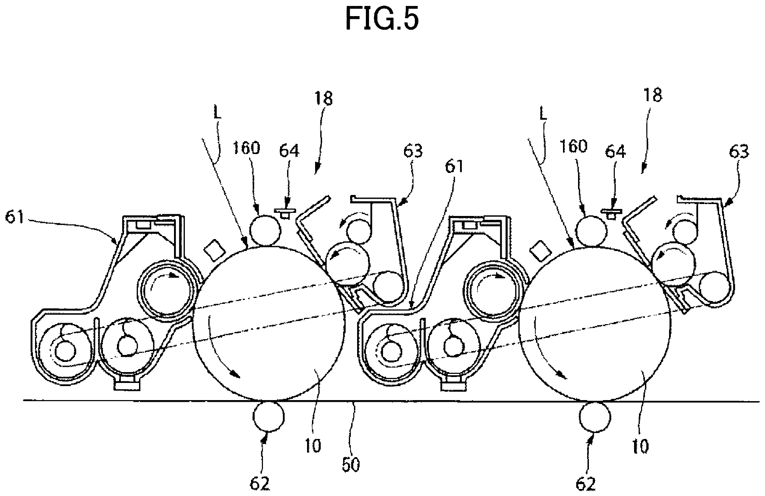

Specifically, as illustrated in Fig. 5, each image forming unit 18 (the black image forming unit, the yellow image forming unit, the magenta image forming unit, or the cyan image forming unit) of the tandem developing device 120 includes: an electrostatic latent image bearer 10 (a black electrostatic latent image bearer 10K, a yellow electrostatic latent image bearer 10Y, a magenta electrostatic latent image bearer 10M, or a cyan electrostatic latent image bearer 10C); a charging device 160 that is the charging unit configured to uniformly charge a surface of the electrostatic latent image bearer 10; an exposing device configured to expose the electrostatic latent image bearer to light (L in Fig. 5) to correspond to each color image based on the corresponding color image information, to thereby form an electrostatic latent image corresponding to each color image on the electrostatic latent image bearer; a developing device 61 configured to develop the electrostatic latent image with the corresponding color toner (the black toner, the yellow toner, the magenta toner, or the cyan toner), to thereby form a toner image of the corresponding color toner; a transfer charger 62 configured to transfer the toner image to an intermediate transfer member 50; a cleaning device 63; and a charge-eliminating unit 64.

Each image forming unit 18 can form an image of a single color (e.g., a black image, a yellow image, a magenta image, and a cyan image) based on the corresponding color image information. The black image formed on the black electrostatic latent image bearer 10K, the yellow image formed on the yellow electrostatic latent image bearer 10Y, the magenta image formed on the magenta electrostatic latent image bearer 10M, and the cyan image formed on the cyan electrostatic latent image bearer 10C in the above-described manner are sequentially transferred (or primary transferred) onto the intermediate transfer member 50 that is rotatably supported by the support rollers 14, 15, and 16. The black image, the yellow image, the magenta image, and the cyan image are superimposed on the intermediate transfer member 50 to form a composite color image (i.e., a transferred color image).

In the paper feeding table 200, meanwhile, one of paper feeding rollers 142 is selectively driven to rotate to feed sheets (i.e., recording paper) from one of paper feeding cassettes 144 stacked in a paper bank 143. The sheets are separated one by one by a separation roller 145 to feed each sheet into a paper feeding path 146, and the fed sheet is transported by a transport roller 147 to guide the sheet into a paper feeding path 148 inside the photocopier main body 150. The sheet is then caused to collide with a registration roller 49 to stop. Alternatively, a paper feeding roller 142 is driven to rotate to feed sheets (i.e., recording paper) on a manual feed tray 54, and the sheets are separated and fed into a manual paper feeding path 53 one by one with a separation roller 52. Similarly, the fed sheet is caused to collide with a registration roller 49 to stop. The registration roller 49 is typically grounded during use, but the registration roller 49 may be used in the state where bias is applied to the registration roller 49 for removing paper dusts from sheets.

Synchronizing with the timing of the composite color image (i.e., the transferred color image) formed on the intermediate transfer member 50, the registration roller 49 is driven to rotate to feed the sheet (i.e., the recording paper) between the intermediate transfer member 50 and the secondary transfer device 22. The composite color image (i.e., the transferred color image) is then transferred (or secondary transferred) onto the sheet (i.e., the recording paper) by the secondary transfer device 22. In the manner as described above, the color image is transferred and formed onto the sheet (i.e., the recording paper). After transferring the image, the residual toner on the intermediate transfer member 50 is cleaned by the intermediate transfer member cleaning device 17.

The sheet (i.e., the recording paper) on which the color image has been transferred is transported by the secondary transfer device 22 to send the sheet to the fixing device 25. By means of the fixing device 25, heat and pressure are applied to the composite color image (i.e., the transferred color image) to fix the composite color image to the sheet (i.e., the recording paper). Thereafter, the traveling direction of the sheet (i.e., the recording paper) is switched by the switching claw 55 to eject the sheet (i.e., the recording paper) with an ejection roller 56 to stack the sheet (i.e., the recording paper) on the paper ejection tray 57. Alternatively, the traveling direction of the sheet (i.e., the recording paper) is switched by the switching claw 55, and the sheet is flipped by the sheet reverser 28 and is returned to the transfer position. After recording an image also on the back side of the sheet, the sheet is ejected by the ejection roller 56 to stack on the paper ejection tray 57.

(Toner storage unit)

The toner storage unit of the present disclosure includes a unit configured to store a toner, and a toner stored in the unit.

The toner stored in the toner storage unit is the toner of the present disclosure. Therefore, the toner storage unit of the present disclosure is environmentally friendly. When the toner storage unit is mounted in the image forming apparatus of the present disclosure and image formation is performed by the image forming apparatus, images are formed with the toner of the present disclosure, consequently achieving both desirable filming resistance and low-temperature fixability.

An embodiment of the toner storage unit is not particularly limited, provided that the toner storage unit is capable of storing the toner. The embodiment of the toner storage unit may be appropriately selected in accordance with the intended purpose. Examples of the embodiment of the toner storage unit include a toner storage container, a developing device, and a process cartridge.

<Toner storage container>

The toner storage container is a container in which the toner is stored.

The toner storage container is not particularly limited, and may be appropriately selected from toner storage containers known in the art. Examples of the toner storage container include a combination of a container main body and a cap.

A size of the container main body is not particularly limited, and may be appropriately selected.

A shape of the container main body is not particularly limited, and may be appropriately selected. The shape of the container main body is preferably a cylinder.

A structure of the container main body is not particularly limited, and may be appropriately selected. When a groove is spirally formed along an inner circumferential surface of the container main body, as the container main body is rotated, the toner, which is the content of the container, moves towards an outlet of the container main body. The structure of the container main body is preferably a structure where part of or the whole of the groove spirally formed along the inner circumference surface of the cylindrical container main body is pleated like a bellows.

A material of the container main body is not particularly limited, and may be appropriately selected. The material of the container main body is preferably a material capable of achieving great precision in size. Examples of the material of the container main body include resin materials, such as a polyester resin, a polyethylene resin, a polypropylene resin, a polystyrene resin, a polyvinyl chloride resin, polyacrylic acid, a polycarbonate resin, an ABS resin, and a polyacetal resin. The above-listed examples may be used alone or in combination.

Since the toner storage container facilitates easy storage and transportation of the toner, and allows effortless handling, the toner storage container is detachably mounted in a process cartridge or an image forming apparatus, and is used for replenishing the toner.

<Developing device>

The developing device is a developing unit in which the toner is stored.

The developing unit is not particularly limited, and may be appropriately selected in accordance with the intended purpose. For example, the developing unit includes the toner storage container and a toner bearer configured to bear and transport the toner stored in the toner storage container.

The developing unit may further include a regulating member configured to regulate a thickness of a layer of the toner borne on the toner bearer.

<Process cartridge>

The process cartridge includes at least an electrostatic latent image bearer and a developing unit as an integrated body, stores the toner therein, and is detachably mounted in an image forming apparatus. The process cartridge may further include at least one selected from the group consisting of a charging unit, an exposing unit, a cleaning unit, and a charge-eliminating unit, as necessary.

As an example of the process cartridge, suitably used is a process cartridge that is configured such that the process cartridge is detachably mounted in various image forming apparatuses, and includes at least an electrostatic latent image bearer and a developing unit, where the electrostatic latent image bearer is configured to bear an electrostatic latent image thereon, and the developing unit is configured to develop the electrostatic latent image borne on the electrostatic latent image bearer with the toner to form a toner image. The process cartridge may further include other units as necessary.

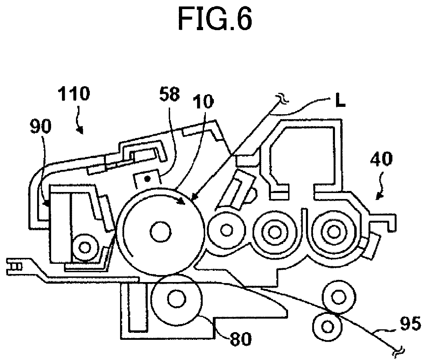

Next, an embodiment of the process cartridge is illustrated in Fig. 6. As illustrated in Fig. 6, the process cartridge 110 of the present disclosure includes an electrostatic latent image bearer 10, which is mounted inside the process cartridge 110, and further includes a charger 58 serving as a charging unit, a developing device 40 serving as a developing unit, and a cleaning device 90 serving as a cleaning unit. The process cartridge may further include other units as necessary. In Fig. 6, the reference L denotes exposure light emitted from an exposing unit (not illustrated) and the numerical reference 95 denotes recording paper.

As the electrostatic latent image bearer 10, an electrostatic latent image bearer identical to the electrostatic latent image bearer in the image forming apparatus may be used. Moreover, an appropriately selected charger may be used as the charger 58.

According to an image forming process performed by the process cartridge illustrated in Fig. 6, an image is formed in the following manner. The electrostatic latent image bearer 10 is charged by the charger 58 while rotating in the direction indicated with the arrow, and the charged surface of the electrostatic latent image bearer 10 is exposed to exposure light L by the exposing unit to form an electrostatic latent image corresponding to the exposure image formed of the exposure light L.

The electrostatic latent image is developed with a toner by the developing device 40 to form a toner image, the toner image is transferred to recording paper 95 by the transfer roller 80, and the recording paper 95 on which the toner image is printed is discharged. After transferring the image, the surface of the electrostatic latent image bearer 10 is cleaned by the cleaning device 90, and the residual charge of the electrostatic latent image bearer 10 is eliminated by a charge-eliminating unit (not illustrated). Then, the above-described processes are repeated again.

Examples

The present disclosure will be concretely described below by way of Production Examples, Preparation Examples, Examples, and Comparative Examples. The present disclosure should not be construed as being limited to these Production Examples, Preparation Examples, and Examples. In Production Examples, Preparation Examples, Examples, and Comparative Examples, "%" denotes "% by mass" and "part(s)" denotes "part(s) by mass" unless otherwise stated. Moreover, each amount in Examples and Comparative Examples denotes an amount of each starting material on solid basis.

Measurement values for each Production Examples, Preparation Examples, Examples, and Comparative Examples were measured in the following manner.

<<Measurement of amine value>>

In Production Examples below, an amine value of a ketimine compound was measured according to the method specified in JIS K7237.

<<Measurement of glass transition temperature (Tg) and melting point (Tm)>>

Glass transition temperatures (Tg) of an amorphous polyester resins A and an amorphous polyester resins B obtained in Production Examples below, and a melting points (Tm) of a crystalline polyester resins C were measured by means of a DSC system (Q-200, a differential scanning calorimeter, available from TA Instruments Japan Inc.).

First, approximately 5.0 mg of a sample was placed in a sample container formed of aluminum, the sample container was placed on a holder unit, and the holder unit was set in an electric furnace. Subsequently, the measurement sample was heated from -80°C to 150°C in a nitrogen atmosphere at a heating rate of 10 °C/min (first heating). Then, the measurement sample was cooled from 150°C down to -80°C at a cooling rate of 10 °C/min, followed by again heating up to 150°C at a heating rate of 10 °C/min (second heating). DSC curves of the first heating and the second heating were each measured by means of a differential scanning calorimeter (Q-200, available from TA Instruments Japan Inc.).

The DSC curve of the second heating was selected from the obtained DSC curves, and a glass transition temperature of the sample from the second heating was determined using an analysis program installed in the Q-200 system.

Moreover, the DSC curve of the second heating was selected from the obtained DSC curves, and an endothermic peak top temperature of the sample from the second heating was determined as a melting point using an analysis program installed in the Q-200 system.

<<Measurement of molecular weight>>

Molecular weights of amorphous polyester resins A, amorphous polyester resins B, and crystalline polyester resins C obtained in Production Examples below were measured in the following manner. The amorphous polyester resin A, amorphous polyester resin B, or crystalline polyester resin C was dissolved in tetrahydrofuran (THF) (including a stabilizer, available from FUJIFILM Wako Pure Chemical Corporation) or chloroform to prepare a solution having a concentration of 0.15% by mass, and the resulting solution was filtered through a 0.2 $\mu$m-filter. The resulting filtrate was provided as a sample and measured by means of a gel permeation chromatography (GPC) system under the following analysis conditions.

[Analysis conditions]

Gel permeation chromatography (GPC) system: GPC-8220GPC (available from Tosoh Corporation)
Columns: 3 columns connected, TSKgel® SuperHZM-H 15 cm (available from Tosoh Corporation)
Temperature: 40°C
Detector: refractive index (RI) detector
Solvent: tetrahydrofuran (THF) or chloroform
Feeding rate: 0.35 mL/min
Sample: injecting 100 $\mu$L of a 0.15% by mass sample

For measuring a molecular weight of a sample, a molecular weight distribution of the sample was calculated from relation between logarithmic values and count numbers of calibration curves prepared using several monodisperse polystyrene standard samples. As standard polystyrene samples for preparing calibration curves, Showdex® STANDARD (available from SHOWA DENKO K.K.) Std. Nos. S-6550, S-1700, S-740, S-321, S-129, S-10, S-2.9, and S-0.6 were used.

<<Measurement of acid value>>

In Examples and Comparative Examples below, acid values of amorphous polyester resins B and crystalline polyester resins C were measured according to the measuring method specified in JIS K0070-1992 under the following conditions.

To 120 mL of toluene, 0.5 g of each resin (or 0.3 g of an ethyl acetate-soluble component) was added. The resulting mixture was stirred for approximately 10 hours at room temperature (23°C) to dissolve the resin. To the resulting solution, 30 mL of ethanol was further added to prepare a sample solution.

An acid value of the sample solution was measured at 23°C by means of an automatic potentiometric titrator (DL-53 Titrator, available from METTLER TOLEDO) and an electrode DG113-SC (available from METTLER TOLEDO) and the result was analyzed using analysis software LabX Light Version 1.00.000. The mixed solvent made up of 120 mL of toluene and 30 mL of ethanol was used for the titrator.

The acid value was measured in accordance with the above-described measuring method. Specifically, an acid value was calculated in the following manner. The titration was performed with a 0.1 N potassium hydroxide/alcohol solution, where the concentration of the solution had been adjusted in advance, and an acid value was determined from the titration volume according to the following formula.

$$\text{Acid value (mgKOH/g)} = \text{titration volume (mL)} \times \text{N} \times 56.1 \text{ (mg/mL)/mass of sample (g)}$$

In the formula above, "N" is a factor of the 0.1 N potassium hydroxide/alcohol solution.

<<Measurement of hydroxyl value>>

In Examples and Comparative Examples, hydroxyl values of amorphous polyester resins B and crystalline polyester resins C were measured in accordance with the measuring method specified in JIS K0070-1966 under the following conditions.

Each resin was weighed and collected in a 100 mL measuring flask by 0.5 g, and 5 mL of an acetylation reagent was precisely added to the collected resin. Thereafter, the measuring flask was immersed in a bath of 100°C ± 5°C to heat the resulting mixture. One hour to two hours later, the measuring flask was taken out from the bath, followed by leaving the measuring flask to stand to cool the mixture. Thereafter, water was added, and the resulting mixture was agitated to decompose acetic acid anhydride. Subsequently, the resulting mixture was heated for 10 minutes or longer by placing the flask in the bath to complete the decomposition, followed by leaving to stand to cool. Then, the inner wall of the flask was adequately washed with an organic solvent to prepare a sample solution.

Potentiometric titration of the sample solution was performed at 23°C with a N/2 potassium hydroxide/methanol solution by means of an automatic potentiometric titrator (DL-53 Titrator, available from METTLER TOLEDO) and an electrode DG113-SC (available from METTLER TOLEDO) to measure a hydroxyl value, and the result was analyzed using analysis software LabX Light Version 1.00.000. The mixed solvent made up of 120 mL of toluene and 30 mL of ethanol was used for the titrator.

<<Measurement of volume average particle diameter>>

A volume average particle diameter of particles included in each of amorphous polyester resin B dispersion liquids, crystalline polyester resin C dispersion liquids, wax dispersion liquids, and Desolventized Slurry 1 obtained in Preparation Examples below was measured by means of a particle size distribution analyzer, Nanotrac (UPA-EX150, available from NIKKISO CO., LTD., dynamic light scattering/laser doppler velocimetry).

First, only a solvent of a dispersion liquid of each sample was measured in advance as a background measurement. Subsequently, the dispersion liquid in which each sample was dispersed was measured with adjusting a concentration of the dispersion liquid to the predetermined measuring concentration range.

<<Measurement of average circularity>>

Average circularity of particles in fusing in each of Examples and Comparative Examples below was measured by means of a flow particle image analyzer (Sysmex FPIA-3000, available from Malvern Panalytical Ltd.).

The average circularity is defined by the following formula.

```
(Average circularity) = (peripheral length of circle having
identical area to area of projected image of
particle)/(peripheral length of projected image of particle)
```

As a specific measuring method, 0.2 mL of a surfactant (alkyl benzene sulfonic acid salt) serving as a dispersing agent was added to 100 mL of water in a container to prepare a mixture. Impurities solids had been removed from water prior to the addition of the surfactant. Then, 0.1 g of a sample was added to the mixture to prepare a suspension. Next, the suspension, in which the sample was dispersed, was dispersed for 2 minutes by means of an ultrasonic disperser, and the concentration of the dispersion liquid was adjusted to the range of 3,000 particles/$\mu$L to 10,000 particles/$\mu$L. The resulting dispersion liquid was measured by means of a flow particle image analyzer (Sysmex FPIA-3000, available from Malvern Panalytical Ltd.) to determine an average particle diameter, average circularity, and standard deviation (SD) of circularity.

Note that, a circle equivalent diameter was determined as a particle diameter, an average particle diameter was determined using circle equivalent diameters (number basis), and analysis conditions of the flow particle image analyzer were as follows.

[Analysis conditions]

Particle diameter range: 0.5 $\mu$m $\leq$ circle equivalent diameter (number basis) $\leq$ 200.0 um
Particle shape range: 0.93< circularity $\leq$ 1.00

<<Measurement of volume average particle diameter (D4) and number average particle diameter (Dn) of toner>>

A volume average particle diameter (D4), number average particle diameter (Dn), and ratio (D4/Dn) of each of the toners obtained in Examples and Comparative Examples were measured by means of COULTER MULTISIZER II (available from Beckman Coulter, Inc.) .

First, 0.1 mL of a surfactant (i.e., polyoxyethylene alkyl ether) serving as a dispersing agent was added to 100 mL of an aqueous electrolyte solution (ISOTON-II, available from Beckman Coulter, Inc.) to prepare a mixed solution. To the mixed solution, 2 mg of a sample was added. The aqueous electrolyte solution, in which the sample was suspended, was dispersed for 2 minutes by means of an ultrasonic disperser, and the volume and number of the toner particles of each toner were measured by means of the measuring device (COULTER MULTISIZER II) using a 100 $\mu$m-aperture as an aperture to calculate a volume distribution and number distribution of the toner particles of each toner. A volume average particle diameter (D4) and number average particle diameter (Dn) of the toner particles of each toner were determined from the obtained distributions. Based on the obtained values, moreover, a ratio (D4/Dn) of the volume average particle diameter (D4) to the number average particle diameter (Dn) and an amount (% by number) of a component of particles having diameters of 2 $\mu$m or less were determined.

The following 13 channels were used: 2.00 $\mu$m or greater and less than 2.52 $\mu$m; 2.52 um or greater and less than 3.17 $\mu$m; 3.17 um or greater and less than 4.00 $\mu$m; 4.00 um or greater and less than 5.04 um; 5.04 um or greater and less than 6.35 um; 6.35 um or greater and less than 8.00 $\mu$m; 8.00 um or greater and less than 10.08 um; 10.08 um or greater and less than 12.70 um; 12.70 um or greater and less than 16.00 um; 16.00 um or greater and less than 20.20 $\mu$m; 20.20 um or greater and less than 25.40 $\mu$m; 25.40 um or greater and less than 32.00 $\mu$m; and 32.00 um or greater and less than 40.30 um. The particles having particle diameters of 2.00 um or greater and less than 40.30 um were the target for the measurement.

(Production Example 1: synthesis of ketimine)

A reaction vessel equipped with a stirring rod and a thermometer was charged with 170 parts of isophoronediamine and 75 parts of methyl ethyl ketone, and the resulting mixture was allowed to react for 5 hours at 50°C to thereby obtain Ketimine Compound 1. Ketimine Compound 1 had an amine value of 418 mgKOH/g.

(Production Example A-1: synthesis of amorphous polyester resin A-1)

<Synthesis of prepolymer A-1>

A reaction vessel equipped with a cooling tube, a stirrer, and a nitrogen-inlet tube was charged with 3-methyl-1,5-pentanediol, isophthalic acid, and plant-derived sebacic acid (available from KOKURA GOSEI KOGYO. LTD.) together with titanium tetraisopropoxide (1,000 ppm relative to a resin component) in a manner that a molar ratio [OH/COOH] of a hydroxyl group to a carboxyl group was to be 1.1, a diol component was made up of the 3-methyl-1,5-pentanediol (100 mol%), and a dicarboxylic acid component was made up of the isophthalic acid (66 mol%) and the sebacic acid (34 mol%). The reaction vessel was further charged with trimethylolpropane in a manner that an amount of the trimethylolpropane was to be 1.5 mol% relative to a total amount of the monomers. The resulting mixture was heated up to 200°C over the course of approximately 4 hours, followed by heating up to 230°C for 2 hours, and the reaction was continued until generation of effluent stopped. Thereafter, the reaction product was further allowed to react for 5 hours under the reduced pressure of from 10 mmHg through 15 mmHg to thereby yield Intermediate Polyester A-1.

Next, a reaction vessel equipped with a cooling tube, a stirrer, and a nitrogen-inlet tube was charged with Intermediate Polyester A-1 obtained and isophorone diisocyanate (IPDI) in a manner that a molar ratio (NCO/OH) of an isocyanate group of IPDI to a hydroxyl group of Intermediate Polyester A-1 was to be 2.0. The resulting mixture was diluted with ethyl acetate to prepare a 50% ethyl acetate solution. Thereafter, the 50% ethyl acetate solution was allowed to react for 5 hours at 100°C to thereby yield Prepolymer A-1.

<Synthesis of amorphous polyester A-1>

Prepolymer A-1 obtained was stirred in a reaction vessel equipped with a heater, a stirrer, and a nitrogen inlet tube, and Ketimine Compound 1 was added to the reaction vessel through dripping in a manner that a molar amount of amine of Ketimine Compound 1 was be equal to a molar amount of isocyanate of Prepolymer A-1. After stirring the resulting mixture for 10 hours at 45°C, an elongation product of the prepolymer was collected. The obtained elongation product of the prepolymer was vacuum dried at 50°C until an amount of the residual ethyl aetate was reduced to 100 ppm or less to thereby yield Amorphous Polyester Resin A-1. The physical properties of Amorphous Polyester Resin A-1 are presented in Table 1 below.

(Production Example A-2: synthesis of amorphous polyester resin A-2)

<Synthesis of prepolymer A-2>

A reaction vessel equipped with a cooling tube, a stirrer, and a nitrogen-inlet tube was charged with 3-methyl-1,5-pentanediol, isophthalic acid, and plant-derived sebacic acid (available from KOKURA GOSEI KOGYO. LTD.) together with titanium tetraisopropoxide (1,000 ppm relative to a resin component) in a manner that a molar ratio [OH/COOH] of a hydroxyl group to a carboxyl group was to be 1.1, a diol component was made up of the 3-methyl-1,5-pentanediol (100 mol%), and a dicarboxylic acid component was made up of the isophthalic acid (83 mol%) and the sebacic acid (17 mol%). The reaction vessel was further charged with trimethylolpropane in a manner that an amount of the trimethylolpropane was to be 1.5 mol% relative to a total amount of the monomers. The resulting mixture was heated up to 200°C over the course of approximately 4 hours, followed by heating up to 230°C for 2 hours, and the reaction was continued until generation of effluent stopped. Thereafter, the reaction product was further allowed to react for 5 hours under the reduced pressure of from 10 mmHg through 15 mmHg to thereby yield Intermediate Polyester A-2.

Next, a reaction vessel equipped with a cooling tube, a stirrer, and a nitrogen-inlet tube was charged with Intermediate Polyester A-2 obtained and isophorone diisocyanate (IPDI) in a manner that a molar ratio (NCO/OH) of an isocyanate group of IPDI to a hydroxyl group of Intermediate Polyester A-2 was to be 2.0. The resulting mixture was diluted with ethyl acetate to prepare a 50% ethyl acetate solution. Thereafter, the 50% ethyl acetate solution was allowed to react for 5 hours at 100°C to thereby yield Prepolymer A-2.

<Synthesis of amorphous polyester resin A-2>

Prepolymer A-2 obtained was stirred in a reaction vessel equipped with a heater, a stirrer, and a nitrogen inlet tube, and Ketimine Compound 1 was added to the reaction vessel through dripping in a manner that a molar amount of amine of Ketimine Compound 1 was be equal to a molar amount of isocyanate of Prepolymer A-2. After stirring the resulting mixture for 10 hours at 45°C, an elongation product of the prepolymer was collected. The obtained elongation product of the prepolymer was vacuum dried at 50°C until an amount of the residual ethyl aetate was reduced to 100 ppm or less to thereby yield Amorphous Polyester Resin A-2. The physical properties of Amorphous Polyester Resin A-2 are presented in Table 1 below.

(Production Example A-3: synthesis of amorphous polyester resin A-3)

<Synthesis of prepolymer A-3>

A reaction vessel equipped with a cooling tube, a stirrer, and a nitrogen-inlet tube was charged with 3-methyl-1,5-pentanediol, isophthalic acid, and adipic acid together with titanium tetraisopropoxide (1,000 ppm relative to a resin component) in a manner that a molar ratio [OH/COOH] of a hydroxyl group to a carboxyl group was to be 1.1, a diol component was made up of the 3-methyl-1,5-pentanediol (100 mol%), a dicarboxylic acid component was made up of the isophthalic acid (45 mol%) and the adipic acid (55 mol%), and an amount of trimethylolpropane was to be 1.5 mol% relative to a total amount of the monomers. The resulting mixture was heated up to 200°C over the course of approximately 4 hours, followed by heating up to 230°C for 2 hours, and the reaction was continued until generation of effluent stopped. Thereafter, the reaction product was further allowed to react for 5 hours under the reduced pressure of from 10 mmHg through 15 mmHg to thereby yield Intermediate Polyester A-3.

Next, a reaction vessel equipped with a cooling tube, a stirrer, and a nitrogen-inlet tube was charged with Intermediate Polyester A-3 obtained and isophorone diisocyanate (IPDI) in a manner that a molar ratio (NCO/OH) of an isocyanate group of IPDI to a hydroxyl group of Intermediate Polyester A-3 was to be 2.0. The resulting mixture was diluted with ethyl acetate to prepare a 50% ethyl acetate solution. Thereafter, the 50% ethyl acetate solution was allowed to react for 5 hours at 100°C to thereby yield Prepolymer A-3.

<Synthesis of amorphous polyester A-3>

Prepolymer A-3 obtained was stirred in a reaction vessel equipped with a heater, a stirrer, and a nitrogen inlet tube, and Ketimine Compound 1 was added to the reaction vessel through dripping in a manner that a molar amount of amine of Ketimine Compound 1 was be equal to a molar amount of isocyanate of Prepolymer A-3. After stirring the resulting mixture for 10 hours at 45°C, an elongation product of the prepolymer was collected. The obtained elongation product of the prepolymer was vacuum dried at 50°C until an amount of the residual ethyl aetate was reduced to 100 ppm or less to thereby yield Amorphous Polyester Resin A-3. The physical properties of Amorphous Polyester Resin A-3 are presented in Table 1 below.

Amorphous Polyester Resins A-1 to A-3 obtained in Production Examples A-1 to A-3 are summarized in Table 1 below.

Table 1

| Type | | Diol | Dicarboxylic acid | Tg [°C] | Mw |
|---|---|---|---|---|---|
| Amorphous Polyester Resin A | A-1 | 3-methyl-1,5-pentanediol 100% | isophthalic acid 66%/ plant-derived sebacic acid 34% | -43 | 17,000 |
| | A-2 | 3-methyl-1,5-pentanediol 100% | isophthalic acid 83%/ plant-derived sebacic acid 17% | -55 | 17,500 |
| | A-3 | 3-methyl-1,5-pentanediol 100% | isophthalic acid 45%/ adipic acid 55% | -40 | 16,400 |

(Production Example B-1: synthesis of amorphous polyester resin B-1)

A four-necked flask equipped with a nitrogen-inlet tube, a dehydration tube, a stirrer, and a thermocouple was charged with plant-derived propylene glycol (available from DuPont de Nemours, Inc.), terephthalic acid, and plant-derived succinic acid (available from BioAmber Inc.) in a manner that a diol component was made up of the propylene glycol (100 mol%), a dicarboxylic acid component was made up of the terephthalic acid (86 mol%) and the succinic acid (14 mol%), and a molar ratio (OH/COOH) of a hydroxyl group to a carboxyl group was to be 1.3. The resulting mixture was allowed to react together with titanium tetraisopropoxide (500 ppm relative to a resin component) for 8 hours at 230°C under ambient pressure, followed by further reacting for 4 hours under the reduced pressure of from 10 mmHg through 15 mmHg. Thereafter, trimellitic acid anhydride was added to the reaction vessel in a manner that an amount of the trimellitic acid anhydride was to be 1 mol% relative to a total amount of the resin component. The resulting mixture was allowed to react for 3 hours at 180°C under ambient pressure to thereby yield Amorphous Polyester Resin B-1.

Physical properties of Amorphous Polyester Resin B-1 are presented in Table 2.

(Production Example B-2: synthesis of amorphous polyester resin B-2)

A four-necked flask equipped with a nitrogen-inlet tube, a dehydration tube, a stirrer, and a thermocouple was charged with propylene glycol, a bisphenol A propylene oxide (2 mol) adduct, terephthalic acid, and plant-derived succinic acid (available from BioAmber Inc.) in a manner that a diol component was made up of the propylene glycol (60 mol%) and the bisphenol A ethylene oxide (2 mol) adduct (40 mol%), a dicarboxylic acid component was made up of the terephthalic acid (86 mol%) and the succinic acid (14 mol%), and a molar ratio (OH/COOH) of a hydroxyl group to a carboxyl group was to be 1.3. The resulting mixture was allowed to react together with titanium tetraisopropoxide (500 ppm relative to a resin component) for 8 hours at 230°C under ambient pressure, followed by further reacting for 4 hours under the reduced pressure of from 10 mmHg through 15 mmHg. Thereafter, trimellitic acid anhydride was added to the reaction vessel in a manner that an amount of the trimellitic acid anhydride was to be 1 mol% relative to a total amount of the resin component. The resulting mixture was allowed to react for 3 hours at 180°C under ambient pressure to thereby yield Amorphous Polyester Resin B-2. Physical properties of Amorphous Polyester Resin B-2 are presented in Table 2.

(Production Example B-3: synthesis of amorphous polyester resin B-3)

A four-necked flask equipped with a nitrogen-inlet tube, a dehydration tube, a stirrer, and a thermocouple was charged with plant-derived propylene glycol (available from DuPont de Nemours, Inc.), terephthalic acid, and adipic acid in a manner that a diol component was made up of the propylene glycol (100 mol%), a dicarboxylic acid component was made up of the terephthalic acid (97 mol%) and the adipic acid (3 mol%), and a molar ratio (OH/COOH) of a hydroxyl group to a carboxyl group was to be 1.3. The resulting mixture was allowed to react together with titanium tetraisopropoxide (500 ppm relative to a resin component) for 8 hours at 230°C under ambient pressure, followed by further reacting for 4 hours under the reduced pressure of from 10 mmHg through 15 mmHg. Thereafter, trimellitic acid anhydride was added to the reaction vessel in a manner that an amount of the trimellitic acid anhydride was to be 1 mol% relative to a total amount of the resin component. The resulting mixture was allowed to react for 3 hours at 180°C under ambient pressure to thereby yield Amorphous Polyester Resin B-3. Physical properties of Amorphous Polyester Resin B-3 are presented in Table 2.

(Production Example B-4: synthesis of amorphous polyester resin B-4)

A four-necked flask equipped with a nitrogen-inlet tube, a dehydration tube, a stirrer, and a thermocouple was charged with a bisphenol A ethylene oxide (2 mol) adduct, a bisphenol A propylene oxide (2 mol) adduct, terephthalic acid, and adipic acid in a manner that a diol component was made up of the bisphenol A propylene oxide (2 mol) adduct (60 mol%) and the bisphenol A ethylene oxide (2 mol) adduct (40 mol%), and a dicarboxylic acid component was made up of the terephthalic acid (97 mol%) and the adipic acid (3 mol%), an molar ratio (OH/COOH) of a hydroxyl group to a carboxyl group was to be 1.3. The resulting mixture was allowed to react together with titanium tetraisopropoxide (500 ppm relative to a resin component) for 8 hours at 230°C under ambient pressure, followed by further reacting for 4 hours under the reduced pressure of from 10 mmHg through 15 mmHg. Thereafter, trimellitic acid anhydride was added to the reaction vessel in a manner that an amount of the trimellitic acid anhydride was to be 1 mol% relative to a total amount of the resin component. The resulting mixture was allowed to react for 3 hours at 180°C under ambient pressure to thereby yield Amorphous Polyester Resin B-4. Physical properties of Amorphous Polyester Resin B-4 are presented in Table 2.

Amorphous Polyester Resins B-1 to B-4 obtained in Production Examples B-1 to B-4 are summarized in Table 2 below.

Table 2

| Type | | Diol | Dicarboxylic acid | Tg [°C] | Mw | Acid value [mgKOH/g] | Hydroxyl value [mgKOH/g] |
|---|---|---|---|---|---|---|---|
| Amorphous polyester resin B | B-1 | plant-derived propylene glycol 100% | terephthalic acid 86%/plant-derived succinic acid 14% | 55 | 9,000 | 19 | 28 |
| | B-2 | propylene glycol 60%/ bispheno l A ethylene oxide (2 mol) adduct 40% | terephthalic acid 86%/plant-derived succinic acid 14% | 54 | 10,000 | 20 | 27 |
| | B-3 | plant-derived propylene glycol 100% | terephthalic acid 97%/adipic acid 3% | 60 | 10,000 | 21 | 29 |
| | B-4 | bisphenol A propylene oxide (2 mol) adduct 60%/bispheno l A ethylene oxide 82 mol) adduct 40% | terephthalic acid 97%/adipic acid 3% | 67 | 8,000 | 18 | 26 |

(Preparation Example 1-1: preparation of amorphous polyester resin B dispersion liquid 1)

A 500 mL separable flask was charged with 150 parts of Amorphous Polyester Resin B-1, 150 parts of methyl ethyl ketone, and 0.1 parts of sodium hydroxide (0.3 N), and the resulting mixture was stirred by means of Three-One Motor (available from SHINTO Scientific Co., Ltd.) to prepare a resin mixture. While stirring the resin mixture, 700 parts of ion-exchanged water was gradually added to cause phase inversion emulsification, followed by removing the solvent, to thereby prepare Amorphous Polyester Resin B Dispersion Liquid 1. The resin particles in Amorphous Polyester Resin B Dispersion Liquid 1 had a volume average particle diameter of 50 nm, and a solid content of Amorphous Polyester Resin B Dispersion Liquid 1 was 25%.

(Preparation Example 1-2: preparation of amorphous polyester resin B dispersion liquid 2)

Amorphous Polyester Resin B Dispersion Liquid 2 was prepared in the same manner as in Preparation Example 1-1, except that Amorphous Polyester Resin B-1 was replaced with Amorphous Polyester Resin B-2. The resin particles in Amorphous Polyester Resin B Dispersion Liquid 2 obtained had a volume average particle diameter of 62 nm, and a solid content was 25%.

(Preparation Example 1-3: preparation of amorphous polyester resin B dispersion liquid 3)

Amorphous Polyester Resin B Dispersion Liquid 3 was prepared in the same manner as in Preparation Example 1-1, except that Amorphous Polyester Resin B-1 was replaced with Amorphous Polyester Resin B-3. The resin particles in Amorphous Polyester Resin B Dispersion Liquid 3 obtained had a volume average particle diameter of 45 nm, and a solid content was 25%.

(Preparation Example 1-4: preparation of amorphous polyester resin B dispersion liquid 4)

Amorphous Polyester Resin B Dispersion Liquid 4 was prepared in the same manner as in Preparation Example 1-1, except that Amorphous Polyester Resin B-1 was replaced with Amorphous Polyester Resin B-4. The resin particles in Amorphous Polyester Resin B Dispersion Liquid 4 obtained had a volume average particle diameter of 40 nm, and a solid content was 25%.

Amorphous Polyester Resin B Dispersion Liquids 1 to 4 obtained in Preparation Examples 1-1 to 1-4 are summarized in Table 3 below.

Table 3

| Type | | Amorphous Polyester Resin B | Volume average particle diameter (nm) | Solid content (% by mass) |
|---|---|---|---|---|
| Amorphous Polyester Resin B Dispersion Liquid | 1 | Amorphous Polyester Resin B-1 | 50 | 25 |
| | 2 | Amorphous Polyester Resin B-2 | 62 | 25 |
| | 3 | Amorphous Polyester Resin B-3 | 45 | 25 |
| | 4 | Amorphous Polyester Resin B-4 | 40 | 25 |

(Production Example C-1: synthesis of crystalline polyester resin C-1)

A 5 L four-necked flask equipped with a nitrogen-inlet tube, a dehydration tube, a stirrer, and a thermocouple was charged with plant-derived sebacic acid (available from KOKURA GOSEI KOGYO. LTD.) and 1,6-hexanediol in a manner that a molar ratio (OH/COOH) of a hydroxyl group to a carboxyl group was to be 0.9. The resulting mixture was allowed to react together with titanium tetraisopropoxide (500 ppm relative to a resin component) for 10 hours at 180°C, and the mixture was heated at 200°C and was allowed to react for 3 hours, followed by further reacting for 2 hours at 8.3 kPa to thereby yield Crystalline Polyester Resin C-1. Physical properties of Crystalline Polyester Resin C-1 are presented in Table 4 below.

(Production Example C-2: synthesis of crystalline polyester resin C-2)

Crystalline Polyester Resin C-2 was obtained in the same manner as in Production Example C-1, except that the plant-derived sebacic acid as the dicarboxylic acid component was replaced with plant-derived dodecanedioic acid (available from Verdezyne, Inc.). Physical properties of Crystalline Polyester Resin C-2 are presented in Table 4 below.

(Production Example C-3: synthesis of crystalline polyester resin C-3)

Crystalline Polyester Resin C-3 was obtained in the same manner as in Production Example C-1, except that the 1,6-hexanediol as the diol component was replaced with plant-derived ethylene glycol (available from India Glycols Limited). Physical properties of Crystalline Polyester Resin C-3 are presented in Table 4 below.

(Production Example C-4: synthesis of crystalline polyester resin C-4)

Crystalline Polyester Resin C-4 was obtained in the same manner as in Production Example C-1, except that the plant-derived sebacic acid as the dicarboxylic acid component was replaced with adipic acid. Physical properties of Crystalline Polyester Resin C-4 are presented in Table 4 below.

Crystalline Polyester Resins C-1 to C-4 obtained in Production Examples C-1 to C-4 are summarized in Table 4 below.

Table 4

| Type | | Diol | Dicarboxylic acid | Tm (°C) | Mw | Acid value (mgKOH/g) | Hydroxyl value (mgKOH/g) |
|---|---|---|---|---|---|---|---|
| Crystalline Polyester Resin C | C-1 | 1,6-hexanediol 100% | plant-derived sebacic acid 100% | 67 | 25,000 | 11 | 5 |
| | C-2 | 1,6-hexanediol 100% | plant-derived dodecanedioic acid 100% | 70 | 15,000 | 10 | 6 |
| | C-3 | plant-derived ethylene glycol 100% | plant-derived sebacic acid 100% | 72 | 20,000 | 12 | 7 |
| | C-4 | 1,6-hexanediol 100% | adipic acid 100% | 60 | 25,000 | 12 | 6 |

(Preparation Example 2-1: preparation of crystalline polyester resin C dispersion liquid 1)

A vessel equipped with a stirring rod and a thermometer was charged with 45 parts of Crystalline Polyester Resin C-1 and 450 parts of ethyl acetate. The resulting mixture was heated to 80°C while stirring, and the temperature was retained at 80°C for 5 hours, followed by cooling to 30°C over the course of 1 hour. The cooled mixture was dispersed by passing 3 times through a bead mill (ULTRA VISCOMILL, available from AIMEX CO., LTD.), which was filled with zirconia beads having diameters of 0.5 mm by 80% by volume, at a feeding rate of 1 kg/h and a circumferential disk speed of 6 m/s, to thereby prepare Crystalline Polyester Resin C Dispersion Liquid 1. The obtained crystalline polyester resin particles had a volume average particle diameter of 350 nm, and a solid content (i.e., the resin particle content) of Crystalline Polyester Resin C Dispersion Liquid 1 was 10%.

(Preparation Example 2-2: preparation of crystalline polyester resin C dispersion liquid 2)

Crystalline Polyester Resin C Dispersion Liquid 2 was prepared in the same manner as in Preparation Example 2-1, except that Crystalline Polyester Resin C-1 was replaced with Crystalline Polyester Resin C-2. The resin particles in Crystalline Polyester Resin C Dispersion Liquid 2 obtained had a volume average particle diameter of 350 nm, and a solid content was 10%.

(Preparation Example 2-3: preparation of crystalline polyester resin C dispersion liquid 3)

Crystalline Polyester Resin C Dispersion Liquid 3 was prepared in the same manner as in Preparation Example 2-1, except that Crystalline Polyester Resin C-1 was replaced with Crystalline Polyester Resin C-3. The resin particles in Crystalline Polyester Resin C Dispersion Liquid 3 obtained had a volume average particle diameter of 360 nm, and a solid content was 10%.

(Preparation Example 2-4: preparation of crystalline polyester resin C dispersion liquid 4)

Crystalline Polyester Resin B Dispersion Liquid 4 was prepared in the same manner as in Preparation Example 2-1, except that Crystalline Polyester Resin C-1 was replaced with Crystalline Polyester Resin C-4. The resin particles in Crystalline Polyester Resin C Dispersion Liquid 4 obtained had a volume average particle diameter of 340 nm, and a solid content was 10%.

Crystalline Polyester Resin C Dispersion Liquids obtained in Preparation Examples 2-1 to 2-4 are summarized in Table 5 below.

Table 5

| Type | | Crystalline Polyester Resin C | Volume average particle diameter (nm) | Solid content (% by mass) |
|---|---|---|---|---|
| Crystalline Polyester Resin C Dispersion Liquid | 1 | Crystalline Polyester Resin C-1 | 350 | 10 |
| | 2 | Crystalline Polyester Resin C-2 | 350 | 10 |
| | 3 | Crystalline Polyester Resin C-3 | 360 | 10 |
| | 4 | Crystalline Polyester Resin C-4 | 340 | 10 |

(Preparation Example 3-1: preparation of master batch (MB))

Water (1,200 parts), 500 parts of carbon black (Printex 35, available from Degussa, DBP oil absorption: 42 mL/100 mg, pH: 9.5), and 500 parts of Amorphous Polyester Resin B-1 were added together, and the resulting mixture was mixed by means of HENSCHEL MIXER (available from NIPPON COKE & ENGINEERING CO., LTD.), followed by kneading the mixture for 30 minutes at 150°C by means of a two-roll kneader. The resulting kneaded product was rolled and cooled, followed by pulverizing by means of a pulverizer to thereby prepare Master Batch 1.

(Preparation Example 4-1: preparation of wax dispersion liquid 1)

A vessel equipped with a stirring rod and a thermometer was charged with 42 parts of ester wax (WE-11, vegetable wax, available from NOF CORPORATION, melting point: 70°C) and 420 parts of ethyl acetate. The resulting mixture was heated to 80°C while stirring, and the temperature was retained at 80°C for 5 hours, followed by cooling to 30°C over the course of 1 hour.
The cooled mixture was dispersed by passing 3 times through a bead mill (ULTRA VISCOMILL, available from AIMEX CO., LTD.), which was filled with zirconia beads having diameters of 0.5 mm by 80% by volume, at a feeding rate of 1 kg/h and a circumferential disk speed of 6 m/s to thereby prepare Wax Dispersion Liquid 1. The wax particles in Wax Dispersion Liquid 1 obtained had a volume average particle diameter of 420 nm, and a solid content (i.e., the wax particle content) of Wax Dispersion Liquid 1 was 25%.

(Preparation Example 4-2: preparation of wax dispersion liquid 2)

A vessel equipped with a stirring rod and a thermometer was charged with 50 parts of paraffin wax (HNP-9, hydrocarbon wax, available from NIPPON SEIRO CO., LTD., melting point: 75°C, SP value: 8.8) and 450 parts of ethyl acetate. The resulting mixture was heated to 80°C while stirring, and the temperature was retained at 80°C for 5 hours, followed by cooling to 30°C over the course of 1 hour. The cooled mixture was dispersed by passing 3 times through a bead mill (ULTRA VISCOMILL, available from AIMEX CO., LTD.), which was filled with zirconia beads having diameters of 0.5 mm by 80% by volume, at a feeding rate of 1 kg/h and a circumferential disk speed of 6 m/s to thereby prepare Wax Dispersion Liquid 2. The wax particles in Wax Dispersion Liquid 2 obtained had a volume average particle diameter of 350 nm, and a solid content was 25%.

The compositions and physical properties of Wax Dispersion Liquids 1 and 2 obtained in Preparation Examples 4-1 and 4-2 are summarized in Table 6 below.

Table 6

| Type | | Wax | Volume average particle diameter (nm) | Solid content (% by mass) |
|---|---|---|---|---|
| Wax Dispersion Liquid | 1 | ester was (synthetic wax including plant-derived monomer) | 420 nm | 25% |
| | 2 | paraffin wax | 350 nm | 25% |

(Example 1)

<Preparation of oil phase>

A vessel was charged with 50 parts of Wax Dispersion Liquid 1, 150 parts of Amorphous Polyester Resin A-1, 50 parts of Crystalline Polyester Resin C Dispersion Liquid 1, 750 parts of Amorphous Polyester Resin B-1, and 50 parts of Master Batch 1 (pigment), and the resulting mixture was mixed by means of a TK Homomixer (available from PRIMIX Corporation) for 60 minutes at 5,000 rpm to thereby prepare Oil Phase 1.

Note that, the amount of each component denotes an amount of each component on solid basis. Amounts of components will be also described on solid basis in the following processes.

<Preparation of aqueous phase>

Water (990 parts), 20 parts of sodium dodecyl sulfate, and 90 parts of ethyl acetate were mixed and stirred to prepare a milky white liquid, which was provided as Aqueous Phase 1.

<Phase inversion emulsification>

While stirring 700 parts of Oil Phase 1 at a rotational speed of 8,000 rpm by means of a TK Homomixer, 20 parts of a 28% ammonia solution was added. The resulting mixture was mixed for 10 minutes, followed by gradually adding 1,200 parts of Aqueous Phase 1 by dripping, to thereby prepare Emulsified Slurry 1.

<Removal of solvent>

A vessel equipped with a stirrer and a thermometer was charged with Emulsified Slurry 1. The solvent was removed from Emulsified Slurry 1 for 180 minutes at 30°C to thereby prepare Desolventized Slurry 1. The particles in Desolventized Slurry 1 had a volume average particle diameter of 0.6 $\mu$m.

<Coagulation>

To Desolventized Slurry 1, 100 parts of a 3% magnesium chloride solution was added by dripping. The resulting mixture was stirred for 5 minutes, followed by heating to 60°C. When diameters of the particles therein reached 5.0 $\mu$m, 200 parts of Amorphous Polyester Resin B Dispersion Liquid 4 was added by dripping. After stirring the resulting mixture for 60 minutes, 100 parts of sodium chloride was added to complete the process of the coagulation, to thereby prepare Coagulated Slurry 1.

<Fusing>

While stirring Coagulated Slurry 1, Coagulated Slurry 1 was heated to 70°C. When the particles therein reached a desired average circularity, i.e., 0.957, Coagulated Slurry 1 was cooled to thereby prepare Dispersion Slurry 1.

<Washing and drying>

After subjecting 100 parts of Dispersion Slurry 1 to vacuum filtration, the resulting filtration cake was subjected to a series of the following processes (1) to (4) twice to thereby prepare Filtration Cake 1.

(1): To the filtration cake, 100 parts of ion-exchanged water was added, and the resulting mixture was mixed by means of a TK Homomixer (for 10 minutes at a rotational speed of 12,000 rpm), followed by performing filtration.
(2): To the filtration cake of (1), 100 parts of a 10% sodium hydroxide aqueous solution was added, and the resulting mixture was mixed by means of a TK Homomixer (for 30 minutes at a rotational rate of 12,000 rpm), followed by performing vacuum filtration.
(3): To the filtration cake of (2), 100 parts of 10% hydrochloric acid was added, and the resulting mixture was mixed by means of a TK Homomixer (for 10 minutes at a rotational speed of 12,000 rpm), followed by performing filtration.
(4): To the filtration cake of (3), 300 parts of ion-exchanged water was added, and the resulting mixture was mixed by mean of a TK Homomixer (for 10 minutes at a rotational speed of 12,000 rpm), followed by performing filtration.

Filtration Cake 1 obtained was dried by mean of an air circulation dryer for 48 hours a 45°C. The resulting dried product was sieved through a sieve having a mesh-size of 75 $\mu$m to thereby yield Toner Base Particles 1.

<External additive treatment>

To 100 parts of Toner Base Particles 1, 2.0 parts of hydrophobic silica (HDK® H2000, available from Clariant) was added as an external additive. The resulting mixture was mixed by means of HENSCHEL MIXER. The resulting mixture was passed through a sieve with a 500-mesh to thereby yield Toner 1.

(Example 2)

Toner 2 was obtained in the same manner as in Example 1, except that in <Preparation of oil phase>, the amount of Amorphous Polyester Resin A-1 was changed to 0 parts, Wax Dispersion Liquid 1 was changed to Wax Dispersion Liquid 2, and the amount of Crystalline Polyester Resin C Dispersion Liquid 1 was changed to 80 parts.

(Example 3)

Toner 3 was obtained in the same manner as in Example 1, except that in <Preparation of oil phase>, Amorphous Polyester Resin A-1 was replaced with Amorphous Polyester Resin A-2, Amorphous Polyester Resin B-1 was replaced with Amorphous Polyester Resin B-2, and Crystalline Polyester Resin C Dispersion Liquid 1 was replaced with Crystalline Polyester Resin C Dispersion Liquid 4.

(Example 4)

Toner 4 was obtained in the same manner as in Example 1, except that in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and Amorphous Polyester Resin B Dispersion Liquid 4 was replaced with Amorphous Polyester Resin B Dispersion Liquid 1.

(Example 5)

Toner 5 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-3, the amount of Wax Dispersion Liquid was changed from 50 parts to 200 parts, and the amount of Crystalline Polyester Resin C Dispersion Liquid 1 was changed from 50 parts to 200 parts; and in <Coagulation>, the 3% magnesium chloride solution was replaced with a 3% calcium chloride solution, and 200 parts of Amorphous Polyester Resin B Dispersion Liquid 4 was replaced with 230 parts of Amorphous Polyester Resin B Dispersion Liquid 3.

(Example 6)

Toner 6 was obtained in the same manner as in Example 1, except that, in <Preparation of oil phase>, the amount of Amorphous Polyester Resin A-1 was changed from 150 parts to 100 parts, and Crystalline Polyester Resin C Dispersion Liquid 1 was replaced with Crystalline Polyester Resin C Dispersion Liquid 3; and in <Coagulation>, 100 parts of the 3% magnesium chloride solution was replaced with 20 parts of a 3% aluminum sulfate solution, and 200 parts of Amorphous Polyester Resin B Dispersion Liquid 4 was replaced with 400 parts of Amorphous Polyester Resin B Dispersion Liquid 2.

(Example 7)

Toner 7 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-3, the amount of Wax Dispersion Liquid 1 was changed from 50 parts to 400 parts, and the amount of Crystalline Polyester Resin C Dispersion Liquid 1 was changed from 50 parts to 400 parts; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 230 parts.

(Example 8)

Toner 8 was obtained in the same manner as in Example 1, except that in <Preparation of oil phase>, Crystalline Polyester Resin C Dispersion Liquid 1 was replaced with Crystalline Polyester Resin C Dispersion Liquid 3; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 230 parts.

(Example 9)

Toner 9 was obtained in the same manner as in Example 1, except that in <Preparation of oil phase>, 150 parts of Amorphous Polyester Resin A-1 was replaced with 50 parts of Amorphous Polyester Resin A-3, Amorphous Polyester Resin B-1 was replaced with Amorphous Polyester Resin B-3, the amount of Wax Dispersion Liquid 1 was changed from 50 parts to 350 parts, and 50 parts of Crystalline Polyester Resin C Dispersion Liquid 1 was replaced with 350 parts of Crystalline Polyester Resin C Dispersion Liquid 2.

(Example 10)

Toner 10 was obtained in the same manner as in Example 1, except that in <Preparation of oil phase>, Wax Dispersion Liquid 1 was replaced with Wax Dispersion Liquid 2; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 230 parts.

(Example 11)

Toner 11 was obtained in the same manner as in Example 1, except that in <Preparation of oil phase>, the amount of Amorphous Polyester Resin A-1 was changed from 150 parts to 0 parts, Amorphous Polyester Resin B-1 was replaced with Amorphous Polyester Resin B-2, and 50 parts of Crystalline Polyester Resin C Dispersion Liquid 1 was replaced with 200 parts of Crystalline Polyester Resin C Dispersion Liquid 2.

(Example 12)

Toner 12 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-3, and Crystalline Polyester Resin C Dispersion Liquid 1 was replaced with Crystalline Polyester Resin C Dispersion Liquid 2.

(Example 13)

Toner 13 was obtained in the same manner as in Example 1, except that in <Preparation of oil phase>, 750 parts of Amorphous Polyester Resin B-1 was replaced with 500 parts of Amorphous Polyester Resin B-3, 50 parts of Wax Dispersion Liquid 1 was replaced with 200 parts of Wax Dispersion Liquid 2, and 50 parts of Crystalline Polyester Resin C Dispersion Liquid 1 was replaced with 10 parts of Crystalline Polyester Resin C Dispersion Liquid 3.

(Example 14)

Toner 14 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-3, and Wax Dispersion Liquid 1 was replaced with Wax Dispersion Liquid 2; and in <Coagulation>, the amount of Amorphous Polyester Resin B Dispersion Liquid 4 was changed from 200 parts to 400 parts.

(Example 15)

Toner 15 was obtained in the same manner as in Example 1, except that in <Preparation of oil phase>, Amorphous Polyester Resin B-1 was replaced with Amorphous Polyester Resin B-2; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 400 parts.

(Example 16)

Toner 16 was obtained in the same manner as in Example 1, except that in <Preparation of oil phase>, Amorphous Polyester Resin A-1 was replaced with Amorphous Polyester Resin A-2, Amorphous Polyester Resin B-1 was replaced with Amorphous Polyester Resin B-2, and Crystalline Polyester Resin C Dispersion Liquid 1 was replaced with Crystalline Polyester Resin C Dispersion Liquid 3; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 400 parts.

(Example 17)

Toner 17 was obtained in the same manner as in Example 1, except that in <Preparation of oil phase>, Amorphous Polyester Resin A-1 was replaced with Amorphous Polyester Resin A-3, 750 parts of Amorphous Polyester Resin B-1 was replaced with 500 parts of Amorphous Polyester Resin B-3, and the amount of Crystalline Polyester Resin C Dispersion Liquid 1 was changed from 50 parts to 10 parts; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was added to adjust pH to 9, and the amount of Amorphous Polyester Resin B Dispersion Liquid 4 was changed from 200 parts to 400 parts.

(Example 18)

Toner 18 was obtained in the same manner as in Example 1, except that in <Preparation of oil phase>, Amorphous Polyester Resin A-1 was replaced with Amorphous Polyester Resin A-3, 750 parts of Amorphous Polyester Resin B-1 was replaced with 500 parts of Amorphous Polyester Resin B-3, Wax Dispersion Liquid 1 was replaced with Wax Dispersion Liquid 2, and Crystalline Polyester Resin C Dispersion Liquid 1 was replaced with Crystalline Polyester Resin C Dispersion Liquid 4; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was performed to adjust pH to 9, and the amount of Amorphous Polyester Resin B Dispersion Liquid 4 was changed from 200 parts to 400 parts.

(Comparative Example 1)

Toner 19 was obtained in the same manner as in Example 1, except that in <Coagulation>, the amount of Amorphous Polyester Resin B Dispersion Liquid 4 was changed from 200 parts to 0 parts.

(Comparative Example 2)

Toner 20 was obtained in the same manner as in Example 1, except that in <Preparation of oil phase>, Amorphous Polyester Resin A-1 was replaced with Amorphous Polyester Resin A-2, Amorphous Polyester Resin B-1 was replaced with Amorphous Polyester Resin B-4, and Wax Dispersion Liquid 1 was replaced with Wax Dispersion Liquid 2; and in <Coagulation>, 100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 50 parts.

(Comparative Example 3)

Toner 21 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-4, and Wax Dispersion Liquid 1 was replaced with Wax Dispersion Liquid 2; and in <Coagulation>, the amount of Amorphous Polyester Resin B Dispersion Liquid 4 was changed from 200 parts to 400 parts.

(Comparative Example 4)

Toner 22 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-4, Wax Dispersion Liquid 1 was replaced with Wax Dispersion Liquid 2, and Crystalline Polyester Resin C Dispersion Liquid 1 was replaced with Crystalline Polyester Resin C Dispersion Liquid 3; and in <Coagulation>, the amount of Amorphous Polyester Resin B Dispersion Liquid 4 was changed from 200 parts to 0 parts.

(Comparative Example 5)

Toner 23 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-4, and Wax Dispersion Liquid 1 was replaced with Wax Dispersion Liquid 2; and in <Coagulation>,100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 50 parts.

(Comparative Example 6)

Toner 24 was obtained in the same manner as in Example 1, except that in <Preparation of oil phase>, the amount of Amorphous Polyester Resin A-1 was changed from 150 parts to 50 parts, Amorphous Polyester Resin B-1 was replaced with Amorphous Polyester Resin B-4, and Crystalline Polyester Resin C Dispersion Liquid 1 was replaced with Crystalline Polyester Resin C Dispersion Liquid 3; and in <Coagulation>,100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and 200 parts of Amorphous Polyester Resin B Dispersion Liquid 4 was replaced with 50 parts of Amorphous Polyester Resin B Dispersion Liquid 3.

(Comparative Example 7)

Toner 25 was obtained in the same manner as in Example 1, except that in <Preparation of oil phase>, Amorphous Polyester Resin A-1 was replaced with Amorphous Polyester Resin A-3, Wax Dispersion Liquid 1 was replaced with Wax Dispersion Liquid 2, and Crystalline Polyester Resin C Dispersion Liquid 1 was replaced with Crystalline Polyester Resin C Dispersion Liquid 4; and in <Coagulation>, the amount of Amorphous Polyester Resin B Dispersion Liquid 4 was changed from 200 parts to 0 parts.

(Comparative Example 8)

Toner 26 was obtained in the same manner as in Example 1, except that in <Preparation of oil phase>, Amorphous Polyester Resin A-1 was replaced with Amorphous Polyester Resin A-3, Amorphous Polyester Resin B-1 was replaced with Amorphous Polyester Resin B-3, Wax Dispersion Liquid 1 was replaced with Wax Dispersion Liquid 2, and Crystalline Polyester Resin C Dispersion Liquid 1 was replaced with Crystalline Polyester Resin C Dispersion Liquid 4; and in <Coagulation>, the amount of Amorphous Polyester Resin B Dispersion Liquid 4 was changed from 200 parts to 0 parts.

(Comparative Example 9)

Toner 27 was obtained in the same manner as in Example 1, except that in <Preparation of oil phase>, the amount of Amorphous Polyester Resin A-1 was changed from 150 parts to 0 parts, Amorphous Polyester Resin B-1 was replaced with Amorphous Polyester Resin B-4, Wax Dispersion Liquid 1 was replaced with Wax Dispersion Liquid 2, and Crystalline Polyester Resin C Dispersion Liquid 1 was replaced with Crystalline Polyester Resin C Dispersion Liquid 2; and in <Coagulation>, the amount of Amorphous Polyester Resin B Dispersion Liquid 4 was changed from 200 parts to 400 parts.

(Comparative Example 10)

Toner 28 was obtained in the same manner as in Example 1, except that in <Preparation of oil phase>, 150 parts of Amorphous Polyester Resin A-1 was replaced with 50 parts of Amorphous Polyester Resin A-2, Amorphous Polyester Resin B-1 was replaced with Amorphous Polyester Resin B-2, and Crystalline Polyester Resin C Dispersion Liquid 1 was replaced with Crystalline Polyester Resin C Dispersion Liquid 2; and in <Coagulation>,100 parts of the 3% magnesium chloride solution was replaced with 200 parts of a 3% sodium sulfate solution, addition of 1% hydrochloric acid was performed to adjust pH to 3, after the addition of 100 parts of the sodium chloride, addition of a 1% sodium hydroxide solution was further performed to adjust pH to 9, and the amount of Amorphous Polyester Resin B Dispersion Liquid 4 was changed from 200 parts to 0 parts.

The composition of the oil phase component of Examples 1 to 18 and Comparative Examples 1 to 10, and the details of coagulation, phase inversion emulsification, and removal of solvent in Examples 1 to 18 and Comparative Examples 1 to 10 are presented in Tables 7-1 to 7-5.

Table 7-1

| | | | Ex. 1 (Toner 1) | Ex. 2 (Toner 2) | Ex. 3 (Toner 3) | Ex. 4 (Toner 4) | Ex. 5 (Toner 5) | Ex. 6 (Toner 6) | Ex. 7 (Toner 7) |
|---|---|---|---|---|---|---|---|---|---|
| Oil phase component | Amorphous Polyester Resin A | A-1 | 150 | – | – | 150 | – | 100 | – |
| | | A-2 | – | – | 150 | – | – | – | – |
| | | A-3 | – | – | – | – | 150 | – | 150 |
| | Amorphous Polyester Resin B | B-1 | 750 | 750 | – | 750 | – | 750 | – |
| | | B-2 | – | – | 750 | – | – | – | – |
| | | B-3 | – | – | – | – | 750 | – | 750 |
| | | B-4 | – | – | – | – | – | – | – |
| | Crystalline Polyester Resin C | C-1 | 50 | 80 | – | 50 | 200 | – | 400 |
| | | C-2 | – | – | – | – | – | – | – |
| | | C-3 | – | – | – | – | – | 50 | – |
| | | C-4 | – | – | 50 | – | – | – | – |
| | Wax Dispersion Liquid | 1 | 50 | – | 50 | 50 | 200 | 50 | 400 |
| | | 2 | – | 50 | – | – | – | – | – |
| | Master Batch | 1 | 50 | 50 | 50 | 50 | 50 | 50 | 50 |
| Coagulation formation | Coagulating salt | magnesium chloride | 100 | 100 | 100 | – | – | – | – |
| | | sodium sulfate | – | – | – | 200 | – | – | 200 |
| | | calcium chloride | – | – | – | – | 100 | – | – |
| | | aluminum sulfate | – | – | – | – | – | 20 | – |
| | Amorphous Polyester Resin B | B-1 | – | – | – | 200 | – | – | – |
| | | B-2 | – | – | – | – | – | 400 | – |
| | | B-3 | – | – | – | – | 230 | – | – |
| | | B-4 | 200 | 200 | 200 | – | – | – | 230 |

Table 7-2

| | | | Ex. 8 (Toner 8) | Ex. 9 (Toner 9) | Ex. 10 (Toner 10) | Ex. 11 (Toner 11) | Ex. 12 (Toner 12) | Ex. 13 (Toner 13) | Ex. 14 (Toner 14) |
|---|---|---|---|---|---|---|---|---|---|
| Oil phase component | Amorphous Polyester Resin A | A-1 | 150 | – | 150 | – | – | 150 | – |
| | | A-2 | – | – | – | – | – | – | – |
| | | A-3 | – | 50 | – | – | 150 | – | 150 |
| | Amorphous Polyester Resin B | B-1 | 750 | – | 750 | – | – | – | – |
| | | B-2 | – | – | – | 750 | – | – | – |
| | | B-3 | – | 750 | – | – | 750 | 500 | 750 |
| | | B-4 | – | – | – | – | – | – | – |
| | Crystalline Polyester Resin C | C-1 | – | – | 50 | – | – | – | 50 |
| | | C-2 | – | 350 | – | 200 | 50 | – | – |
| | | C-3 | 50 | – | – | – | – | 10 | – |
| | | C-4 | – | – | – | – | – | – | – |
| | Wax Dispersion Liquid | 1 | 50 | 350 | – | 50 | 50 | – | – |
| | | 2 | – | – | 50 | – | – | 200 | 50 |
| | Master Batch | 1 | 50 | 50 | 50 | 50 | 50 | 50 | 50 |
| Coagulation formation | Coagulating salt | magnesium chloride | – | 100 | – | 100 | 100 | 100 | 100 |
| | | sodium sulfate | 200 | – | 200 | – | – | – | – |
| | | calcium chloride | – | – | – | – | – | – | – |
| | | aluminum sulfate | – | – | – | – | – | – | – |
| | Amorphous Polyester Resin B | B-1 | – | – | – | – | – | – | – |
| | | B-2 | – | – | – | – | – | – | – |
| | | B-3 | – | – | – | – | – | – | – |
| | | B-4 | 230 | 200 | 230 | 200 | 200 | 200 | 400 |

Table 7-3

| | | | Ex. 15 (Toner 15) | Ex. 16 (Toner 16) | Ex. 17 (Toner 17) | Ex. 18 (Toner 18) |
|---|---|---|---|---|---|---|
| Oil phase component | Amorphous Polyester Resin A | A-1 | 150 | – | – | – |
| | | A-2 | – | 150 | – | – |
| | | A-3 | – | – | 150 | 150 |
| | Amorphous Polyester Resin B | B-1 | – | – | – | – |
| | | B-2 | 750 | 750 | – | – |
| | | B-3 | – | – | 500 | 500 |
| | | B-4 | – | – | – | – |
| | Crystalline Polyester Resin C | C-1 | 50 | – | 10 | – |
| | | C-2 | – | – | – | – |
| | | C-3 | – | 50 | – | – |
| | | C-4 | – | – | – | 50 |
| | Wax Dispersion Liquid | 1 | 50 | 50 | 50 | – |
| | | 2 | – | – | – | 50 |
| | Master Batch | 1 | 50 | 50 | 50 | 50 |
| Coagulation formation | Coagulating salt | magnesium chloride | – | – | – | – |
| | | sodium sulfate | 200 | 200 | 200 | 200 |
| | | calcium chloride | – | – | – | – |
| | | aluminum sulfate | – | – | – | – |
| | Amorphous Polyester Resin B | B-1 | – | – | – | – |
| | | B-2 | – | – | – | – |
| | | B-3 | – | – | – | – |
| | | B-4 | 400 | 400 | 400 | 400 |

Table 7-4

| | | | Comp. Ex. 1 (Toner 19) | Comp. Ex. 2 (Toner 20) | Comp. Ex. 3 (Toner 21) | Comp. Ex. 4 (Toner 22) | Comp. Ex. 5 (Toner 23) |
|---|---|---|---|---|---|---|---|
| Oil phase component | Amorphous Polyester Resin A | A-1 | 150 | – | – | – | – |
| | | A-2 | – | 150 | – | – | – |
| | | A-3 | – | – | 150 | 150 | 150 |
| | Amorphous Polyester Resin B | B-1 | 750 | – | – | – | – |
| | | B-2 | – | – | – | – | – |
| | | B-3 | – | – | – | – | – |
| | | B-4 | – | 750 | 750 | 750 | 750 |
| | Crystalline Polyester Resin C | C-1 | 50 | 50 | 50 | – | 50 |
| | | C-2 | – | – | – | – | – |
| | | C-3 | – | – | – | 50 | – |
| | | C-4 | – | – | – | – | – |
| | Wax Dispersion Liquid | 1 | 50 | – | – | – | – |
| | | 2 | – | – | 50 | 50 | 50 |
| | Master Batch | 1 | 50 | 50 | 50 | 50 | 50 |
| Coagulation formation | Coagulating salt | magnesium chloride | 100 | – | 100 | 100 | – |
| | | sodium sulfate | – | 200 | – | – | 200 |
| | | calcium chloride | – | – | – | – | – |
| | | aluminum sulfate | – | – | – | – | – |
| | Amorphous Polyester Resin B | B-1 | – | – | – | – | – |
| | | B-2 | – | – | – | – | – |
| | | B-3 | – | – | – | – | – |
| | | B-4 | – | 50 | 400 | – | 50 |

Table 7-5

| | | | Comp. Ex. 6 (Toner 24) | Comp. Ex. 7 (Toner 25) | Comp. Ex. 8 (Toner 26) | Comp. Ex. 9 (Toner 27) | Comp. Ex. 10 (Toner 28) |
|---|---|---|---|---|---|---|---|
| Oil phase component | Amorphous Polyester Resin A | A-1 | 50 | – | – | – | – |
| | | A-2 | – | – | – | – | 50 |
| | | A-3 | – | 150 | 150 | – | – |
| | Amorphous Polyester Resin B | B-1 | – | 750 | – | – | – |
| | | B-2 | – | – | – | – | 750 |
| | | B-3 | – | – | 750 | – | – |
| | | B-4 | 750 | – | – | 750 | – |
| | Crystalline Polyester Resin C | C-1 | – | – | – | – | – |
| | | C-2 | – | – | – | 50 | 50 |
| | | C-3 | 50 | – | – | – | – |
| | | C-4 | – | 50 | 50 | – | – |
| | Wax Dispersion Liquid | 1 | 50 | – | – | – | 50 |
| | | 2 | – | 50 | 50 | 50 | – |
| | Master Batch | 1 | 50 | 50 | 50 | 50 | 50 |
| Coagulation formation | Coagulating salt | magnesium chloride | – | 100 | 100 | 100 | – |
| | | sodium sulfate | 200 | – | – | – | 200 |
| | | calcium chloride | – | – | – | – | – |
| | | aluminum sulfate | – | – | – | – | – |
| | Amorphous Polyester Resin B | B-1 | – | – | – | – | – |
| | | B-2 | – | – | – | – | – |
| | | B-3 | 50 | – | – | – | – |
| | | B-4 | – | – | – | 400 | – |

Each of the toners obtained in Examples 1 to 18 and Comparative Examples 1 to 10 was subjected to measurement of abundance of the crystalline polyester resin C in a region from the outermost surface of the toner particle to a depth of 150 nm from the outermost surface (may be referred to as a "proportion of the crystalline polyester near the surface"), a radiocarbon $^{14}$C content indicating a biomass degree, a THF-insoluble component (gel component), and an average major axis and average aspect ratio of grains of the crystalline polyester resin C in the following manner. The results are presented in Tables 8-1-1 to 8-2-2 below.

<Measurement of abundance of crystalline resin in region from outmost surface of resin particle to depth of 150 nm in depth>

Abundance of the crystalline polyester resin C in a region from an outermost surface of the toner particle (the resin particle) of each of the toners to a depth of 150 nm from the outermost surface (a proportion of the crystalline polyester near the surface) was measured in the following manner.

Each of the toners was embedded in an epoxy resin (DEVCON S-31, available from ITW PP&F JAPAN Co., LTD.), and the epoxy resin was sliced into a cut piece having a thickness of 60 nm by an ultrasonic ultramicrotome (Leica EM UC7, available from Leica Microsystems). The cut piece was dyed with ruthenium ($RuO_4$ dyeing) by means of a vacuum electron staining apparatus (available from Filgen Inc.). Then, cross-sections of the toner particles were observed under a transmission electron microscope (H-7500, available from Hitachi High-Tech Corporation) at acceleration voltage of 120 kV. For the observation, 50 toner particles were randomly selected to be observed from the toner particles having the diameters within the range of the volume average particle diameter of the toner $\pm$ 2.0 $\mu$m.

For each toner, the abundance of the crystalline resin in the region of the toner particle from the outermost surface and 150 nm in depth from the outermost surface was calculated using image processing software (Image-J) in the following manner.

(1) The peripheries of all of the grains of the crystalline resin present on the cross-section of one toner particle were traced with a "Freehand-sections" function, and an area surrounded by each periphery was measured with an "Analyze" function. The sum of all of the measured areas was determined as "Area A."
(2) The periphery of the toner particle on the cross-section was traced with the "Freehand-sections" function to create "Region 1."
(3) A center of gravity of the "Region 1" was determined by the "Analyze" function.
(4) Using the originally developed plug-in, 100 points were plotted in a manner that each of the points was located 150 nm away from each of coordinates towards the center of gravity of the resin particle determined in (3). The coordinates were assigned by dividing the periphery of the "Region 1," i.e., the line drawn by tracing the periphery of the toner particle with the Freehand-sections" functions in (2), into 100. The plotted 100 points were connected with a straight line to create "Region 2."
(5) The "Region 2" created in (4) was subtracted from the "Region 1" created in (2) to create "Region 3."
(6) Peripheries of the grains of the crystalline resin present in the "Region 3" created in (5) were traced with the "Freehand-sections" function, and an area surrounded by each periphery was measured with the "Analyze" function. The sum of all of the measured areas was determined as "Area B."
(7) The value of "Area A" calculated in (1) and the value of "Area B" calculated in (6) were inserted in Formula (2) below to calculate the abundance of the crystalline polyester resin C in the region of the one toner particle between the outermost surface of the toner particle and 150 nm in depth from the outermost surface.

```
[Formula (2)]
```

```
Abundance of crystalline polyester resin C in region of one resin
particle between outermost surface and 150 nm in depth [%] = Area
A/Area B × 100
```

(8) The processes of (1) to (7) above were performed on 50 toner particles, and an average of the values obtained from the 50 toner particles was calculated as the abundance of the crystalline polyester in the region from the outermost surface of the toner particle to a depth of 150 nm from the outermost surface. The calculated average was determined as the abundance of the crystalline polyester resin in the region from the outermost surface to a depth of 150 nm from the outermost surface for each of the toners.

<Measurement of radiocarbon $^{14}$C content>

A radiocarbon $^{14}$C content of each toner was measured by radiocarbon dating.
The toner was combusted, and carbon dioxide ($CO_2$) of the combusted toner was reduced to obtain C (graphite). A $^{14}$C content of the C (graphite) was measured by means of an accelerator mass spectrometer (AMS) (available from Beta Analytic).
As a standard, an oxalic acid standard (HOxII, available from NIST) was used.

<Measurement of THF-insoluble component (gel component)>

A THF-insoluble component of each toner was measured in the following manner.
To 100 parts of tetrahydrofuran (THF), 1 part of the toner was added. After refluxing the resulting mixture for 6 hours, the mixture was subjected to centrifuge separation by means of a centrifuge to precipitate an insoluble-component to separate the mixture into the insoluble component and a supernatant. The insoluble component was dried for 20 hours at 40°C. A mass of the dried insoluble component was divided by a mass of the toner initially used, followed by multiplying by 100 to calculate an amount of the THF-insoluble component.

<Measurements of average major axis and average aspect ratio of grains of crystalline polyester>

The average major axis and average aspect ratio of the grains of the crystalline polyester resin C in the toner particles (the resin particles) of each of the toners were measured in the following manner.
Each of the toners was embedded in an epoxy resin (DEVCON S-31, available from ITW PP&F JAPAN Co.,

LTD.), and the epoxy resin was sliced into a cut piece having a thickness of 60 nm by an ultrasonic ultramicrotome (Leica EM UC7, available from Leica Microsystems). The cut piece was dyed with ruthenium ($RuO_4$ dyeing) by means of a vacuum electron staining apparatus (available from Filgen Inc.). Then, cross-sections of the toner particles were observed under a transmission electron microscope (H-7500, available from Hitachi High-Tech Corporation) at acceleration voltage of 120 kV. For the observation, 50 toner particles were randomly selected to be observed from the toner particles having the diameters within the range of the volume average particle diameter of the toner $\pm$ 2.0 $\mu$m.

An average major axis and average aspect ratio of grains of the crystalline polyester resin C in each of the toners were calculated using image processing software (Image-Pro Plus 5.1) in the following manner.

(1) A cross-sectional image of the toner particles captured in the above-described method was used. In order to extract toner particles to be analyzed, first, the toner particle sections were selected to separate the toner particles from the background.

(2) A "Count/size" icon was selected from a "Measurement" menu on Image-Pro Plus 5.1. On the window of "Count/size," a "Measuring items" icon was selected from a "Measurement" tab. From the "Measurement items," "Diameter (min)" and "Diameter (max)" were selected. With "Selection of brightness range," a brightness range was adjusted so that only the grains of the crystalline polyester resin C of the resin particle selected as an analysis target in (1) were to be selected. Then, a "Count" ion was clicked to display the measurement results.

(3) "Diameter (max)" obtained in (2) was determined as a major axis of a grain of the crystalline polyester resin C. Moreover, an aspect ratio (major axis/minor axis) of the grain of the crystalline polyester resin C was determined with determining "Diameter (min)" obtained in (2) as a minor axis, and "Diameter (max)" obtained in (2) as a major axis.

(4) Among the data of the major axes and aspect ratios of the grains of the crystalline polyester resin C in one toner particle obtained in (1) to (3), an average of the 10 values was calculated. The 10 values were selected in order from the value having the largest "Diameter (max)."

(5) The processes of (1) to (4) are performed on 50 toner particles to calculate an average major axis and average aspect ratio of the grains of the crystalline polyester resin C of the 50 toner particles. The obtained values were determined as the average major axis and average aspect ratio of the grains of the crystalline polyester resin C in each of the toner particles.

Table 8-1-1

| | Ratio of crystalline polyester near surface (%) | Radiocarbon $^{14}C$ (pMC) | THF insoluble component (%) | Average major axis of grains of crystalline polyester C (nm) | Average aspect ratio of grains of crystalline polyester C |
|---|---|---|---|---|---|
| Ex. 1 (Toner 1) | 3.9 | 35.8 | 50 | 410 | 4.6 |
| Ex. 2 (Toner 2) | 3.8 | 33.5 | 29 | 400 | 4.8 |
| Ex. 3 (Toner 3) | 3.9 | 18.7 | 48 | 390 | 5.2 |
| Ex. 4 (Toner 4) | 3.7 | 42.7 | 8 | 490 | 6.0 |
| Ex. 5 (Toner 5) | 3.5 | 42.3 | 35 | 450 | 6.5 |
| Ex. 6 (Toner 6) | 1.6 | 38.7 | 71 | 510 | 10.1 |

EP 4 230 678 A1

(continued)

| | Ratio of crystalline polyester near surface (%) | Radiocarbon $^{14}$C (pMC) | THF insoluble component (%) | Average major axis of grains of crystalline polyester C (nm) | Average aspect ratio of grains of crystalline polyester C |
|---|---|---|---|---|---|
| Ex. 7 (Toner 7) | 3.3 | 47.7 | 5 | 450 | 7.3 |
| Ex. 8 (Toner 8) | 3.3 | 36.5 | 7 | 520 | 11.2 |
| Ex. 9 (Toner 9) | 3.8 | 49.9 | 52 | 320 | 2.5 |
| Ex. 10 (Toner 10) | 3.3 | 30.7 | 8 | 430 | 8.4 |
| Ex. 11 (Toner 11) | 3.9 | 28.8 | 28 | 330 | 2.4 |
| Ex. 12 (Toner 12) | 4.0 | 26.6 | 47 | 330 | 1.9 |
| Ex. 13 (Toner 13) | 3.5 | 18.8 | 53 | 550 | 11.2 |
| Ex. 14 (Toner 14) | 1.0 | 19.1 | 51 | 450 | 5.3 |
| Ex. 15 (Toner 15) | 1.3 | 19.7 | 5 | 460 | 4.5 |
| Ex. 16 (Toner 16) | 1.2 | 19.8 | 8 | 530 | 12.0 |
| Ex. 17 (Toner 17) | 1.1 | 19.2 | 9 | 490 | 5.4 |
| Ex. 18 (Toner 18) | 1.5 | 13.5 | 7 | 550 | 11.2 |

Table 8-1-2

| | Volume average particle diameter D4 ($\mu$m) | D4/Dn | Component of 2 $\mu$m or less (number %) |
|---|---|---|---|
| Ex. 1 (Toner 1) | 5.5 | 1.12 | 5 |
| Ex. 2 (Toner 2) | 5.8 | 1.13 | 6 |
| Ex. 3 (Toner 3) | 5.3 | 1.14 | 5 |
| Ex. 4 (Toner 4) | 5.6 | 1.15 | 4 |

(continued)

|  | Volume average particle diameter D4 ($\mu$m) | D4/Dn | Component of 2 $\mu$m or less (number %) |
|---|---|---|---|
| Ex. 5 (Toner 5) | 6.5 | 1.11 | 2 |
| Ex. 6 (Toner 6) | 5.4 | 1.13 | 8 |
| Ex. 7 (Toner 7) | 5.7 | 1.13 | 8 |
| Ex. 8 (Toner 8) | 5.1 | 1.12 | 2 |
| Ex. 9 (Toner 9) | 6.1 | 1.15 | 9 |
| Ex. 10 (Toner 10) | 4.4 | 1.14 | 4 |
| Ex. 11 (Toner 11) | 5.0 | 1.13 | 4 |
| Ex. 12 (Toner 12) | 4.2 | 1.12 | 3 |
| Ex. 13 (Toner 13) | 5.9 | 1.15 | 9 |
| Ex. 14 (Toner 14) | 5.8 | 1.12 | 3 |
| Ex. 15 (Toner 15) | 6.4 | 1.11 | 2 |
| Ex. 16 (Toner 16) | 5.4 | 1.15 | 8 |
| Ex. 17 (Toner 17) | 6.8 | 1.14 | 5 |
| Ex. 18 (Toner 18) | 5.3 | 1.12 | 8 |

Table 8-2-1

|  | Ratio of crystalline polyester near surface (%) | Radiocarbon $^{14}$C (pMC) | THF insoluble component (%) | Average major axis of grains of crystalline polyester C (nm) | Average aspect ratio of grains of crystalline polyester C |
|---|---|---|---|---|---|
| Comp. Ex. 1 (Toner 19) | 5.6 | 42.6 | 56 | 470 | 4.3 |
| Comp. Ex. 2 (Toner 20) | 4.4 | 4.7 | 9 | 480 | 4.7 |
| Comp. Ex. 3 (Toner 21) | 1.3 | 2.3 | 52 | 460 | 4.2 |
| Comp. Ex. 4 (Toner 22) | 5.7 | 5.1 | 51 | 540 | 10.9 |
| Comp. Ex. 5 (Toner 23) | 4.3 | 3.1 | 7 | 470 | 4.4 |
| Comp. Ex. 6 (Toner 24) | 4.4 | 13.6 | 8 | 520 | 9.9 |
| Comp. Ex. 7 (Toner 25) | 5.6 | 30.9 | 50 | 460 | 4.4 |

(continued)

|  | Ratio of crystalline polyester near surface (%) | Radiocarbon $^{14}$C (pMC) | THF insoluble component (%) | Average major axis of grains of crystalline polyester C (nm) | Average aspect ratio of grains of crystalline polyester C |
|---|---|---|---|---|---|
| Comp. Ex. 8 (Toner 26) | 5.5 | 23.1 | 51 | 480 | 4.5 |
| Comp. Ex. 9 (Toner 27) | 1.0 | 2.8 | 27 | 320 | 2.1 |
| Comp. Ex. 10 (Toner 28) | 5.6 | 27.2 | 5 | 330 | 2.4 |

Table 8-2-2

|  | Volume average particle diameter D4 ($\mu$m) | D4/Dn | Component of 2 $\mu$m or less (number %) |
|---|---|---|---|
| Comp. Ex. 1 (Toner 19) | 5.0 | 1.13 | 9 |
| Comp. Ex. 2 (Toner 20) | 4.9 | 1.14 | 9 |
| Comp. Ex. 3 (Toner 21) | 6.1 | 1.12 | 7 |
| Comp. Ex. 4 (Toner 22) | 4.7 | 1.14 | 8 |
| Comp. Ex. 5 (Toner 23) | 5.8 | 1.15 | 3 |
| Comp. Ex. 6 (Toner 24) | 5.6 | 1.10 | 3 |
| Comp. Ex. 7 (Toner 25) | 5.5 | 1.11 | 3 |
| Comp. Ex. 8 (Toner 26) | 4.9 | 1.12 | 4 |
| Comp. Ex. 9 (Toner 27) | 4.8 | 1.13 | 4 |
| Comp. Ex. 10 (Toner 28) | 5.0 | 1.13 | 3 |

Carbon neutrality, filming resistance, and low-temperature fixability of each of the toners obtained in Examples 1 to 18 and Comparative Examples 1 to 10 were evaluated in the following manner. The results are presented in Tables 9-1 and 9-2.

<Evaluation methods>

<<Carbon neutrality>>

"Carbon neutrality" of the toner was evaluated based on the radiocarbon $^{14}$C content of the toner according to the following evaluation criteria.

-Evaluation criteria of "carbon neutrality"-

Excellent: 35.0 pMC or greater

Good: 20.0 pMC or greater and less than 35.0 pMC

Fair: 5.4 pMC or greater and less than 20.0 pMC

Not good: less than 5.4 pMC

«Filming resistance»

A carrier used for a printer (imagio MP C5503, available from Ricoh Company Limited) and each of the toners obtained in Examples 1 to 18 and Comparative Examples 1 to 10 were mixed to prepare a developer so that a concentration of the toner was 5% by mass.
After charging the unit of the printer (imagio MP C5503, available from Ricoh Company Limited) with the developer, exposing, developing, and transferring were performed to output paper (Type6200, A4-size, available from Ricoh Company Limited) on which a solid image was formed with a toner deposition amount of 0.4 mg/cm$^2$. In this manner, a continuous printing test was performed on 2,000 sheets of the paper. Thereafter, a state of toner contamination of the latent image bearer (i.e., the photoconductor) and toner contamination of the charging device were visually observed, and "filming resistance" was evaluated according to the following evaluation criteria.

-Evaluation criteria of "filming resistance"-

Excellent: There was no contamination of the latent image bearer nor filming on the charging device.

Good: Slight contamination of the latent image bearer and slight filming on the charging device were observed.
Fair: Slight contamination of the latent image bearer and slight filming on the charging device were observed, and image defects occurred as time passed.
Not good: Slight contamination of the latent image bearer and slight filming on the charging device were observed, and image defects occurred at the early stage of the test.

<<Low-temperature fixability>>

A carrier used for a printer (imagio MP C5503, available from Ricoh Company Limited) and each of the toners obtained in Examples 1 to 18 and Comparative Examples 1 to 10 were mixed to prepare a developer so that a concentration of the toner was 5% by mass.
After charging the unit of the printer (imagio MP C5503, available from Ricoh Company Limited) with the developer, a rectangular solid image in the size of 2 cm × 15 cm was formed on a PPC sheet (Type 6000 <70W>, A4, Long grain, available from Ricoh Company Limited) in a manner that a toner deposition amount was to be 0.40 mg/cm$^2$. During the printing, a surface temperature of a fixing roller was varied to observe whether cold offset would occur, and a cold-offset temperature (i.e., the minimum fixing temperature) was determined. The cold offset is a phenomenon where a developed solid image is fixed in a position other than a predetermined position. "Low-temperature fixability" was evaluated according to the following evaluation criteria.

-Evaluation criteria of "low-temperature fixability"-

Excellent: The cold-offset temperature was lower than 110°C.

Good: The cold-offset temperature was 110°C or higher and lower than 120°C.

Fair: The cold offset temperature was 120°C or higher and lower than 130°C.

Not good: The cold offset temperature was 130°C or higher.

Table 9-1

|  | Carbon neutrality | Filming resistance | Low-temperature fixability |
|---|---|---|---|
| Ex. 1 (Toner 1) | Excellent | Excellent | Excellent |
| Ex. 2 (Toner 2) | Good | Good | Fair |
| Ex. 3 (Toner 3) | Fair | Excellent | Excellent |
| Ex. 4 (Toner 4) | Excellent | Good | Excellent |
| Ex. 5 (Toner 5) | Excellent | Good | Excellent |
| Ex. 6 (Toner 6) | Excellent | Excellent | Good |
| Ex. 7 (Toner 7) | Excellent | Good | Excellent |
| Ex. 8 (Toner 8) | Excellent | Good | Good |
| Ex. 9 (Toner 9) | Excellent | Excellent | Good |
| Ex. 10 (Toner 10) | Good | Good | Good |
| Ex. 11 (Toner 11) | Good | Good | Good |
| Ex. 12 (Toner 12) | Good | Excellent | Good |
| Ex. 13 (Toner 13) | Fair | Fair | Good |
| Ex. 14 (Toner 14) | Fair | Excellent | Good |
| Ex. 15 (Toner 15) | Fair | Good | Good |
| Ex. 16 (Toner 16) | Fair | Good | Good |
| Ex. 17 (Toner 17) | Fair | Good | Fair |
| Ex. 18 (Toner 18) | Fair | Good | Good |

Table 9-2

|  | Carbon neutrality | Filming resistance | Low-temperature fixability |
|---|---|---|---|
| Comp. Ex. 1 (Toner 19) | Excellent | Fair | Excellent |
| Comp. Ex. 2 (Toner 20) | Not good | Not good | Excellent |
| Comp. Ex. 3 (Toner 21) | Not good | Excellent | Good |
| Comp. Ex. 4 (Toner 22) | Not good | Fair | Excellent |
| Comp. Ex. 5 (Toner 23) | Not good | Fair | Good |
| Comp. Ex. 6 (Toner 24) | Fair | Not good | Not good |
| Comp. Ex. 7 (Toner 25) | Good | Not good | Excellent |
| Comp. Ex. 8 (Toner 26) | Good | Not good | Good |
| Comp. Ex. 9 (Toner 27) | Not good | Good | Not good |
| Comp. Ex. 10 (Toner 28) | Good | Not good | Fair |

For example, embodiments of the present disclosure are as follows.

<1> Resin particles, each including:

a binder resin, the binder resin including an amorphous polyester resin and a crystalline resin, wherein the amorphous polyester resin includes alcohol monomers as one of constituent components of the amorphous polyester resin, the alcohol monomers including propylene glycol,

wherein abundance of the crystalline resin in a region from an outermost surface of each of the resin particles to a depth of 150 nm from the outermost surface is 4% or less relative to an amount of the crystalline resin in an entire region of each of the resin particles, and

wherein a radiocarbon $^{14}C$ content of the resin particles is 5.4 pMC or greater.

<2> The resin particles according to <1>,
wherein the radiocarbon $^{14}C$ content of the resin particles is 20.0 pMC or greater.
<3> The resin particles according to <1> or <2>, wherein the radiocarbon $^{14}C$ content of the resin particles is 35.0 pMC or greater.
<4> The resin particles according to any one of <1> to <3>,
wherein the resin particles include a tetrahydrofuran-insoluble component in an amount of 20% by mass or greater.
<5> The resin particles according to any one of <1> to <4>,
wherein the amorphous polyester resin includes an acid component as another one of the constituent components of the amorphous polyester resin, the acid component including succinic acid, or sebacic acid, or a combination of succinic acid and sebacic acid.
<6> The resin particles according to any one of <1> to <5>,

wherein the crystalline resin is present as grains in each of the resin particles,
an average major axis of the grains of the crystalline resin is 500 nm or less, and
an average aspect ratio (major axis/minor axis) of the grains of the crystalline resin is 4.0 or greater, where the average aspect ratio is a ratio of the average major axis of the grains of the crystalline resin to an average minor axis of the grains of the crystalline resin.

<7> The resin particles according to <6>,
wherein the crystalline resin includes an acid component as one of constituent components of the crystalline resin, the acid component including sebacic acid.
<8> Toner resin particles including:
the resin particles according to any one of <1> to <7>.
<9> A toner including:
the toner resin particles according to <8>.
<10> The toner according to <9>, further including one or more external additives.
<11> A method of producing resin particles, the method including:

a) dissolving or dispersing at least a crystalline resin and an amorphous polyester resin in an organic solvent to produce an oil phase;
b) adding an aqueous medium to the oil phase to cause phase inversion from a water-in-oil dispersion liquid to an oil-in-water dispersion liquid, in which particles of the oil phase are dispersed in the aqueous medium; and
c) coagulating the particles in the oil-in-water dispersion liquid to form cohesive particles, followed by adding an amorphous polyester resin to the cohesive particles to form the resin particles according to any one of <1> to <7>,

wherein the amorphous polyester resin includes alcohol monomers as one of constituent components of the amorphous polyester resin, the alcohol monomers including propylene glycol,
wherein abundance of the crystalline resin in a region from an outermost surface of each of the resin particles to a depth of 150 nm from the outermost surface is 4% or less relative to an amount of the crystalline resin in an entire region of each of the resin particles, and
wherein a radiocarbon $^{14}C$ content of the resin particles is 5.4 pMC or greater.

<12> A method of producing a toner, the method including:
adding one or more external additives to the toner resin particles according to <8>.
<13> A developer including:

the toner according to <9> or <10>; and
a carrier.

<14> A toner storage unit including:

the toner according to <9> or <10>; and

a unit in which the toner is stored.

<15> An image forming apparatus, including:

an electrostatic latent image bearer;
an electrostatic latent image forming unit configured to form an electrostatic latent image on the electrostatic latent image bearer; and
a developing unit storing the toner according to <9> or <10> and configured to develop the electrostatic latent image formed on the electrostatic latent image bearer with the toner to form a visible image.

<16> An image forming method including:

forming an electrostatic latent image on an electrostatic latent image bearer; and
developing the electrostatic latent image formed on the electrostatic latent image bearer with the toner according to <9> or <10> to form a visible image.

The resin particles according to any one of <1> to <7>, the toner resin particles according to <8>, the toner according to <9> or <10>, the method of producing resin particles according to <11>, the method of producing a toner according to <12>, the developer according to <13>, the toner storage unit according to <14>, the image forming apparatus according to <15>, and the image forming method according to <16> can solve the various above-described problems existing in the art and can achieve the object of the present disclosure.

**Claims**

1.  Resin particles, each comprising:

a binder resin, the binder resin including an amorphous polyester resin and a crystalline resin,
wherein the amorphous polyester resin includes alcohol monomers as one of constituent components of the amorphous polyester resin, the alcohol monomers including propylene glycol,
wherein abundance of the crystalline resin in a region from an outermost surface of each of the resin particles to a depth of 150 nm from the outermost surface is 4% or less relative to an amount of the crystalline resin in an entire region of each of the resin particles, and
wherein a radiocarbon $^{14}$C content of the resin particles is 5.4 pMC or greater.

2.  The resin particles according to claim 1,
wherein the radiocarbon $^{14}$C content of the resin particles is 20.0 pMC or greater.

3.  The resin particles according to claim 1 or 2,
wherein the radiocarbon $^{14}$C content of the resin particles is 35.0 pMC or greater.

4.  The resin particles according to any one of claims 1 to 3,
wherein the resin particles include a tetrahydrofuran-insoluble component in an amount of 20% by mass or greater.

5.  The resin particles according to any one of claims 1 to 4,
wherein the amorphous polyester resin includes an acid component as another one of the constituent components of the amorphous polyester resin, the acid component including succinic acid, or sebacic acid, or a combination of succinic acid and sebacic acid.

6.  The resin particles according to any one of claims 1 to 5,

wherein the crystalline resin is present as grains in each of the resin particles,
an average major axis of the grains of the crystalline resin is 500 nm or less, and
an average aspect ratio (major axis/minor axis) of the grains of the crystalline resin is 4.0 or greater, where the average aspect ratio is a ratio of the average major axis of the grains of the crystalline resin to an average minor axis of the grains of the crystalline resin.

7.  The resin particles according to claim 6,

wherein the crystalline resin includes an acid component as one of constituent components of the crystalline resin, the acid component including sebacic acid.

8. A toner comprising:

    the resin particles according to any one of claims 1 to 7; and
    one or more external additives.

9. A method of producing resin particles, the method comprising:

    a) dissolving or dispersing at least a crystalline resin and an amorphous polyester resin in an organic solvent to produce an oil phase;
    b) adding an aqueous medium to the oil phase to cause phase inversion from a water-in-oil dispersion liquid to an oil-in-water dispersion liquid, in which particles of the oil phase are dispersed in the aqueous medium; and
    c) coagulating the particles in the oil-in-water dispersion liquid to form cohesive particles, followed by adding an amorphous polyester resin to the cohesive particles to form the resin particles according to any one of claims 1 to 7,

        wherein the amorphous polyester resin includes alcohol monomers as one of constituent components of the amorphous polyester resin, the alcohol monomers including propylene glycol,
        wherein abundance of the crystalline resin in a region from an outermost surface of each of the resin particles to a depth of 150 nm from the outermost surface is 4% or less relative to an amount of the crystalline resin in an entire region of each of the resin particles, and
        wherein a radiocarbon $^{14}$C content of the resin particles is 5.4 pMC or greater.

10. A method of producing a toner, the method comprising:
    adding one or more external additives to the resin particles according to any one of claims 1 to 7.

11. A developer comprising:

    the toner according to claim 8; and
    a carrier.

12. A toner storage unit comprising:

    the toner according to claim 8; and
    a unit in which the toner is stored.

13. An image forming apparatus, comprising:

    an electrostatic latent image bearer;
    an electrostatic latent image forming unit configured to form an electrostatic latent image on the electrostatic latent image bearer; and
    a developing unit storing the toner according to claim 8 and configured to develop the electrostatic latent image formed on the electrostatic latent image bearer with the toner to form a visible image.

# FIG.1

# FIG.2

# FIG.3

# FIG.4

FIG.5

# FIG.6

# EP 4 230 678 A1

Europäisches Patentamt
European Patent Office
Office européen des brevets

## EUROPEAN SEARCH REPORT

Application Number

EP 23 15 5733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/183896 A1 (SACRIPANTE GUERINO G [CA] ET AL) 19 July 2012 (2012-07-19) | 1-8, 10-13 | INV. C08G63/20 C08G18/42 C08G18/83 C08G63/668 |
| A | * paragraph [0019] – paragraph [0074]; examples II, III, VIII, IX * | 9 | |
| X | US 2016/266507 A1 (WATANABE JUNICHI [JP] ET AL) 15 September 2016 (2016-09-15) | 1-4,6-8, 10-13 | C08G63/685 C08G63/91 C08J3/07 |
| A | * paragraph [0092] – paragraph [0392]; claims 1-7; figures 1-5; example 7; tables 1-6 * | 5,9 | G03G9/087 G03G9/093 C08G63/16 C08K5/101 C08J3/22 C08L67/00 C08J3/12 C08J3/16 |

TECHNICAL FIELDS SEARCHED (IPC)

C08G
C08J
G03G
C08K
C08L

The present search report has been drawn up for all claims

| Place of search | Date of completion of the search | Examiner |
|---|---|---|
| The Hague | 7 July 2023 | Enescu, Cristina |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 15 5733

This annex lists the patent family members relating to the patent documents cited in  the above-mentioned European search report.
The members are as contained in the European Patent Office EDP file on
The European Patent Office is in no way liable for these particulars which are merely given for the purpose of information.

07-07-2023

| Patent document cited in search report | | Publication date | Patent family member(s) | | Publication date |
|---|---|---|---|---|---|
| US 2012183896 | A1 | 19-07-2012 | BR 102012001073 | A2 | 07-01-2014 |
| | | | CA 2763566 | A1 | 17-07-2012 |
| | | | JP 5885509 | B2 | 15-03-2016 |
| | | | JP 2012149254 | A | 09-08-2012 |
| | | | US 2012183896 | A1 | 19-07-2012 |
| US 2016266507 | A1 | 15-09-2016 | BR 102016005258 | A2 | 14-02-2017 |
| | | | JP 6497136 | B2 | 10-04-2019 |
| | | | JP 2016170188 | A | 23-09-2016 |
| | | | US 2016266507 | A1 | 15-09-2016 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015102842 A
- JP 4050051 B